# FASCICULE DE BREVET EUROPEEN

(11) **EP 1 692 210 B1**
(45) Date de publication et mention de la délivrance du brevet: **21.12.2016**
(21) Numéro de dépôt: 04805517.2
(22) Date de dépôt: 23.11.2004
(51) Int. Cl.: C08G 83/00

(54) **NOUVEAUX DENDRIMERES A TERMINAISONS BISPHOSPHONIQUES ET DERIVES, LEUR PROCEDE DE PREPARATION ET LEUR UTILISATION**
NEUE DENDRITISCHE POLYMERE MIT BIPHOSPHONSÄURE-ENDGRUPPEN, DERIVATE DAVON, HERSTELLUNGSVERFAHREN DAFÜR UND VERWENDUNG DAVON
NOVEL DENDRITIC POLYMERS HAVING BIPHOSPHONIC TERMINATIONS, DERIVATIVES THEREOF, METHOD FOR PREPARING THEM, AND THEIR USE

(30) Priorité: 24.11.2003 FR 0313752
(43) Date de publication de la demande: 23.08.2006
(73) Titulaire: Rhodia UK Limited, Watford, Hertfordshire WD24 4QP (GB); CENTRE NATIONAL DE LA RECHERCHE SCIENTIFIQUE -CNRS-, 75016 Paris (FR)
(72) Inventeur: CAMINADE, Anne-Marie, F-31400 TOULOUSE (FR); MAJORAL, Jean-Pierre, F-31520 RAMONVILLE ST AGNE (FR); GRIFFE, Laurent, F-11000 CARCASSONNE (FR); TURRIN, Cédric, 31400 TOULOUSE (FR); METIVIER, Pascal, 75019 Paris (FR)
(74) Mandataire: Lavoix
(86) Numéro de dépôt international: PCT/FR2004/002988
(87) Numéro de publication internationale: WO 2005/052031

(56) Documents cités:
- WO-A-00/64975
- FR-A- 2 734 268
- US-A- 4 783 500
- US-A- 4 871 779
- PREVOTE D: "Phosphate-, phosphite-, ylide-, and phosphonate-terminated dendrimers" JOURNAL OF ORGANIC CHEMISTRY, AMERICAN CHEMICAL SOCIETY. EASTON, US, vol. 62, no. 14, 11 juillet 1997 (1997-07-11), pages 4834-4841, XP002144559 ISSN: 0022-3263 cité dans la demande

## Description

Les dendrimères sont des macromolécules constituées de monomères qui s'associent selon un processus arborescent autour d'un coeur central plurifonctionnel.

Les dendrimères, appelées aussi « molécules cascade », sont des polymères fonctionnels hautement ramifiés de structure définie. Ces macromolécules sont effectivement des polymères puisqu'elles sont basées sur l'association d'unités répétitives. Cependant, les dendrimères diffèrent fondamentalement des polymères classiques dans la mesure où ils ont des propriétés propres dues à leur construction en arborescence. Le poids moléculaire et la forme des dendrimères peuvent être précisément contrôlés et toutes les fonctions sont situées à la terminaison des arborescences, formant une surface, ce qui les rend facilement accessibles.

Les dendrimères sont construits étape par étape, par la répétition d'une séquence de réaction permettant la multiplication de chaque unité répétitive et des fonctions terminales. Chaque séquence de réaction forme ce qui est appelé une « nouvelle génération ». La construction arborescente s'effectue par la répétition d'une séquence de réaction qui permet l'obtention à la fin de chaque cycle réactionnel d'une nouvelle génération et d'un nombre croissant de branches identiques. Après quelques générations, le dendrimère prend généralement une forme globulaire hautement ramifiée et plurifonctionnalisée grâce aux nombreuses fonctions terminales présentes en périphérie.

De tels polymères ont notamment été décrits par Launay et al., Angew. Chem. lnt. Ed. Engl., 1994, 33, 15/16, 1589-1592, ou encore Launay et al., Journal of Organometallic Chemistry, 1997, 529, 51-58.

Le traitement des surfaces, par exemple pour leur protection met en oeuvre le phénomène d'adhésion. Celui-ci nécessite souvent la présence de groupes donneurs et accepteurs de liaisons hydrogène, sur la surface et/ou l'agent de protection. Il est donc désirable de mettre à disposition des agents présentant une forte potentialité de liaison hydrogène en tant qu'agent de traitement de surface.

Du fait de leur structure, les dendrimères présentent une forte densité de terminaisons et donc une forte densité fonctionnelle à leur périphérie. Il a donc été envisagé de préparer des dendrimères fonctionnels permettant la création de liaisons hydrogène dans le but de les utiliser en tant qu'agent de traitement de surface.

La fonction acide phosphonique ou ester méthylique correspondant, et à fortiori les fonctions bis correspondantes sont particulièrement propices à la formation de liaisons hydrogène. Il est donc souhaitable de préparer des dendrimères présentant des terminaisons à fonction acide bisphosphonique ou dérivés.

Des dendrimères à diverses fonctions phosphorées (phosphine, phosphinate, phosphate, phosphonate, phosphorane, spirophosphorane) ont notamment été décrits dans les articles cités ci-dessus ou la demande française FR 95 06 281.

Toutefois, aucun dendrimère présentant des terminaisons acide bisphosphonique libres, ou éventuellement sous forme de sels ou d'esters correspondants n'est décrit. Il a en effet été jusqu'à ce jour impossible de préparer de telles fonctionnalisations sur les dendrimères. Plus précisément, il avait été impossible de préparer des dendrimères présentant la fonction acide bisphosphonique. Ceci a maintenant été rendu possible à partir de l'ester méthylique correspondant.

Les inventeurs ont maintenant découvert une réaction permettant d'accéder à ce type de fonctionnalisation terminale de type bisester ou acide bisphosphonique sur les dendrimères.

Selon un premier objet, la présente invention concerne donc des dendrimères présentant deux fonctions terminales -PO(OX)₂, où X représente un radical -Alkyle ou -Aryle, ou -PO(OH)₂ ou les sels correspondants, à la terminaison de chaque arborescence.

Selon un second objet, la présente invention concerne également le procédé de préparation de tels dendrimères.

Selon un autre objet, la présente invention concerne également l'utilisation des dendrimères selon l'invention pour le traitement de surfaces.

La présente invention concerne donc des dendrimères de génération n comprenant :
- un noyau central § de valence m ;
- éventuellement des chaînes de génération en arborescence autour du noyau ;
- une chaîne intermédiaire à l'extrémité de chaque chaîne de génération éventuellement présente ou à l'extrémité de chaque liaison autour du noyau, le cas échéant ; et
- un groupe terminal à l'extrémité de chaque chaîne intermédiaire, caractérisés en ce que ledit groupe terminal est représenté par la formule:

   -(A1)<[A2-P(=O)(OX)₂]₂ (T)

   où
   A1 représente le radical -CH< ou -N<;
   chacun des A2, identiques ou différents représentent indépendamment une liaison simple ou une chaîne hydrocarbonée de 1 à 6 chaînons, linéaire ou ramifiée, chacun desdits chaînons pouvant éventuellement être choisi parmi un hétéroatome, de préférence l'azote, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle;
   X représente un radical -Alkyle, -Aryle, -H, ou /M⁺ où M⁺ est un cation,
   m représente un entier supérieur ou égal à 1;
   n représente un entier compris entre 0 et 12;
   < représente deux liaisons situées sur A1.

Il est également décrit des dendrimères de génération n comprenant :
- un noyau central § de valence m ;
- éventuellement des chaînes de génération en arborescence autour du noyau ;
- une chaîne intermédiaire à l'extrémité de chaque chaîne de génération éventuellement présente ou à l'extrémité de chaque liaison autour du noyau, le cas échéant ; et
- un groupe terminal à l'extrémité de chaque chaîne intermédiaire, caractérisés en ce que ledit groupe terminal est représenté par la formule:

   -(A1)<[A2-P(=O)(OX)₂]₂ (T)

   où
- A1< représente le radical -CR< ou -Hétéroatome< ;
   chacun des A2, identiques ou différents représentent indépendamment une liaison simple ou une chaîne hydrocarbonée de 1 à 6 chaînons, linéaire ou ramifiée, chacun desdits chaînons pouvant éventuellement être choisi parmi un hétéroatome, de préférence l'azote, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle;
   X représente un radical -Alkyle, -Aryle, -H, ou /M⁺ où M⁺ est un cation, m représente un entier supérieur ou égal à 1 ;
   n représente un entier compris entre 0 et 12 ;
   < représente deux liaisons situées sur A1.

Le plus souvent, les dendrimères de l'invention comportent des chaînes intermédiaires terminées par un groupe terminal :
- à l'extrémité de chaque chaîne de génération éventuellement présente ; ou
- à l'extrémité de chaque liaison autour du noyau non reliée à une chaîne de génération.

Les dendrimères de l'invention comprennent ainsi, en général, m bras liés au noyau central §, chacun de ces bras étant :
- un bras de type (1), à savoir un bras constitué par une chaîne intermédiaire terminée par un groupe terminal de formule (T) ; ou
- un bras de type (2), à savoir un bras constitué par une ou plusieurs chaînes de génération comportant à ses extrémités une chaîne intermédiaire terminée par un groupe terminal de formule (T).

Selon un mode de réalisation particulier, les dendrimères comportent uniquement des bras de type (1) liés au noyau central §.

Selon un autre mode de réalisation, les dendrimères ne comportent que des bras de type (2) liés au noyau central §.

De préférence, les dendrimères selon l'invention correspondent aux dendrimères commerciaux auxquels a été greffé le groupe terminal -(A1)<[A2-P(=O)(OX)₂]₂ sur leur surface.

Selon l'invention, lesdits dendrimères commerciaux sont notamment choisis parmi les dendrimères de type DAB-AM, PAMAM (Starbust^{®} notamment) présentant des fonctions terminales -NH₂, -OH ou -COOH, de type PMMH, tels que cyclotriphosphazène- ou thiophosphoryl-PMMH, ou encore parmi les dendrimères phosphorés tels que : 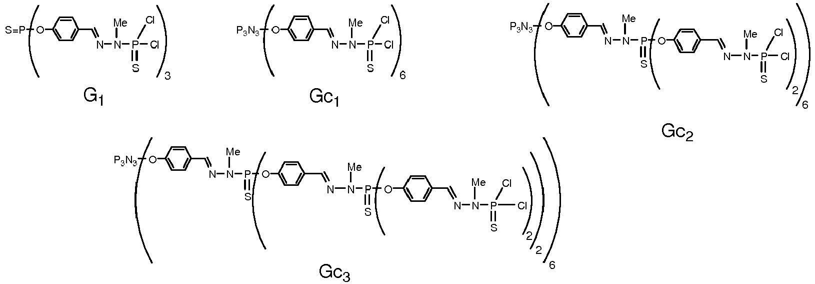 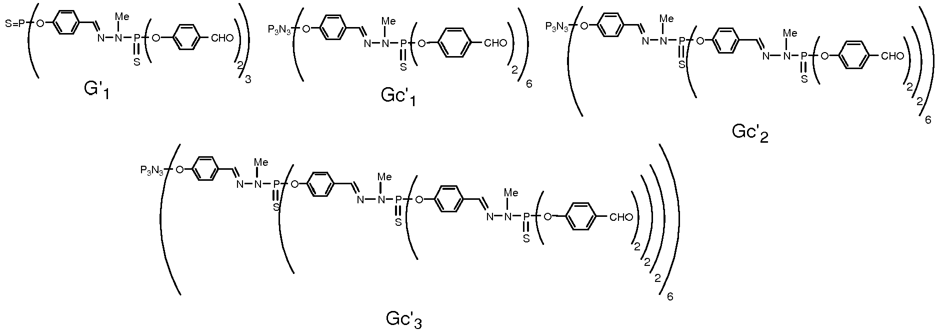 ainsi que les générations ultérieures.

Tous ces dendrimères sont commercialisés par Aldrich.

De préférence, les groupes -P(=O)(OX)₂ sont en position gem.

De préférence, X représente un radical -Alkyle, tel que -Méthyle.

De préférence, A2 représente -Me-.

Le noyau central § est constitué d'au moins un atome de valence m.

Le noyau central § peut être choisi parmi tout atome ou radical présentant une valence m supérieure ou égale à 1. De préférence, § contient au moins un hétéroatome.

M⁺ est un cation d'un atome, par exemple un atome de métal, ou un cation dérivé de tout radical susceptible d'être stable sous forme de cation. Ledit cation peut être notamment choisi parmi les sels de base azotée, notamment les sels d'ammonium, seuls ou en mélange, notamment avec les tensio-actifs cationiques.

De préférence, M⁺ représente un cation d'élément du groupe IA, IIA, IIB ou IIIA de la classification périodique ; de préférence, M est choisi parmi les atomes de sodium, potassium, calcium, baryum, zinc, magnésium, lithium et aluminium, encore plus préférentiellement le sodium, le lithium et le potassium.

Selon un autre aspect préféré, M⁺ représente le cation d'une base azotée, tel que HNEt₃⁺.

De préférence, le noyau § est choisi parmi les groupes suivants :

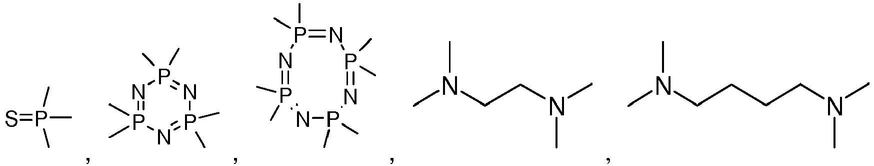

De préférence, le noyau central § est de formule : 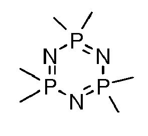
m représente un entier compris entre 1 et 8 ; encore plus préférentiellement compris entre 3 et 8, plus particulièrement 3, 4 ou 6 ;
n représente le nombre de générations du dendrimère ; il représente un entier compris entre 0 et 12 ; de préférence compris entre 0 et 3 ;

Les chaînes de génération sont choisies parmi toute chaîne hydrocarbonée de 1 à 12 chaînons, linéaire ou ramifiée, contenant éventuellement une ou plusieurs double ou triple liaison, chacun desdits chaînons pouvant éventuellement être choisi parmi un hétéroatome, un groupe Aryle, Hétéroaryle, >C=O, >C=NR, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle.
où
R et R', identiques ou différents, représentent indépendamment un atome d'hydrogène ou un radical -Alkyle, -Aryle, -Aralkyle ;

De préférence, les chaînes de génération, identiques ou différentes, sont représentées par la formule :

-A-B-C(D)=N-N(E)-(P(=G))< (C1)

où :
A représente un atome d'oxygène, soufre, phosphore ou un radical -NR- ;
B représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
C représente l'atome de carbone,
D et E, identiques ou différents, représentent indépendamment un atome d'hydrogène, un radical -Alkyle, -OAlkyle, -Aryle, -Aralkyle, chacun pouvant être éventuellement substitué par un atome d'Halogène ou un radical -NO₂, -NRR', -CN, -CF₃, -OH, -Alkyle, -Aryle, -Aralkyle ;
G représente un atome de soufre, oxygène, azote, Soufre, Sélénium, Tellure ou un radical =NR ;
N représente l'atome d'azote ;
P représente l'atome de phosphore.

De préférence, dans la formule générale (C1) ci-dessus, A représente un atome d'oxygène.

De préférence, dans la formule générale (C1) ci-dessus, B représente un noyau phényle, éventuellement substitué par un atome d'halogène ou un radical -NO₂, -NRR', -CN, -CF₃, -OH, -Alkyle, -Aryle, -Aralkyle ; encore plus préférentiellement, B représente un noyau phényle non substitué.

De préférence, dans la formule générale (C1) citée ci-dessus, D représente un atome d'hydrogène.

De préférence, dans la formule générale (C1) citée ci-dessus, E représente un radical -Alkyle.

De préférence, dans la formule générale (C1) ci-dessus, G représente un atome de soufre.

Selon un autre aspect préféré, les chaînes de génération sont représentées par la formule :

-A'-(C=O)-N(R)-B'-N< (C1')

où
A' et B' représentent indépendamment un radical -Alkyle, -Alkényle, -Alkynyle, chacun éventuellement substitué par un ou plusieurs substituants choisi(s) parmi -Alkyle, -Hal, -NO₂, -NRR', -CN, -CF₃, -OH, -OAlkyle, -Aryle, -Aralkyle ;
R, R' sont définis comme précédemment.

De préférence, A' représente -Alkyle-, encore plus préférentiellement -Ethyle. De préférence, B' représente -Alkyle-, encore plus préférentiellement -Ethyle.

De préférence, R représente un atome d'hydrogène.

Selon un autre aspect préféré, les chaînes de génération sont représentées par la formule :

-A"-N< (C1")

où
A" représente un radical -Alkyle, -Alkényle, -Alkynyle, chacun éventuellement substitué par un ou plusieurs substituants choisi(s) parmi -Alkyle, -Hal, -NO₂, -NRR', -CN, -CF₃, -OH, -OAlkyle, -Aryle, -Aralkyle, où RR' sont définis comme précédemment.

De préférence, A" représente -Alkyle-, encore plus préférentiellement -Propyle-.

Selon un autre aspect préféré, les dendrimères selon l'invention de génération 1 ne comprennent pas de chaîne de génération. Notamment, dans le cas où la chaîne de génération est représentée par les formules (C1') ou (C1 "), les dendrimères correspondants de génération 1 ne comprennent pas de chaîne de génération.

Les chaînes intermédiaires sont choisies parmi toute chaîne hydrocarbonée de 1 à 12 chaînons, linéaire ou ramifiée, contenant éventuellement une ou plusieurs double ou triple liaison, chacun desdits chaînons pouvant éventuellement être choisi parmi un hétéroatome, un groupe Aryle, Hétéroaryle, >C=O, >C=NR, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle, où RR' sont définis comme précédemment.

De préférence, les chaînes intermédiaires présentent une simple liaison à leur extrémité.

De préférence, les chaînes intermédiaires, identiques ou différentes, sont représentées par la formule :

-J-K-L- (C2)

où
J représente un atome d'oxygène, soufre, ou un radical -NR- ;
K représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
L représente une chaîne hydrocarbonée de 1 à 6 chaînons, linéaire ou ramifiée, contenant éventuellement une ou plusieurs double ou triple liaison, chacun desdits chaînons pouvant éventuellement être un hétéroatome, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle,
où RR' sont définis comme précédemment.

De préférence, dans la formule (C2) ci-dessus, J représente un atome d'oxygène.

De préférence, dans la formule (C2) ci-dessus, K représente un noyau phényle, éventuellement substitué ; encore plus préférentiellement, K représente un noyau phényle non substitué.

De préférence, dans la formule (C2) ci-dessus, L représente un radical -(Alk)ₐ-, ou L représente le radical -C(D)=N-N(E)-(Alk)ₐ-,
où C représente un atome de carbone,
D et E, identiques ou différents, représentent indépendamment un atome d'hydrogène, un radical -Alkyle, -OAlkyle, -Aryle, -Aralkyle, chacun pouvant être éventuellement substitué par un atome d'Halogène ou un radical -NO₂, -NRR', -CN, -CF₃, -OH, -Alkyle, -Aryle, -Aralkyle ;
a représente 0 ou 1 ;
R, R' sont définis comme précédemment.

Selon un autre aspect préféré, les chaînes intermédiaires sont représentées par la formule

-A'-(C=O)-N(R)-B'- (C2')

où A', B', R, R' sont définis comme précédemment.

De préférence, A' représente -Alkyle- ; encore plus préférentiellement -Ethyle-.

De préférence, B' représente -Alkyle- ; encore plus préférentiellement -Ethyle-.

De préférence, R représente un atome d'hydrogène.

Selon un autre aspect préféré, les chaînes intermédiaires sont représentées par la formule

-A"- (C2")

où
A" est défini comme précédemment.

De préférence, A" représente un radical -Alkyle- ; encore plus préférentiellement -Propyle-.

De préférence, les chaînes de génération sont identiques.

De préférence, dans les formules (C1) et (C2) citées ci-dessus, J et K sont respectivement égaux à A, B.

De préférence, les dendrimères selon l'invention peuvent être représentés par la formule (I-1i) suivante :

§"{{A-B-C(D)=N-N(E)-(P(=G))<}ⁿ[J-K-(Alk)ₐ-N<[A2-P(=O)(OX)₂]₂]₂}ₘ (I-1i)

dans laquelle :
§, A, B, C, D, E, G, N, P, J, K, X, A2, m, n sont définis comme précédemment, {}ⁿ désigne la structure en arborescence des chaînes de génération n dudit dendrimère, et a représente 0 ou 1 ; de préférence, A2 représente un radical -Alkyle-.

De préférence, les dendrimères selon l'invention peuvent être représentés par la formule (I-1 ii) suivante :

§-{{A-B-C(D)=N-N(E)-(P(=G))<}ⁿ[J-K-C(D)=N-N(E)-(Alk)ₐ-CH<[A2-P(=O)(OX)₂]₂]₂}ₘ (I-1ii)

dans laquelle :
§, A, B, C, D, E, G, N, P, J, K, X, A2, m, n sont définis comme précédemment, {}ⁿ désigne la structure en arborescence des chaînes de génération n dudit dendrimère, et a représente 0 ou 1 ; de préférence, A2 représente une liaison simple.

Selon un autre aspect préféré, les dendrimères selon l'invention peuvent être représentés par la formule (I-2) suivante :

S-{{A'-(C=O)-N(R)-B'-N<}ⁿ [A2-P(=O)(OX)₂]₂]₂}ₘ (I-2)

dans laquelle :
§, A', B', C, N, P, X, A2, m, n sont définis comme précédemment et {}ⁿ désigne la structure en arborescence des chaînes de génération n dudit dendrimère.

Selon un autre aspect préféré, les dendrimères selon l'invention peuvent être représentés par la formule (I-3) suivante :

§-{{A"-N<}ⁿ [A2-P(=O)(OX)₂]₂]₂}ₘ (I-3)

dans laquelle :
§, A", N, P, X, A2, m, n sont définis comme précédemment et {}ⁿ désigne la structure en arborescence des chaînes de génération n dudit dendrimère.

Selon la présente invention, le radical -Alk, -Alkyle ou -Alkyle- représente un radical alkyle, c'est-à-dire un radical hydrocarboné et saturé, en chaîne droite ou ramifiée, de 1 à 20 atomes de carbone, de préférence de 1 à 5 atomes de carbone.

On peut notamment citer, lorsqu'ils sont linéaires, les radicaux méthyle, éthyle, propyle, butyle, pentyle, hexyle, octyle, nonyle, décyle, dodécyle, hexadécyle, et octadécyle.

On peut notamment citer, lorsqu'ils sont ramifiés ou substitués par un ou plusieurs radical alkyle, les radicaux isopropyle, tert-butyl, 2-éthylhexyle, 2-méthylbutyle, 2-méthylpentyle, 1-méthylpentyle et 3-méthylheptyle.
- Alkényle ou -Alkényle- désigne un groupe hydrocarboné aliphatique qui contient au moins une double liaison carbone-carbone et qui peut être linéaire ou ramifié ayant environ 2 à environ 15 atomes de carbone dans la chaîne. Des groupes alcényle préférés ont 2 à environ 12 atomes de carbone dans la chaîne ; et plus encore de préférence environ 2 à environ 4 atomes de carbone dans la chaîne. Ramifié signifie qu'un ou plusieurs groupes alkyle inférieurs, tels que le méthyle, l'éthyle ou le propyle, sont liés à une chaîne alkényle linéaire. Des exemples types de groupes alcényle comprennent l'éthényle, le propényle, le *n*-butényle, l'*i*-butényle, le 3-méthylbut-2-ényle, le *n*-pentényle, l'heptényle, l'octényle, le cyclohexylbutényle et le décényle.
- Alkynyle ou -Alkynyle- désigne un groupe hydrocarboné aliphatique qui contient au moins une triple liaison carbone-carbone et qui peut être linéaire ou ramifié ayant 2 à environ 15 atomes de carbone dans la chaîne. Des groupes alcynyle préférés ont 2 à environ 12 atomes de carbone dans la chaîne ; et plus encore de préférence environ 2 à environ 4 atomes de carbone dans la chaîne. Ramifié signifie qu'un ou plusieurs groupes alkyle inférieurs, tels que le méthyle, l'éthyle ou le propyle, sont liés à une chaîne alcynyle linéaire. Des exemples types de groupes alcynyle comprennent l'éthynyle, le propynyle, le *n-*butynyle, le 2-butynyle, le 3-méthylbutynyle, le *n*-pentynyle, l'heptynyle, l'octynyle et le décynyle.

Parmi les atomes d'Halogène (Hal), on cite plus particulièrement les atomes de fluor, de chlore, de brome et d'iode, de préférence le fluor.

Le radical -Aryle ou -Aryle- représente un radical Aryle, c'est-à-dire un système aromatique hydrocarboné, mono ou bicyclique de 6 à 10 atomes de carbone.

Parmi les radicaux Aryle, on peut notamment citer le radical phényle ou naphtyle.

Parmi les radicaux -Aralkyle (-AlkyleAryle), on peut notamment citer le radical benzyle ou phénétyle.

Le terme « Hétéroatome » désigne l'atome d'azote, d'oxygène, de phosphore, de silicium ou de soufre.
- Hétéroaryle ou -Hétéroaryle- désigne un radical Hétéroaryle, c'est-à-dire un système aromatique comprenant un ou plusieurs hétéroatomes choisis parmi l'azote, l'oxygène ou le soufre, mono ou bicyclique, de 5 à 10 atomes de carbone. Parmi les radicaux Hétéroaryles, on pourra citer le pyrazinyle, le thiényle, l'oxazolyle, le furazanyle, le pyrrolyle, le 1,2,4-thiadiazolyle, le naphthyridinyle, le pyridazinyle, le quinoxalinyle, le phtalazinyle, l'imidazo[1,2-a]pyridine, l'imidazo[2,1-b]thiazolyle, le cinnolinyle, le triazinyle, le benzofurazanyle, l'azaindolyle, le benzimidazolyle, le benzothiényle, le thiénopyridyle, le thiénopyrimidinyle, le pyrrolopyridyle, l'imidazopyridyle, le benzoazaindole, le 1,2,4-triazinyle, le benzothiazolyle, le furanyle, l'imidazolyle, l'indolyle, le triazolyle, le tétrazolyle, l'indolizinyle, l'isoxazolyle, l'isoquinolinyle, l'isothiazolyle, l'oxadiazolyle, le pyrazinyle, le pyridazinyle, le pyrazolyle, le pyridyle, le pyrimidinyle, le purinyle, le quinazolinyle, le quinolinyle, l'isoquinolyle, le 1,3,4-thiadiazolyle, le thiazolyle, le triazinyle, l'isothiazolyle, le carbazolyle, ainsi que les groupes correspondants issus de leur fusion ou de la fusion avec le noyau phényle. Les groupes Hétéroaryle préférés comprennent le thiényle, le pyrrolyle, le quinoxalinyle, le furanyle, l'imidazolyle, l'indolyle, l'isoxazolyle, l'isothiazolyle, le pyrazinyle, le pyridazinyle, le pyrazolyle, le pyridyle, le pyrimidinyle, le quinazolinyle, le quinolinyle, le thiazolyle, le carbazolyle, le thiadiazolyle, et les groupes issus de la fusion avec un noyau phényle, et plus particulièrement le quinolynyle, le carbazolyle, le thiadiazolyle.

Selon l'invention, on entend par « dendrimère correspondant » le dendrimère de même génération possédant les mêmes noyaux, chaînes de génération, chaînes intermédiaires et des groupes terminaux distincts.

Les sels des composés selon l'invention font référence aux sels d'addition des composés de la présente invention. Ces sels peuvent être préparés *in situ* pendant l'isolement final et la purification des composés. Les sels d'addition peuvent être préparés en faisant réagir séparément le composé purifié sous sa forme acide avec une base organique ou inorganique et en isolant le sel ainsi formé. Les sels d'addition comprennent les sels aminés et métalliques. Les sels métalliques adaptés comprennent les sels de sodium, potassium, calcium, baryum, zinc, magnésium et aluminium. Les sels de sodium et de potassium sont préférés. Les sels d'addition inorganiques de base adaptés sont préparés à partir de bases métalliques qui comprennent hydrure de sodium, hydroxyde de sodium, hydroxyde de potassium, hydroxyde de calcium, hydroxyde d'aluminium, hydroxyde de lithium, hydroxyde de magnésium, hydroxyde de zinc.

Selon un autre objet, la présente invention concerne également le procédé de préparation des dendrimères cités ci-dessus.

Les composés de l'invention peuvent être préparés par application ou adaptation de toute méthode connue en soi de et/ou à la portée de l'homme du métier permettant le greffage de fonctions -PO₃X₂, particulièrement -(A1)<[A2-P(=O)(OX)₂]₂, notamment celles décrites par Larock dans Comprehensive Organic Transformations, VCH Pub., 1989, ou par application ou adaptation des procédés décrits dans les exemples qui suivent.

Dans les réactions décrites ci-après, il peut être nécessaire de protéger les groupes fonctionnels réactifs, par exemples les groupes hydroxy, amino, imino, thio, carboxy, lorsqu'ils sont souhaités dans le produit final, pour éviter leur participation indésirable dans les réactions. Les groupes de protection traditionnels peuvent être utilisés conformément à la pratique standard, pour des exemples voir T.W. Green et P.G.M. Wuts dans Protective Groups in Organic Chemistry, John Wiley and Sons, 1991 ; J.F.W. McOmie in Protective Groups in Organic Chemistry, Plenum Press, 1973.

Selon l'invention, le procédé de préparation d'un dendrimère selon l'invention comprenant le groupe terminal -A₁<[A2-P(=O)(OX)₂]₂ comprend :
(i) la réaction du dendrimère correspondant présentant une fonction terminale -CHO, -CH=NR, -NH₂ ou -P(=G)Cl₂
   avec un composé correspondant présentant une ou deux fonctionnalités -PO₃X₂ ;
(ii) suivie éventuellement, lorsque X représente H ou M, de l'étape consistant à transformer le dendrimère obtenu en (i) présentant une terminaison -PO₃Me₂ en le dendrimère correspondant présentant une terminaison -A1 <[A2-P(=O)(OH)_{2]2},
(iii) suivie éventuellement, lorsque X représente M, de l'étape consistant à transformer le dendrimère obtenu en (ii) présentant une terminaison -A1<[A2-P(=O)(OH)_{2]2} en le sel du dendrimère correspondant présentant une terminaison -A1 <[A2-P(=O)(OM)_{2]2}.

Les dendrimères correspondants de départ sont disponibles commercialement (Aldrich) ou peuvent être préparés selon des méthodes connues en soi.

Plus précisément, selon l'invention, l'étape (i) peut être opérée selon les alternatives suivantes :

Selon une première alternative, lorsque le dendrimère selon l'invention est représenté par la formule (I-1i)

§-{{A-B-C(D)=N-N(E)-(P(=G))<}ⁿ[J-K-(Alk)ₐ-N<[A2-P(=O)(OX)₂]₂]₂}ₘ (I-1i)

dans laquelle §, A, B, C, D, E, G, N, P, J, K, A2, Alk, X, a, m, n, < sont définis comme précédemment,
l'étape (i) comprend la réaction sur le dendrimère correspondant de même génération n de formule

§-{{A-B-C(D)=N-N(E)-(P(=G))<Y₂}ⁿ (II-1 i)

où Y représente -Cl ;

d'un composé de formule H-J-K-(Alk)ₐ-N<[A2-P(=O)(OX)_{2]2} (III)

Cette réaction est effectuée sous agitation, en solution dans un solvant polaire, aprotique, tel que le THF, l'acétonitrile, le chloroforme, le dichlorométhane, le DMF ou l'acétone, de préférence le THF, en présence d'une base organique ou inorganique, telle que le carbonate de césium, à température comprise entre -80°C et 100°C, de préférence à température ambiante.

De préférence, dans la formule (II-1 i), G représente S.

De préférence, les dendrimères de formule (II-1i) sont choisis parmi: SPCl₃, P₃N₃Cl₆,

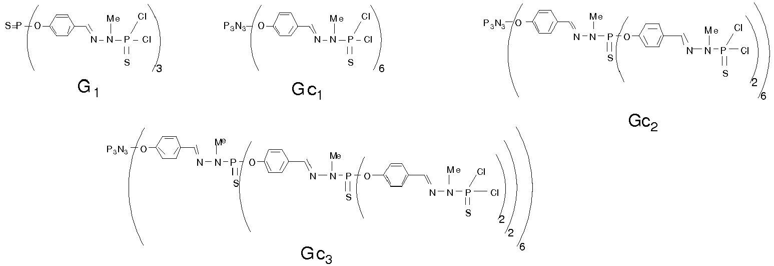

Selon une seconde alternative, lorsque le dendrimère selon l'invention est représenté par la formule (I-2) ou (I-3) :

§-*{{A'-(C=O)-N(R)-B'-N<}ⁿ[A2-P(=O)(OX)₂]₂]₂}ₘ (I-2)

ou

§-{{A"-N<}ⁿ [A2-P(=O)(OX)₂]₂]₂}ₘ (I-3)

dans lesquelles §, A', A", B', B", C, N, P, A2, X, m, n, < sont définis comme précédemment, l'étape (i) comprend la réaction sur le dendrimère correspondant de même génération n de formule

S-{{A'-(C=O)-N(R)-B'-NH₂}ⁿ}ₘ (II-2)

ou

§-11-A"-NH₂}ⁿ}ₘ (II-3)

d'un composé de formule H-P(=O)(OX)₂ (IV),
en présence d'un composé de formule H-A2-(C=O)H (V) correspondant.

Cette réaction est effectuée sous agitation, éventuellement dilué en solution aqueuse, à température comprise entre -5°C et la température de reflux du mélange.

Les composés de formule (IV) et (V) sont disponibles commercialement (Aldrich) ou peuvent être préparés selon des méthodes connues en soi.

Les dendrimères de formule (II-2) et (II-3) sont disponibles commercialement (Aldrich). Ils sont de préférence de type DAB ou PAMAM mentionnés plus haut.

Selon une troisième alternative, lorsque le dendrimère selon l'invention est représenté par la formule (I-1ii)

§-{{A-B-C(D)=N-N(E)-(P(=G))<}ⁿ[J-K-C(D)=N-N(E)-(Alk)ₐ-CH<[A2-P(=O)(OX)₂]₂]₂}ₘ (I-1ii)

dans laquelle :
§, A, B, C, D, E, G, N, P, J, K, L, X, A2, m, n, a sont définis comme précédemment,
l'étape (i) comprend la réaction sur le dendrimère correspondant de formule

§-{{A-B-C(D)=N-N(E)-(P(=G))<}ⁿ-[J-K-L']₂}ₘ (II-1ii)

où L' représente un radical -CHO ;

d'un composé de formule (Alk')ₐ-CH-[A2-P(=O)(OX)₂] (VI)

où Alk correspondant à Alk défini précédemment dans la formule (I-1ii) représente un radical Alkényle en présence d'un composé de formule H₃C-NH-NH₂ (VII)

Cette réaction peut être effectuée par application ou adaptation de la méthode décrite dans J. Org. Chem., 1977, 62, 4834.

De préférence, on opère en milieu solvant aprotique, polaire tel que le THF, le chloroforme, le dichlorométhane, ou l'acétonitrile, de préférence CH₂Cl₂, par ajout simultané du (VI) et (VII) au dendrimère à une température comprise entre -80°C et 50°C, de préférence environ 0°C.

Les composés de formule (VI) et (VII) sont disponibles commercialement ou peuvent être préparés selon des méthodes connues en soi.

De préférence, les dendrimères de formule (II-1 ii) sont choisis parmi : SPCl₃, P₃N₃Cl₆,

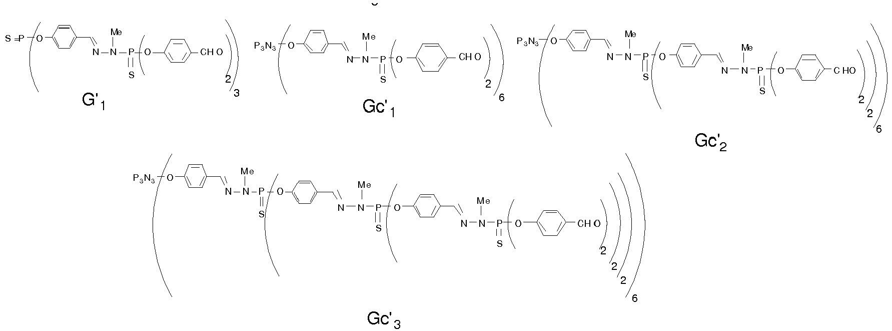

Pour obtenir un composé d'un dendrimère selon l'invention où X=H ou M, l'étape (i) est effectuée de préférence avec un réactif de formule (III), (IV) ou (VI) où X=Me. On effectue ensuite l'étape (ii) à partir du composé de formule (I-1i), (I-2), (I-3), (I-1ii) obtenu en (i) où X=Me.

De préférence, l'étape (ii) est effectuée :
- par action d'halogénure de triméthylsilane, de préférence le bromure de triméthylsilane (Me₃SiBr), dans un solvant organique aprotique, polaire, tel que l'acétonitrile, le chloroforme, ou le dichlorométhane de préférence l'acétonitrile. De préférence, on opère par ajout lent d'halogénure de triméthylsilane, en maintenant le mélange réactionnel à température comprise entre -80°C et 50°C, de préférence, à environ 0°C.
- suivie de l'action de MeOH anhydre, ajouté au mélange réactionnel.

Dans l'étape (iii), les sels d'acides des composés selon l'invention peuvent être obtenus à partir des composés selon l'invention présentant un groupe terminal dans lequel X représente un atome d'hydrogène, par l'application ou l'adaptation de procédés connus, par addition d'une base. De préférence, on opère en solution, sous agitation, dans un solvant convenable, protique ou aprotique, polaire, tel que le THF, le chloroforme le dichlorométhane, le DMF, l'acétonitrile, les alcools, l'eau, de préférence l'eau, en présence d'une base organique ou inorganique, telle que l'hydroxyde de sodium, de lithium ou de potassium, selon le sel désiré.

Lorsqu'on utilise des dendrimères de départ présentant des groupes terminaux différents des fonctions terminales décrites plus haut pour les dendrimères de formule (II-1i), (II-1ii), (II-2) ou (II-3), le procédé selon l'invention comprend l'étape préliminaire supplémentaire permettant de transformer lesdits groupes en lesdites fonctions requises. Par exemple, dans le cas de dendrimères présentant des groupes terminaux de type acide carboxylique ou hydroxyle, il suffit d'effectuer toute réaction permettant de convertir lesdits groupes de type acide carboxylique ou hydroxyle en les fonctions de type -NH₂, -CHO, -CH=NR ou -PSCl₂ correspondantes aux dendrimères de formule (II-1i), (II-1ii), (II-2) ou (II-3). De telles réactions sont connues de l'homme du métier et/ou peuvent être effectuées par application ou adaptation de celles discutées par Larock et al *(supra).*

Pour obtenir un dendrimère selon l'invention de génération 0, les réactions ci-dessus peuvent être effectuée de la même façon en opérant à partir du noyau, présentant la fonctionnalité requise. Par exemple, les réactions de génération peuvent être effectuées en opérant à partir d'un noyau PSCl₃, P₃N₃Cl₆, P₄N₄Cl₈, ou

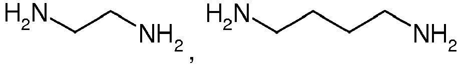

Les composés de formule (III) sont nouveaux et font donc également partie de la présente invention.

La présente invention concerne donc également les composés de formule (III) :

H-J-K-(Alk)ₐ-N<[A2-P(=O)(OX)_{2]2} (III)

dans laquelle
X représente H, un radical -Alkyle, -Aryle ou M⁺ où M⁺ représente un cation ;
J représente un atome d'oxygène, soufre, ou un radical -NR- ;
K représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
chacun des A2, identiques ou différents représentent indépendamment une liaison simple ou une chaîne hydrocarbonée de 1 à 6 chaînons, linéaire ou ramifiée, chacun desdits chaînons pouvant éventuellement être choisi parmi un hétéroatome, de préférence l'azote, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle;
-Alk- représente un radical alkyle ;
a représente 0 ou 1.

De préférence, dans la formule (III) ci-dessus, J représente un atome d'oxygène.

De préférence, dans la formule (III) ci-dessus, K représente un noyau phényle, éventuellement substitué ; encore plus préférentiellement, K représente un noyau phényle non substitué.

De préférence, dans la formule (III) ci-dessus, -Alk- représente un radical -Ethyle-.

De préférence, dans la formule (III) ci-dessus, A2 représente un radical -Alkyle-, encore plus préférentiellement, -Méthyle-.

De préférence, dans la formule (III) ci-dessus, X représente -H ou -Me.

Les composés de formule (III) peuvent être obtenus à partir d'un composé de formule (VIII) de la façon suivante :

H-J-K-(Alk)ₐ-NH₂ (VIII) + H-A2'-(C=O)H (V) + H-P(=O)(OX)₂ (IV) → H-J-K-(Alk)ₐ-N<[A2-PO₃X_{2]2} (III)

où, dans la formule (V), -A2'- est un radical correspondant à A2.

Cette réaction est effectuée par application ou adaptation de méthode connue en soi, notamment décrite dans I. Linzaga et al., Tetrahedron 2002, 58, 8973-8978. On opère notamment par ajout lent, des composés (VIII) et (IV), puis du composé (V), éventuellement dilué en solution aqueuse, de préférence à température comprise entre -5 et 25°C, de préférence à environ 0°C. Puis on laisse le mélange réactionnel s'ajuster à la température ambiante, puis éventuellement réagir sous reflux.

Dans la description du procédé ci-dessus, deux groupes sont dits « correspondants » lorsque ils sont respectivement inclus dans un produit de départ et d'arrivée, et leur structure est identique et peut se déduire l'une de l'autre.

Eventuellement, ledit procédé peut également comprendre l'étape consistant à isoler le produit obtenu à l'issu des étapes (i), (ii), et/ou (iii).

Le composé ainsi préparé peut être récupéré à partir du mélange de la réaction par les moyens traditionnels. Par exemple, les composés peuvent être récupérés en distillant le solvant du mélange de la réaction ou si nécessaire après distillation du solvant du mélange de la solution, en versant le reste dans de l'eau suivi par une extraction avec un solvant organique immiscible dans l'eau, et en distillant le solvant de l'extrait. En outre, le produit peut, si on le souhaite, être encore purifié par diverses techniques, telles que la recristallisation, la reprécipitation ou les diverses techniques de chromatographie, notamment la chromatographie sur colonne ou la chromatographie en couche mince préparative.

Il sera apprécié que les composés utiles selon la présente invention puissent contenir des centres asymétriques. Ces centres asymétriques peuvent être indépendamment en configuration R ou S. Il apparaîtra à l'homme du métier que certains composés utiles selon l'invention peuvent également présenter une isomérie géométrique. On doit comprendre que la présente invention comprend des isomères géométriques individuels et des stéréoisomères et des mélanges de ceux-ci, incluant des mélanges racémiques, de composés de formule (I) ci-dessus. Ces isomères peuvent être séparés de leurs mélanges, par l'application ou l'adaptation de procédés connus, par exemple des techniques de chromatographie ou des techniques de recristallisation, ou ils sont préparés séparément à partir des isomères appropriés de leurs intermédiaires.

Aux fins de ce texte, il est entendu que les formes tautomériques sont comprises dans la citation d'un groupe donné, par exemple thio/mercapto ou oxo/hydroxy.

Les composés utiles selon la présente invention peuvent être facilement préparés, ou formés pendant le processus de l'invention, sous forme de solvates (par exemple hydrates). Les hydrates des composés utiles selon la présente invention peuvent être facilement préparés par la recristallisation dans un mélange de solvant aqueux/organique, en utilisant des solvants organiques tels que dioxane, tétrahydrofuranne ou méthanol.

Les produits de base ou les intermédiaires peuvent être préparés par l'application ou l'adaptation de procédés connus, par exemple des procédés tels que décrits dans les Exemples de Référence ou leurs équivalents chimiques évidents.

Les inventeurs ont découvert que les dendrimères selon l'invention présentent des propriétés particulièrement avantageuses permettant le traitement de surface, notamment les surfaces métalliques ou à base de silicium, ou à base d'oxydes, tels que les oxydes de titane, de zirconium, etc.... Ils peuvent notamment être utilisés à titre d'additif dans toute composition destinée au contact ou au traitement desdites surfaces. Ils peuvent notamment être utilisés à titre d'agent anti-corrosion, agent de lubrification, agent anti-tartre, ou encore comme agent retardateur de feu, notamment pour les polymères plastiques.

### EXEMPLES

### Généralités

Les réactions ont été réalisées sous atmosphère d'argon sec (argon U, Air Liquide). Les solvants suivants ont été séchés et distillés sous argon immédiatement avant usage selon les techniques décrites dans la littérature' : tétrahydrofuranne, dichlorométhane, acétonitrile, pentane, toluène, éther diéthylique, chloroforme, triéthylamine, pyridine.

Les chromatographies sur couche mince ont été réalisées sur des plaques d'aluminium enduites de silice de type Merck Kieselgel 60F₂₅₄.

Les spectres de RMN ont été enregistrés sur des appareils Brüker (AC200, AM250, DPX 300). Les déplacements chimiques sont exprimés en parties par million (ppm) par rapport à l'acide phosphorique à 85 % dans l'eau pour la RMN ³¹P et par rapport au tétraméthylsilane pour la RMN ¹H et ¹³C. Les
¹ D. D. Perrin; W. L. F. Armarego Purification of Laboratory Chemicals, Third Edition; Press, P., Ed.: Oxford, 1988. abréviations suivantes ont été utilisées pour exprimer la multiplicité des signaux: s (singulet), d (doublet), dl (doublet large), dd (doublet dédoublé), syst.AB (système AB), t (triplet), td (triplet dédoublé), q (quadruplet), hept (heptuplet), m (multiplet non résolu).

La spectroscopie vibrationnelle dans l'infrarouge a été réalisée sur un spectromètre Perkin Elmer FT 1725x. La spectroscopie UV-visible a été réalisée sur un appareil HP 4852A. Les mesures thermogravimétriques ont été réalisées sur un appareil Netzch DSC 204 ou Setaram TGA 92-16.18.

### Numérotation utilisée pour l'attribution en RMN :

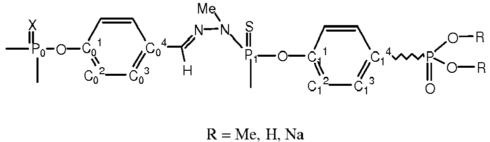

### Exemple de numérotation pour un dendrimère de première génération

### Structures des différents dendrimères utilisés comme produit de départ

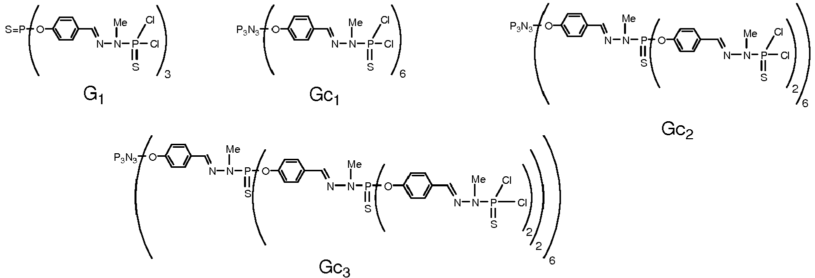

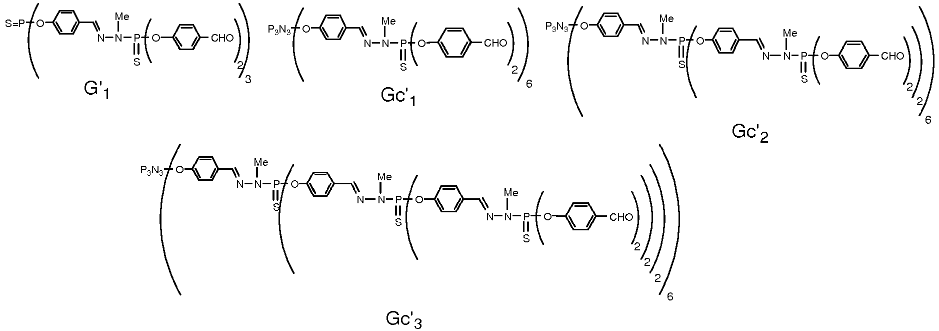

### Exemple 1 : Synthèse du dendrimère de première génération à surface tétraisopropyl-gem-diphosphonate

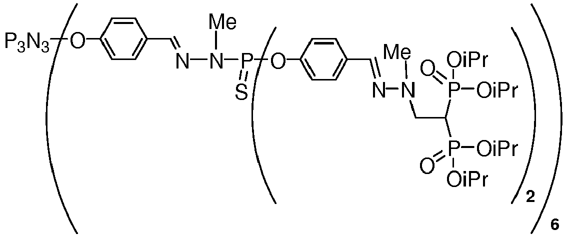

Le dendrimère Gc'₁ (7,0.10⁻² mmol, 200 mg) est mis en solution dans CH₂Cl₂ (10 mL) puis la monométhylhydrazine est additionnée à 0°C (1,3 mmol, 66 µL) ainsi que le tétraisopropyl-vinyl-gem-diphosphonate (0,7 g sachant qu'il est pur seulement à 65 %) ; cette addition doit être simultanée et lente pour éviter la formation d'un agrégat insoluble. L'addition terminée, le mélange est agité à température ambiante pendant 24 heures. L'évaporation du solvant sous pression réduite, suivie de 3 lavages avec 50 mL de pentane pur, permettent d'éliminer tous les sous produits de la réaction ainsi que les impuretés contenues dans le tétraisopropyl-vinyl-gem-diphosphonate de départ. Le produit final est isolé avec un rendement final de 70%.
RMN ³¹P-{¹H} (CDCl₃) : δ = 66,5 (s, P₁); 23,5 (s, P(O)(OiPr)₂); 11,9 (s, P₀) ppm. RMN ¹H (CDCl₃) : δ = 1,29 (d, ³*J*_{HH} = 6,1 Hz, 288H, -O-CH-(CH₃)₂); 2,91 (s, 36H, N-N(CH₃)-CH₂-); 3,00 (tt, ²*J*_{HP} = 23,6 Hz, ³*J*_{HH} = 6,0 Hz, 12H, -CH-(P(O)(OiPr)₂)₂); 3,23 (d, ³*J*_{HP} = 8,8 Hz, 18H, CH₃-N-P₁); 3,78 (td, ³*J*_{HP} = 14,7 Hz, ³*J*_{HH} = 6,2 Hz, 24H, -CH₂-CH-(P(O)(OiPr)₂)₂); 4,74 (hept, ³*J*_{HH} = 6,1 Hz, 48H, -O-CH-(CH₃)₂); 6,8-7,8 (m, 90H, CHₐᵣₒₘ et CH=N) ppm.
RMN ¹³C-{¹H} (CDCl₃) : δ = 23,7 (d, ³*J*_{CP} = 3,1 Hz, -O-CH-(CH₃)₂); 23,8 (d, ³*J*_{CP} = 2,5 Hz, -O-CH-(CH₃)₂); 24,0 (d, ³*J*_{CP} = 3,0 Hz, -O-CH-(CH₃)₂); 24,2 (d, ³*J*_{CP} = 2,9 Hz, -O-CH-(CH₃)₂); 32,9 (d, ²*J*_{CP} = 11,7 Hz, CH₃-N-P₁), 37,7 (t, ¹*J*_{CP} = 132,2 Hz, -CH-(P(O)(OiPr)₂)₂); 38,8 (s, N-N(CH₃)-CH₂-); 55,1 (s, -CH₂-CH-(P(O)(OiPr)₂)₂); 70,9 (d, ²*J*_{CP} = 6,6 Hz, -O-CH-(CH₃)₂); 71,3 (d, ²*J*_{CP} = 6,8 Hz, -O-CH-(CH₃)₂); 121,2 (s large, C₀², C₁²); 126,3 (s, C₁³); 128,2 (s, C₀³); 129,4 (s, CH=N-N(Me)-CH₂); 132,1 (s, C₀⁴), 134,5 (s, C₁⁴), 138,8 (s large, CH=N-N(Me)-P₁), 149,4 (d, ²*J*_{CP} = 7,5 Hz, C₁¹), 151,1 (s, C₀¹) ppm.

### Exemple 2 : Synthèse du dendrimère de seconde génération à surface tétraisopropyl-gem-diphosphonate

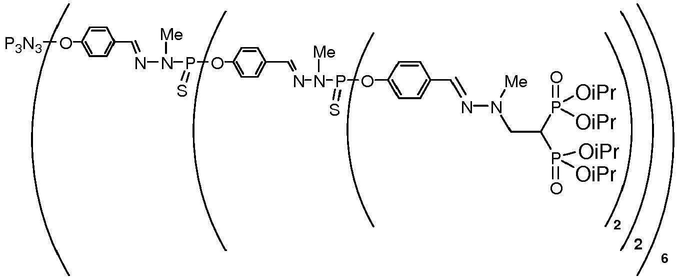

Le dendrimère Gc'₂ (2,9.10⁻² mmol, 200 mg) est mis en solution dans CH₂Cl₂ (10 mL) puis la monométhylhydrazine est additionnée à 0°C (1,05 mmol, 56 µL) ainsi que le tétraisopropyl-vinyl-gem-diphosphonate (0,575 g sachant qu'il est pur seulement à 65 %) ; cette addition doit être simultanée et lente pour éviter la formation d'un agrégat insoluble. L'addition terminée, le mélange est agité à température ambiante pendant 24 heures. L'évaporation du solvant sous pression réduite, suivie de 3 lavages avec 100 mL de pentane / éther 1/1, permettent d'éliminer tous les sous produits de la réaction ainsi que les impuretés contenues dans le tétraisopropyl-vinyl-gem-diphosphonate de départ. Le produit final est isolé avec un rendement final de 79%.
RMN ³¹P-{¹H} (CDCl₃) : δ = 66,4 (s, P₂); 66,1 (s, P₁); 23,5 (s, P(O)(OiPr)₂); 11,8 (s, P₀) ppm.
RMN ¹H (CDCl₃) : δ = 1,25 (d, ³*J*_{HH} = 6,0 Hz, 576H, -O-CH-(CH₃)₂); 2,87 (s, 72H, N-N(CH₃)-CH₂-); 2,97 (tt, ²*J*_{HP} = 23,6 Hz, ³*J*_{HH} = 6,6 Hz, 24H, -CH-(P(O)(OiPr)₂)₂); 3,24 (d large, ³*J*_{HP} = 9,5 Hz, 54H, CH₃-N-P_{1,2}); 3,74 (td, ³*J*_{HP} = 13,9 Hz, ³*J*_{HH} = 6,2 Hz, 48H, -CH₂-CH-(P(O)(OiPr)₂)₂); 4,71 (hept, ³*J*_{HH} = 5,9 Hz, 96H, -O-CH-(CH₃)₂); 6,8-7,8 (m, 210H, CHₐᵣₒₘ et CH=N) ppm.
RMN ¹³C-{¹H} (CDCl₃) : δ = 23,8 (d, ³*J*_{CP} = 3,1 Hz, -Q-CH-(CH₃)₂); 24,2 (d, ³*J*_{CP} = 3,0 Hz, -Q-CH-(CH₃)₂); 32,9 (d, ²*J*_{CP} = 11,8 Hz, CH₃-N-P_{1,2}), 38,3 (t, ¹*J*_{CP} = 132,1 Hz, -CH-(P(O)(OiPr)₂)₂); 38,8 (s, N-N(CH₃)-CH₂-); 55,2 (s, -CH₂-CH-(P(O)(OiPr)₂)₂); 70,9 (d, ²*J*_{CP} = 6,8 Hz, -O-CH-(CH₃)₂); 71,3 (d, ²*J*_{CP} = 6,8 Hz, -O-CH-(CH₃)₂); 121,4 (s large, C₀², C₁², C₂²); 126,4 (s, C₂³); 128,3 (s large, C₀³, C₁³); 129,5 (s, CH=N-N(Me)-CH₂); 132,1 (s, C₀⁴), 132,4 (s, C₁⁴), 134,5 (s, C₂⁴), 138,7 (s large, CH=N-N(Me)-P_{1,2}), 149,5 (d, ²*J*_{CP} = 7,4 Hz, C₂¹), 151,2 (s, C₀¹, C₁¹) ppm.

### Exemple 3 : Synthèse du dendrimère de troisième génération à surface tétraisopropyl-gem-diphosphonate

Le dendrimère Gc'₃ (1,35.10⁻² mmol, 200 mg) est mis en solution dans CH₂Cl₂ (10 mL) puis la monométhylhydrazine est additionnée à 0°C (0,97 mmol, 52 µL) ainsi que le tétraisopropyl-vinyl-gem-diphosphonate (0,532 g sachant qu'il est pur seulement à 65 %) ; cette addition doit être simultanée et lente pour éviter la formation d'un agrégat insoluble. L'addition terminée, le mélange est agité à température ambiante pendant 24 heures. L'évaporation du solvant sous pression réduite, suivie de 3 lavages avec 100 mL de pentane / éther 1/1, permettent d'éliminer tous les sous produits de la réaction ainsi que les impuretés contenues dans le tétraisopropyl-vinyl-gem-diphosphonate de départ. Le produit final est isolé avec un rendement final de 80%. 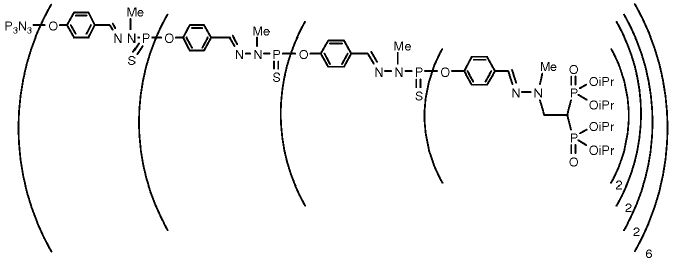 RMN ³¹P-{¹H} (CDCl₃) : δ = 66,3 (s, P₃); 66,0 (s, P_{1,2}); 23,5 (s, P(O)(OiPr)₂); 11,4 (s, P₀) ppm.
RMN ¹H (CDCl₃) : δ = 1,26 (d, ³*J*_{HH} = 6,0 Hz, 1152H, -O-CH-(CH₃)₂); 2,88 (s, 144H, N-N(CH₃)-CH₂-); 2,98 (tt, ²*J*_{HP} = 23,9 Hz, ³*J*_{HH} = 6,6 Hz, 48H, -CH-(P(O)(OiPr)₂)₂); 3,26 (d large, ³*J*_{HP} = 9,5 Hz, 126H, CH₃-N-P_{1,2,3}); 3,74 (m, 96H, -CH₂-CH-(P(O)(OiPr)₂)₂); 4,70 (hept, ³*J*_{HH} = 5,9 Hz, 192H, -O-CH-(CH₃)₂); 6,8-7,8 (m, 450H, CHₐᵣₒₘ et CH=N) ppm.
RMN ¹³C-{¹H} (CDCl₃) : δ = 23,9 (d, ³*J*_{CP} = 2,9 Hz, -O-CH-(CH₃)₂); 24,2 (d, ³*J*_{CP} = 2,5 Hz, -O-CH-(CH₃)₂); 32,9 (d, ²*J*_{CP} = 12,3 Hz, CH₃-N-P_{1,2,3}), 38,4 (t, ¹*J*_{CP} = 132,3 Hz, -CH-(P(O)(OiPr)₂)₂); 38,9 (s, N-N(CH₃)-CH₂-); 55,2 (s, -CH₂-CH-(P(O)(OiPr)₂)₂); 70,9 (d, ²*J*_{CP} = 6,9 Hz, -O-CH-(CH₃)₂); 71,3 (d, ²*J*_{CP} = 6,9 Hz, -O-CH-(CH₃)₂); 121,4 (s, C₃²); 121,8 (s large, C₀², C₁², C₂²); 126,4 (s, C₃³); 128,3 (s large, C₀³, C₁³, C₂³); 129,6 (s, CH=N-N(Me)-CH₂); 131,3 (s, C₀⁴); 132,4 (s large, C₁⁴, C₂⁴); 134,5 (s, C₃⁴); 138,7 (s large, CH=N-N(Me)-P_{1,2,3}); 149,5 (d, ²*J*_{CP} = 8,1 Hz, C₃¹); 151,2 (s large, C₀¹, C₁¹, C₂¹) ppm.

### Exemple 4 : Synthèse du phénol aza-bis-diméthyl-phosphonate

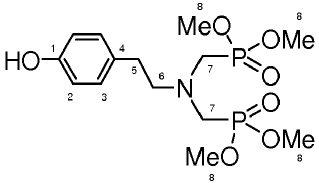

On mélange à 0°C la tyramine (6g, 43,7 mmol) et le diméthyl-phosphite (10,32 ml, 112,5 mmol), puis on additionne lentement toujours à 0°C une solution de formaldéhyde à 37% dans l'eau (12,6 ml). L'ensemble est mis à température ambiante pendant 30 minutes et à reflux 1 heure avec une agitation magnétique. Enfin le brut réactionnel est mis sous pression réduite de manière à évaporer l'excès de formaldéhyde. Le produit est extrait avec un mélange chloroforme/eau (3x100 ml de chloroforme) puis chromatographié sur silice en utilisant l'acétone comme éluant. Le produit final est isolé avec un rendement de 65%.
RMN ³¹P-{¹H} (CDCl₃) : δ = 30,2 (s, P(O)(OMe)₂) ppm.
RMN ¹H (CDCl₃) : δ = 2,68 (t déformé, ³*J*_{HH} = 7,2 Hz, 2H, -CH₂-CH₂-N); 3,05 (t déformé, ³*J*_{HH} = 7,2 Hz, 2H, -CH₂-CH₂-N-); 3,20 (d, ²*J*_{HP} = 8,9 Hz, 4H, N-CH₂-P); 3,75 (d, ³*J*_{HP}= 10,7 Hz, 12H, -OMe); 6,6-7,1 (m, 4H, CHₐᵣₒₘ); 8,16 (s large, 1H,-OH) ppm.
RMN ¹³C-{¹H} (CDCl₃) : δ = 32,7 (s, C₅); 49,4 (dd, ³*J*_{CP} = 6,8 Hz, ¹*J*_{CP} = 158,5 Hz, C₇); 52,8 (d, ²*J*_{CP} = 3 Hz, C₈); 58,8 (t, ³*J*_{CP} = 7,5 Hz, C₆); 115,4 (s, C₃); 129,8 (s, C₂); 129,8 (s, C₄); 155,9 (s, C₁) ppm.

### Exemple 5 : Synthèse du phénol aza-bis-diméthyl-phosphonate

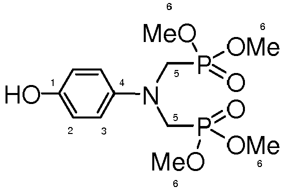

On mélange à 0°C la phénol-amine (5g, 46 mmol) et le diméthyl-phosphite (10,5 ml, 115 mmol), puis on additionne lentement toujours à 0°C une solution de formaldéhyde à 37% dans l'eau (10,6 ml). L'ensemble est mis à température ambiante pendant 30 minutes et à reflux 1 heure avec une agitation magnétique. Enfin le brut réactionnel est mis sous pression réduite de manière à évaporer l'excès de formaldéhyde. Le produit est extrait avec un mélange chloroforme/eau (3x100 ml de chloroforme) puis chromatographié sur silice en utilisant l'acétone comme éluant. Le produit final est isolé avec un rendement de 30%.
RMN ³¹P-{¹H} (CDCl₃) : δ = 29,8 (s, P(O)(OMe)₂) ppm.
RMN ¹H (CDCl₃) : δ = 3,67 (d, ³*J*_{HP} = 10,6 Hz, 12H, -OMe); 3,84 (d, ²*J*_{HP} = 5,7 Hz, 4H, N-CH₂-P); 6,6-6,9 (m, CHₐᵣₒₘ, 4H); 8,05 (s large, 1 H, -OH) ppm.
RMN ¹³C-{¹H} (CDCl₃) : δ = 47,6 (d, ¹*J*_{CP} = 157,1 Hz, C₅); 52,6 (d, ²*J*_{CP} = 3,8 Hz, C₆); 52,7 (d, ²*J*_{CP} = 3,3 Hz, C₆); 115,8 (s, C₃); 117,3 (s, C₂); 141,0 (s, C₄); 150,9 (s, C₁) ppm.

### Exemple 6 : Synthèse du dendrimère à surface aza-bis-diméthyl-phosphonate de première génération :

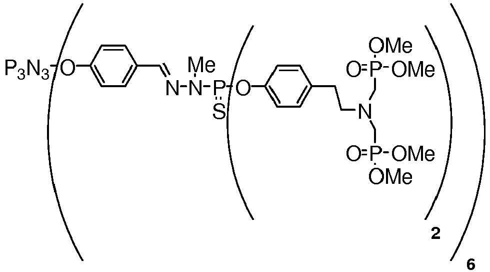

A une solution de dendrimère de Gc₁ (0,273 mmol, 500 mg) en solution dans du THF anhydre (10 mL) est additionné du carbonate de césium (6, 898 mmol, 2,25 g) puis le phénol aza-bis-diméthyl-phosphonate est ajouté (3,449 mmol, 1,31 g). On laisse le mélange sous agitation pendant 24 heures à température ambiante puis on filtre le mélange final avec du THF de manière à séparer les sels. Enfin le produit final est lavé par précipitation dans du pentane.
RMN ³¹P-{¹H} (CDCl₃) : δ = 68,7 (s, P₁); 31,9 (s, P(O)(OMe)₂); 13,7 (s, P₀) ppm. RMN ¹H (CDCl₃) : δ = 2,69 (t, ³*J*_{HH} = 6,8 Hz, 24H, CH₂-CH₂-N); 2,99 (t, ³*J*_{HH} = 6,8 Hz, 24H, CH₂-CH₂-N); 3,13 (d, ²*J*_{HP} = 9,17 Hz, 48H, -CH₂-P(O)(OCH₃)₂); 3,2 (d, ³*J*_{HP} = 11,8 Hz, 18H, CH₃-N-P₁); 3,67 (d, ³*J*_{HP} = 10,2 Hz, 144H, -P(O)(O-CH₃)₂); 6,8-7,8 (m, 78H, CHₐᵣₒₘ, CH=N) ppm.
RMN ¹³C-{¹H} (CDCl₃) : δ = 32,9 (d, ²*J*_{CP} = 11 Hz, CH₃-N-P₁); 32,95 (s, CH₂-CH₂-N) 49,5 (dd, ¹*J*_{CP} = 157,5 Hz, ³*J*_{CP} = 6,8 Hz -CH₂-P(O)(OCH₃)₂); 52,6 (d, ²*J*_{CP} = 4,0 Hz, -P(O)(O-CH₃)₂); 57,8 (t, ³*J*_{CP} = 7,2 Hz, CH₂-CH₂-N); 120,8 (s, C₀²); 120,8 (d, ³*J*_{CP} = 4,1 Hz, C₁²); 128,3 (s, C₀³); 129,6 (s, C₁³); 131,9 (s, C₀⁴); 136,3 (s, C₁⁴); 138,4 (d, ³*J*_{CP} = 14,1 Hz, CH=N); 148,5 (d, ²*J*_{CP} = 7,0 Hz, C₁¹); 150,8 (d, ²*J*_{CP} = 3,0 Hz, C₀¹) ppm.
Rendement : [70%].

### Exemple 7 : Synthèse du dendrimère à surface aza-bis-diméthyl-phosphonate de deuxième génération

A une solution de dendrimère Gc₂ (0,104 mmol, 500 mg) en solution dans du THF anhydre (10 mL) est additionné du carbonate de césium (5,28 mmol, 1,72 g) puis le phénol aza-bis-diméthyl-phosphonate est ajouté (2,6 mmol, 1,00 g). On laisse le mélange sous agitation pendant 24 heures à température ambiante puis on filtre le mélange final avec du THF de manière à séparer les sels. Enfin le produit final est lavé par précipitation dans du pentane.

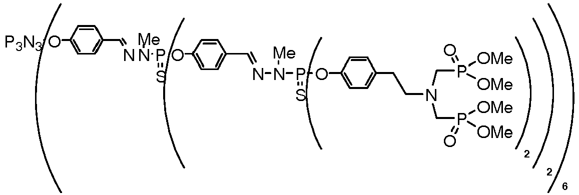

Rendement final : 78%.
RMN ³¹P-{¹H} (CDCl₃) : δ = 66,5 (s, P₂); 66,2 (s, P₁); 30,1 (s, P(O)(OMe)₂); 12,1 (s, P₀) ppm.
RMN ¹H (CDCl₃) : δ = 2,69 (s large, 48H, CH₂-CH₂-N); 2,99 (s large, 48H, CH₂-CH₂-N); 3,12 (d, ²*J*_{HP} = 9,51 Hz, 96H, -CH₂-P(O)(OCH₃)₂); 3,24 (d, ³*J*_{HP} = 8,5 Hz, 54H, CH₃-N-P); 3,66 (d, ³*J*_{HP} = 10,4 Hz, 288H, -P(O)(O-CH₃)₂); 6,6-7,7 (m, 186H, CHₐᵣₒₘ, CH=N) ppm.
RMN ¹³C-{¹H} (CDCl₃) : δ = 32,95 (s, CH₂-CH₂-N); 33,0 (d, ²*J*_{CP} = 11,2 Hz, CH₃-N-P); 49,4 (dd, ¹*J*_{CP} = 157,5 Hz, ³*J*_{CP} = 6,6 Hz -CH₂-P(O)(OCH₃)₂); 52,7 (d, ²*J*_{CP} = 4,2 Hz, -P(O)(O-CH₃)₂); 58,0 (t, ³*J*_{CP} = 7,1 Hz, CH₂-CH₂-N); 121,2 (s, C₀²); 121,7 (s, C₁²); 121,2 (d, ³*J*_{CP} = 3,9 Hz, C₂²) 128,3 (s, C₁³); 129,65 (s, C₀³); 129,9 (s, C₂³); 132,1 (s, C₀⁴); 132,4 (s, C₁⁴); 136,5 (s, C₂⁴); 138,6 (d, ³*J*_{CP} = 13,3 Hz, CH=N); 148,8 (s, C₀¹); 148,9 (d, ²*J*_{CP} = 7,5 Hz, C₂¹); 151,2 (d, ²*J*_{CP} = 7,4 Hz, C₁¹) ppm.

### Exemple 8 : Synthèse du dendrimère à surface aza-bis-diméthyl-phosphonate de troisième generation

A une solution de dendrimère Gc₃ (9,3.10⁻³ mmol, 100 mg) en solution dans du THF anhydre (2 mL) est additionné du carbonate de césium (0,941 mmol, 0,306 g) puis le phénol aza-bis-diméthyl-phosphonate est ajouté (0,471 mmol, 180 mg). On laisse le mélange sous agitation pendant 24 heures à température ambiante puis on filtre le mélange final avec du THF de manière à séparer les sels. Enfin le produit final est lavé par précipitation dans du pentane.

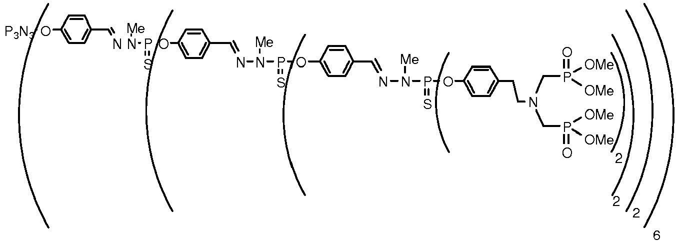

Rendement final : 80%.
RMN ³¹P-{¹H} (CDCl₃) : δ = 66,6 (s, P₃); 66,3 (s, P₂); 65,8 (s, P₁); 30,2 (s, P(O)(OMe)₂); 12,0 (s, P₀) ppm.
RMN ¹H (CDCl₃) : δ = 2,67 (s large, 96H, CH₂-CH₂-N); 2,97 (s large, 96H, CH₂-CH₂-N); 3,10 (d, ²*J*_{HP} = 9,60 Hz, 192H, -CH₂-P(O)(OCH₃)₂); 3,25 (s large, 126H, CH₃-N-P); 3,63 (d, ³*J*_{HP} = 10,25 Hz, 576H, -P(O)(O-CH₃)₂); 6,5-7,7 (m, 402H, CHₐᵣₒₘ, CH=N) ppm.
RMN ¹³C-{¹H} (CDCl₃) : δ = 32,9 (s, CH₂-CH₂-N); 32,9 (s, CH₃-N-P); 49,3 (dd, ¹*J*_{CP} = 157,5 Hz, ³*J*_{CP} = 6,5 Hz -CH₂-P(O)(OCH₃)₂); 52,6 (d, ²*J*_{CP} = 3,6 Hz, - P(O)(O-CH₃)₂); 58,0 (t, ³*J*_{CP} = 6,9 Hz, CH₂-CH₂-N); 120,5 (s, C₀²); 121,2 (d, ³*J*_{CP} = 3,1 Hz, C₃²); 121,5 (s, C₁²); 121,8 (s, C₂²); 128,2 (s, C₀³); 128,2 (s, C₁³); 129,6 (s, C₂³); 129,9 (s, C₃³); 132,3 (s, C₀⁴); 132,3 (s, C₁⁴); 132,3 (s, C₂⁴); 136,5 (s, C₃⁴); 138,6 (d, ³*J*_{CP} = 13,0 Hz, CH=N); 148,9 (d large, ²*J*_{CP} = 6,3 Hz, C₀¹, C₁¹, C₃¹); 151,2 (d, ²*J*_{CP} = 6,1 Hz, C₂¹) ppm.

### Exemple 9 : Synthèse du dendrimère à surface aza-bis-phosphonique de première génération

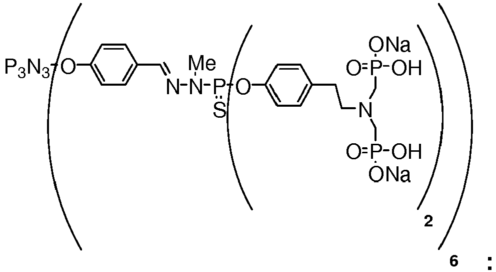

A une solution de dendrimère de première génération à extrémités aza-bis-diméthyl-phosphonate (1,68.10⁻² mmol, 100 mg) à 0°C dans de l'acétonitrile (5 mL) on additionne lentement du bromotriméthylsilane (1,04 mmol. 138 µl). Une fois l'addition terminée on laisse le mélange revenir à température ambiante pendant 12 heures. Le mélange est alors évaporé à sec puis on additionne 1 ml de méthanol anhydre à température ambiante et on laisse le mélange une heure sous agitation. Après évaporation à sec, le résidu est lavé plusieurs fois à l'éther pur. Le produit étant totalement insoluble dans les solvants organiques il est transformé en son mono sel de sodium en présence de soude (36,3 mg de soude, pour 100 mg de dendrimère). La solution résultante est lyophilisée pour donner le dendrimère sous forme d'une poudre blanche. Le produit final est isolé avec un rendement final de 58%. Rendement final : 50%.
RMN ³¹P-{¹H} (CD₃CN/D₂O) : δ = 67,9 (s, P₁); 14,4 (s, P(O)(ONa)₂); 12,9 (s, P₀) ppm.
RMN ¹³C-{¹H} (CD₃CN/D₂O) : δ = 31,95 (s, CH₂-CH₂-N); 35,5 (d, ²*J*_{CP} = 10,9 Hz, CH₃-N-P₁); 57,0 (d, ¹*J*_{CP} = 136,8 Hz, -CH₂-P(O)(OH)₂); 60,7 (s, CH₂-CH₂-N); 124,1 (s, C₀²); 124,1 (s, C₁²); 131,3 (s, C₀³); 133,5 (s, C₁³); 135,3 (s, C₀⁴); 139,0 (s, C₁⁴); 143,2 (s large, CH=N); 151,7 (d, ²*J*_{CP} = 7,0 Hz, C₁¹); 153,3 (s, C₀¹) ppm.

### Exemple 10 : Synthèse du dendrimère à surface aza-bis-phosphonique de deuxième génération

A une solution de dendrimère de deuxième génération à extrémités aza-bis-diméthyl-phosphonate (8,27.10⁻² mmol, 1,08 g) à 0°C dans de l'acétonitrile (10 mL) on additionne lentement du bromotriméthylsilane (10 mmol. 1,34 ml). Une fois l'addition terminée on laisse le mélange revenir à température ambiante pendant 12 heures. Le mélange est alors évaporé à sec puis on additionne 3 ml de méthanol anhydre à température ambiante et on laisse le mélange une heure sous agitation. Après évaporation à sec, le résidu est lavé plusieurs fois à l'éther pur. Le produit étant totalement insoluble dans les solvants organiques il est transformé en son mono sel de sodium en présence de soude (8,2 mg de soude, pour 50 mg de dendrimère). La solution résultante est lyophilisée pour donner le dendrimère sous forme d'une poudre blanche. Le produit final est isolé avec un rendement final de 62%. 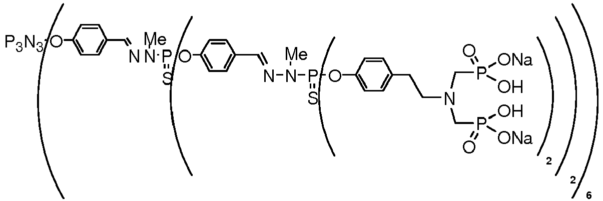 RMN ³¹P-{¹H} (CD₃CN/D₂O) : δ = 67,8 (s, P₂); 67,6 (s, P₁); 10,5 (s, P(O)(ONa)(OH)); 10,0 (s, P₀) ppm.
RMN ¹³C-{¹H} (CD₃CN/D₂O) : δ = 31,6 (s, CH₃-N-P₁); 35,3 (s, CH₂-CH₂-N); 55,2 (d, ¹*J*_{CP} = 128,2 Hz, -CH₂-P(O)(OH)₂); 60,4 (s, CH₂-CH₂-N); 124,3 (s, C₀²); 124,3 (s, C₁²); 124,3 (s, C₂²); 131,3 (s, C₀³); 131,3 (s, C₁³); 133,3 (s, C₂³); 135,0 (s, C₀⁴); 135,0 (s, C₁⁴); 136,0 (s, C₂⁴); 142,5 (s large, CH=N); 151,8 (s large, C₂¹); 153,3 (s large, C₁¹); 153,3 (s, C₀¹) ppm.

Les dendrimères à surface aza-bis-phosphonique ne peuvent pas être préparés par application ou adaptationde la méthode ci-dessus à partir des dendrimères à surface tétraisopropyl-gem-diphosphonate des exemples 1 à 3. Les dendrimères à surface aza-bis-phosphonique peuvent être préparés par application ou adaptationde la méthode ci-dessus à partir des dendrimères à surface aza-bis-diméthyl-phosphonate des exemples 11 et 12 suivants :

### Exemple 11 : Synthèse du dendrimère à surface aza-bis-diméthyl-phosphonate de première génération

A une solution de dendrimère Gc₁ (0,116 mmol, 214 mg) en solution dans du THF anhydre (10 mL) est additionné du carbonate de césium (2,94 mmol, 955 mg) puis le phénol est ajouté (1,47 mmol, 520 mg). On laisse le mélange sous agitation pendant 24 heures à température ambiante puis on filtre le mélange final avec du THF de manière à séparer les sels. Enfin le produit final est lavé à l'éther puis par précipitation dans du pentane. Le produit final est isolé avec un rendement final de 76%. 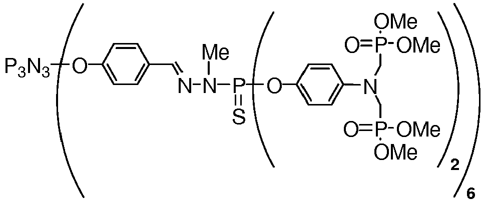 RMN ³¹P-{¹H} (C₆D₆/THF) : δ = 67,9 (s, P₁); 29,3 (s, P(O)(OMe)₂); 12,3 (s, P₀) ppm.
RMN ¹H (CDCl₃) : δ = ppm.
RMN ¹³C-{¹H} (CDCl₃) : δ = 33,0 (d, ²*J*_{CP} = 11,8 Hz, CH₃-N-P₁); 46,4 (d, ¹*J*_{CP} = 158,3 Hz, -CH₂-P(O)(OCH₃)₂); 52,6 (d, ²*J*_{CP} = 3,7 Hz, -P(O)(O-CH₃)₂); 52,7 (d, ²*J*_{CP} = 3,9 Hz, -P(O)(O-CH₃)₂); 114,4 (s, C₁²); 121,2 (s, C₀²); 122,0 (s, C₁³); 128,3 (s, C₀³); 132,2 (s, C₀⁴); 138,5 (d, ³*J*_{CP} = 14,1 Hz, CH=N); 142,9 (d, ³*J*_{CP} = 6,5 Hz, C₁⁴); 145,1 (s, C₁¹); 151,1 (s large, C₀¹) ppm.

### Exemple 12 : Synthèse du dendrimère à surface aza-bis-diméthyl-phosphonate de deuxième génération

A une solution de dendrimère Gc₂ (4,2.10⁻² mmol, 200 mg) en solution dans du THF anhydre (5 mL) est additionné du carbonate de césium (2,00 mmol, 652 mg) puis le phénol est ajouté (1,05 mmol, 372 mg). On laisse le mélange sous agitation pendant 24 heures à température ambiante puis on filtre le mélange final avec du THF de manière à séparer les sels. Enfin le produit final est lavé à l'éther puis par précipitation dans du pentane. Le produit final est isolé avec un rendement final de 81 %. 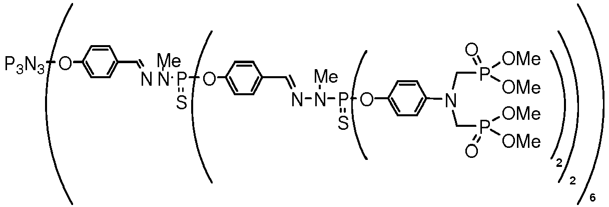 RMN ³¹P-{¹H} (CDCl₃) : δ = 68,1 (s, P₁); 66,2 (s, P₁); 29,2 (s, P(O)(OMe)₂); 11,7 (s, P₀) ppm.
RMN ¹H (CDCl₃) : 3,25 (d, ³*J*_{HP} = 10,2 Hz, 54H, CH₃-N-P₁, CH₃-N-P₂); 3,65 (d, ³*J*_{HP} = 10,3 Hz, 288H, -P(O)(O-CH3)₂); 3,88 (d, ²*J*_{HP} = 4,7 Hz, 96H, -CH₂-P(O)(OCH₃)₂); 6,7-7,8 (m, 186H, CHₐᵣₒₘ, CH=N) ppm.
RMN ¹³C-{¹H} (CDCl₃) : δ = 32,9 (d large, ²*J*_{CP} = 11,7 Hz, CH₃-N-P₁, CH₃-N-P₂); 46,3 (d, ¹*J*_{CP} = 158,5 Hz, -CH₂-P(O)(OCH₃)₂); 52,6 (s large, -P(O)(O-CH₃)₂); 114,3 (s large, C₀², C₁², C₂²); 121,8 (s, C₂³); 128,1 (s, C₁³); 131,3 (s, C₀³); 131,7 (s, C₀⁴); 132,1 (s, C₁⁴); 138,4 (s large, CH=N); 142,6 (d, ³*J*_{CP} = 6,8 Hz, C₂⁴); 145,0 (s, C₂¹); 151,0 (s large, C₀¹, C₁¹) ppm.

### Exemple 12a : Synthèse du dendrimère à surface aza-bis-diméthyl-phosphonate de génération zéro :

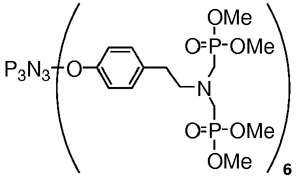

A une solution d'hexachlorocyclotriphosphazène (2,4 mmol, 834 mg) en solution dans du THF anhydre (5 mL) est additionné du carbonate de césium (31,2 mmol, 10,16 g) puis le phénol aza-bis-diméthyl-phosphonate est ajouté (15,6 mmol, 5,96 g). On laisse le mélange sous argon et avec une agitation magnétique pendant 3 jours à température ambiante. Le produit isolé peut contenir [0-5%] de phénol aza-bis-diméthyl-phosphonate en excès. Le produit final est isolé avec un rendement de 85%.
RMN ³¹P-{¹H} (CDCl₃) : δ = 30,2 (s, P(O)(OMe)₂); 12,9 (s, P₀) ppm.
RMN ¹H (CDCl₃) : δ = 2,72 (t déformé, ³*J*_{HH} = 8,4 Hz, 2H, -CH₂-CH₂-N); 3,00 (t déformé, ³*J*_{HH} = 8,2 Hz, 2H, -CH₂-CH₂-N-); 3,18 (d, ²*J*_{HP} = 8,9 Hz, 4H, N-CH₂-P); 3,70 (d, ³*J*_{HP} = 7,8 Hz, 12H, -OMe); 6,7-7,2 (m, 4H, CHₐᵣₒₘ) ppm.
RMN ¹³C-{¹H} (CDCl₃) : δ = 32,90 (s, CH₂-CH₂-N); 49,4 (dd, ¹*J*_{CP} = 157,3 Hz, ³*J*_{CP} = 6,6 Hz -CH₂-P(O)(OCH₃)₂); 52,6 (d, ²*J*_{CP} = 3,0 Hz, -P(O)(O-CH₃)₂); 58,3 (t, ³*J*_{CP} = 7,8 Hz, CH₂-CH₂-N); 120,7 (s, C₀²); 129,7 (s, C₀³); 135,9 (s, C₀⁴); 149,0 (d, ²*J*_{CP} = 3,9 Hz, C₀¹) ppm.

### Exemple 13 : Synthèse du dendrimère à surface aza-bis-diméthyl-phosphonate de génération zéro :

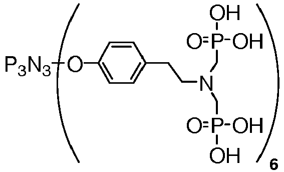

A une solution de dendrimère de génération zéro à extrémités aza-bis-diméthyl-phosphonate (4,9 mmol, 11,84 g) à 0°C dans de l'acétonitrile (5 mL) on additionne lentement du bromotriméthylsilane (165 mmol. 22 ml). Une fois l'addition terminée on laisse le mélange revenir à température ambiante pendant 24 heures. Le mélange est alors évaporé à sec puis on additionne lentement 5 ml d'eau à température ambiante et on laisse le mélange une heure sous agitation. Après filtration, le résidu est lavé plusieurs fois à l'éther pur. Le produit final est isolé avec un rendement final de 50%.
RMN ³¹ P-{¹H} (D₂0) : δ = 12,9 (s, P₀); 11,4 (s, P(O)(OH)₂) ppm.
RMN ¹³C-{¹H} (D₂0) : δ = 31,40 (s, CH₂-CH₂-N); 53,9 (d, ¹*J*_{CP} = 140,07 Hz, -CH₂-P(O)(OH)₂); 59,7 (s, CH₂-CH₂-N); 123,9 (s, C₀²); 132,9 (s, C₀³); 135,7 (s, C₀⁴); 151,4 (s large, C₀¹) ppm.

### Exemple 14 : synthèse de dendrimères à coeur cyclotriphosphazene dérivant de l'amino-méthyl bis-phosphonate

### a) Synthèse de l'imine dérivée de la méthylamine

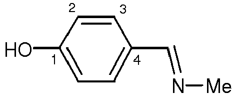

La méthylamine (25 mmol, 3mL) en solution à 33% dans l'éthanol absolu (8 mol.L⁻¹) ainsi que le 4-hydroxybenzaldéhyde (20 mmol, 2,5 g) sont mélangés sans solvant à température ambiante. Le mélange est laissé sous agitation magnétique pendant 24 heures à température ambiante. L'éthanol est évaporé sous pression réduite pour obtenir une huile qui est dissoute dans un minimum d'éther puis précipitée dans du pentane. Cette imine n'a pas été isolée car elle est directement utilisée dans l'étape suivante.

### b) Synthèse de l'amino-méthyl mono-phosphonate

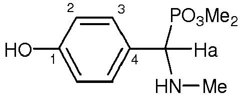

Le phénol porteur de la fonction imine de l'étape (a) (17,0 mmol, 2,3g) est mélangé sans solvant et à température ambiante avec quelques gouttes de triéthylamine ainsi que du diméthylphosphite (18,7 mmol, 1,7 ml). Le mélange est laissé pendant 12 heures à température ambiante puis il est évaporé à sec. La poudre obtenue est mise en solution dans l'acétone puis passée sur un « patch » de silice. Enfin l'éluant est évaporé pour obtenir le produit final avec un rendement de 68%.
RMN ³¹P-{¹H} (CDCl₃) : δ = 29,6 (s, P(O)(OMe)₂) ppm.
RMN ¹H (CDCl₃) : δ = 2,29 (s, 3H, N-CH₃); 3,54 (d, ³*J*_{Hp} = Hz, 3H, -OMe); 3,72 (d, 3H, ³*J*_{HP} = Hz, 3H, -OMe); 3,84 (d, ²*J*_{HP} = 23,9 Hz, 1 H, H); 6,73 (d, ³*J*_{HH} = Hz, CHₐᵣₒₘ, 2H); 7,14 (dd, CHₐᵣₒₘ, 2H) ppm.
RMN ¹³C-{¹H} (CDCl₃) : δ = 43,3 (t, ³*J*_{CP} = 6,8 Hz, N-Me); 53,6 (d, ²*J*_{CP} = 7,7 Hz, OMe); 54,1 (d, ²*J*_{CP} = 6,4 Hz, OMe); 63,2 (dd, ¹*J*_{CP} = 159,6 Hz, ³*J*_{CP} = 14,5 Hz, CH); 115,6 (s, C₂); 121,1 (d, ²*J*_{CP} = 3,8 Hz, C₄); 132,0 (d, ³*J*_{CP} = 8,9 Hz, C₃); 157,1 (s, C₁) ppm.

### c) Synthèse de l'amino-méthyl bis-phosphonate

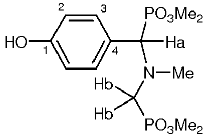

L'amine secondaire de l'étape (b) (6,1 mmol, 1,5 g) est mise en solution à température ambiante dans le formaldéhyde en solution aqueuse 37 % (12,2 mmol, 1 ml) et le diméthylphosphite (24,4 mmol, 2,24 mL) sans solvant. Le mélange est laissé sous agitation magnétique et à température ambiante pendant 12 heures. Puis le mélange final est lavé plusieurs fois avec un mélange éther/pentane 1/1. Enfin le produit est purifié par chromatographie sur gel de silice en utilisant l'acétate d'éthyle comme solvant (Rf=0,35), le produit final est isolé avec un rendement de 65%.
RMN ³¹P-{¹H} (CDCl₃) : δ = 28,1 (s, P(O)(OMe)₂); 30.9 (s, P(O)(OMe)₂) ppm.
RMN ¹H (CDCl₃) : δ = 2,41 (s, 3H, N-CH₃); 2,61 (dd, ²*J*_{HP} = 6,3 Hz, ²*J*_{HH} = 15,3 Hz, 1 H, Hb); 3,12 (dd, ²*J*_{HP} = 15,6 Hz, ²J_{HH} = 15,6 Hz, 1 H, Hb); 3,30-3.80 (m, 12H, -OMe); 4.05 (d, ²*J*_{HP} = 23.9 Hz, 1 H, Ha); 6.74 (d, ³*J*_{HH} = 7,84 Hz, CHₐᵣₒₘ, 2H); 7,17 (d, ³*J*_{HH} = 7,85 Hz, CHₐᵣₒₘ, 2H); 9,08 (s large, 1 H, -OH) ppm.
RMN ¹³C-{¹H} (CDCl₃) : δ = 42,3 (t, ³*J*_{CP} = 6,3 Hz, N-Me); 49,2 (dd, ¹*J*_{CP} = 164,1 Hz, ³*J*_{CP} = 10,1 Hz, CH₂); 53,0 (m, OMe); 65,2 (dd, ¹*J*_{CP} = 161,7 Hz, ³*J*_{CP} = 13,5 Hz, CH); 115,4 (s, C₂); 120,9 (d, ²*J*_{CP} = 3,5 Hz, C₄); 131,8 (d, ³*J*_{CP} = 9,1 Hz, C₃); 157,8 (s, C₁) ppm.

### d) Synthèse du dendrimère de première génération dérivant de l'amino-méthyl bis-phosphonate

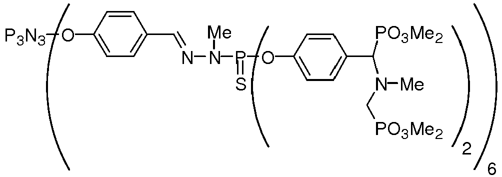

A une solution de dendrimère G_{C1} (0,047 mmol, 87 mg) dans du THF anhydre (2 mL) est additionné du carbonate de césium (1,2 mmol, 390 mg) puis le phénol aza-bis-diméthyl-phosphonate dérivé de la méthylamine de l'étape (c) est ajouté (0,6 mmol, 220 mg). On laisse le mélange sous agitation pendant 24 heures à température ambiante puis on filtre sur célite et on centrifuge le mélange final de manière à séparer les sels. Enfin le produit final est lavé par précipitation dans du pentane et isolé avec un rendement de 75%.
RMN ³¹ P-{¹H} (CDCl₃) : δ = 65,4 (s, P₁); 30,4 (s, P(O)(OMe)₂); 27,5 (s, P(O)(OMe)₂); 11,4 (s, P₀) ppm.
RMN ¹H (CDCl₃) : δ = 2,46 (s, 36H, N-CH₃); 2,65 (dd, ²*J*_{HP} = 7,4 Hz, ²*J*_{HH} = 15,3 Hz, 12H, CH₂); 3,12 (dd, ²*J*_{HP} = 15,5 Hz, ²*J*_{HH} = 15,5 Hz, 12H, CH₂); 3,25 (d, ³*J*_{HP} = 10,1 Hz, 18H, CH₃-N-P₁); 3,30-3.90 (m, 144H, -OMe); 4.2 (d, ²*J*_{HP} = 23.4 Hz, 12H, CH); 6,7-7,6 (m, 78H, CHₐᵣₒₘ, CH=N) ppm.
RMN ¹³C-{¹H} (CDCl₃) : δ = 32,8 (d, ²*J*_{CP} = 12,3 Hz, CH₃-N-P₁); 42,2 (t, ³*J*_{CP} = 6,8 Hz, N-Me); 49,3 (dd, ¹*J*_{CP} = 164,0 Hz, ³*J*_{CP} = 9,9 Hz, CH₂); 52,3-53,7 (m, OMe); 64,9 (dd, ¹*J*_{CP} = 138,1 Hz, ³*J*_{CP} = 11,9 Hz, CH); 121,1 (s large, C₀², C₁²); 128,2 (s, C₀³); 128,4 (d, ²*J*_{CP} = 3,1 Hz, C₁⁴); 131,8 (s, C₀⁴); 131,8 (d, ³*J*_{CP}= 8,2 Hz, C₁³); 139,0 (d, ³*J*_{CP} = 14,5 Hz, CH=N); 150,6 (d, ²*J*_{CP} = 6,9 Hz, C₁¹); 151,2 (s, C₀¹) ppm.

### e) Synthèse du dendrimère de deuxième génération dérivant de l'amino-méthyl bis-phosphonate

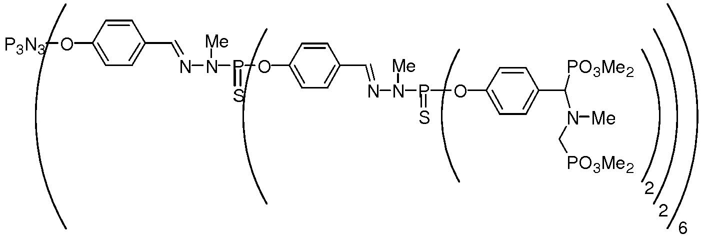

A une solution de dendrimère Gc₂ (0,024 mmol, 119 mg) dans du THF anhydre (2 mL) est additionné du carbonate de césium (1,3 mmol, 407 mg) puis le phénol aza-bis-diméthyl-phosphonate dérivé de la méthylamine de l'étape (c) est ajouté (0,67 mmol, 230 mg). On laisse le mélange sous agitation pendant 24 heures à température ambiante puis on filtre sur célite et on centrifuge le mélange final de manière à séparer les sels. Enfin le produit final est lavé par précipitation dans du pentane et isolé avec un rendement de 80%.
RMN ³¹P-{¹H} (CDCl₃) : δ = 66,1 (s, P₁); 65,4 (s, P₂); 30,4 (s, P(O)(OMe)₂); 27,5 (s, P(O)(OMe)₂); 11,6 (s, P₀) ppm.
RMN ¹H (CDCl₃) : δ = 2,48 (s, 72H, N-CH₃); 2,67 (dd, ²*J*_{HP} = 7,1 Hz, ²*J*_{HH} = 15,3 Hz, 24H, CH₂); 3,14 (dd, ²*J*_{HP} = 15,4 Hz, ²*J*_{HH} = 15,4 Hz, 24H, CH₂); 3,31 (d, ³*J*_{HP} = 10,9 Hz, 54H, CH₃-N-P₁, CH₃-N-P₂); 3,30-3.90 (m, 288H, -OMe); 4.2 (d, ²*J*_{HP} = 23.2 Hz, 24H, CH); 7,0-7,7 (m, 186H, CHₐᵣₒₘ, CH=N) ppm.
RMN ¹³C-{¹H} (CDCl₃) : δ = 32,9 (d, ²*J*_{CP}= 12,4 Hz, CH₃-N-P₁, CH₃-N-P₂); 42,3 (t, ³*J*_{CP} = 7,0 Hz, N-Me); 49,5 (d, ¹*J*_{CP} = 163,7 Hz, ³*J*_{CP} = 9,8 Hz, CH₂); 52,4-53,6 (m, OMe); 64,9 (dd, ¹*J*_{CP} = 160,2 Hz, ³*J*_{CP} = 12,1 Hz, CH); 121,17 (s, C₂²); 121,24 (s, C₁²); 121,8 (s, C₀²); 128,3 (s large, C₂⁴); 128,5 (s large, C₀³, C₁³); 131,8 (d large, ³*J*_{CP} = 8,2 Hz, C₁⁴, C₂³); 132,3 (s large, C₀⁴); 138,9 (d, ³*J*_{CP} = 13,8 Hz, CH=N); 150,7 (d large, ²*J*_{CP} = 7,2 Hz, C₂¹); 151,2 (s large, C₀¹, C₁¹) ppm.

### f) Synthèse du dendrimère de quatrième génération dérivant de l'amino-méthyl bisphosphonate

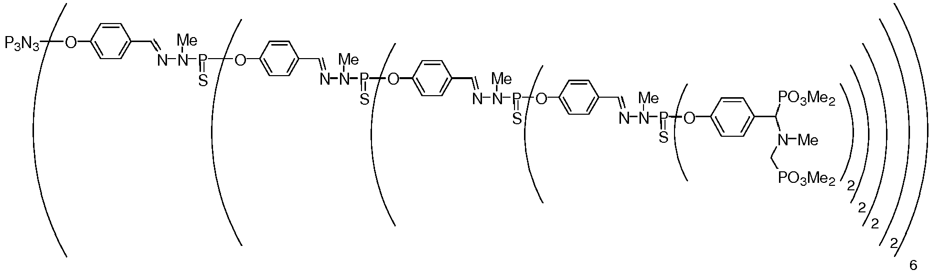

A une solution de dendrimère Gc₄ (3,5.10⁻³ mmol, 79,2 mg) dans du THF anhydre (2 mL) est additionné du carbonate de césium (0,71 mmol, 230 mg) puis le phénol aza-bis-diméthyl-phosphonate dérivé de la méthylamine de l'étape (c) est ajouté (0,35 mmol, 130 mg). On laisse le mélange sous agitation pendant 48 heures à température ambiante puis on filtre sur célite et on centrifuge le mélange final de manière à séparer les sels. Enfin le produit final est lavé par précipitation dans du pentane et isolé avec un rendement de 84%.
RMN ³¹P-{¹H} (CDCl₃) : δ = 66,1 (s large, P₁, P₂, P₃); 65,4 (s, P₄); 30,1 (s, P(O)(OMe)₂); 27,6 (s, P(O)(OMe)₂); 11,6 (s, P₀) ppm.
RMN ¹H (CDCl₃) : δ = 2,48 (s, 288H, N-CH₃); 2,65 (dd, ²*J*_{HP} = 7,2 Hz, ²*J*_{HH} = 15,3 Hz, 96H, CH₂); 3,13 (dd, ²*J*_{HP} = 15,2 Hz, ²*J*_{HH} = 15,2 Hz, 96H, CH₂); 3,27 (s large, 270H, CH₃-N-P₁, CH₃-N-P₂, CH₃-N-P₃, CH₃-N-P₄); 3,30-3.90 (m, 1152H,-OMe); 4.2 (d, ²*J*_{HP} = 23.3 Hz, 96H, CH); 7,0-7,7 (m, 834H, CHₐᵣₒₘ, CH=N) ppm. RMN ¹³C-{¹H} (CDCl₃) : δ = 32,9 (d, ²*J*_{CP} = 12,4 Hz, CH₃-N-P₁, CH₃-N-P₂, CH₃-N-P₃, CH₃-N-P₄); 42,3 (t, ³*J*_{CP} = 7,0 Hz, N-Me); 49,5 (dd, ¹*J*_{CP} = 163,8 Hz, ³*J*_{CP} = 9,9 Hz, CH₂); 52,4-53,9 (m, OMe); 65,1 (dd, ¹*J*_{CP} = 161,2 Hz, ³*J*_{CP} = 12,3 Hz, CH); 121,45 (s, C₃²); 122,1 (s large, C₂², C₁², C₀²); 128,5 (s large, C₀³ C₁³ C₂³); 128,7 (s large, C₃³); 132,1 (d large, ³*J*_{CP} = 8,2 Hz, C₃⁴, C₂⁴); 132,4 (s large, C₀⁴, C₁⁴); 139,2 (d, ³*J*_{CP} = 13,4 Hz, CH=N); 151,0 (d large, ²*J*_{CP} = 7,2 Hz, C₃¹); 151,6 (s large, C₂¹, C₁¹); 151,7 (s large, C₀¹) ppm.

### g) Synthèse du dendrimère de première génération dérivant de l'acide amino-méthyl bis-phosphonique

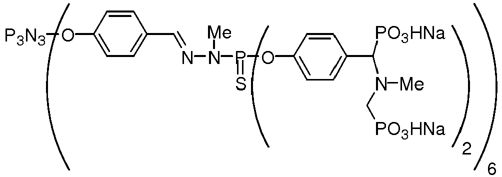

A une solution du dendrimère de première génération à extrémités aza-bis-diméthyl-phosphonate dérivé de la méthylamine de l'étape (d) (3,97.10⁻² mmol, 230 mg) à 0°C dans de l'acétonitrile (5 mL) on additionne lentement du bromotriméthylsilane (2,1 mmol; 280 µl). Une fois l'addition terminée on laisse le mélange revenir à température ambiante pendant 12 heures. Le mélange est alors évaporé à sec puis on additionne 1 ml de méthanol anhydre à température ambiante et on laisse le mélange une heure sous agitation. Après évaporation à sec, le résidu est lavé plusieurs fois à l'éther pur. Le produit étant totalement insoluble dans les solvants organiques il est transformé en son mono sel de sodium en présence de soude (3,1 ml d'une solution de soude, à 0,1955 mol.L⁻¹ pour 130 mg de dendrimère acide phosphonique). La solution résultante est lyophilisée pour donner le dendrimère sous forme d'une poudre blanche. Le produit final est isolé avec un rendement de 58%.
RMN ³¹P-{¹H} (CD₃CN/D₂O) : δ = 66,09 (s, P₁ et P₂); 14,1 (s, P₀); 11,2 (s, PO₃HNa) ppm.
RMN ¹H (CD₃CN/D₂O) : δ = 2,5-3,8 (m, 90H, CH₃-N-P, N-Me, CH₂, CH); 6,5-8,0 (m, 78H, CHₐᵣₒₘ, CH=N).
RMN ¹³C-{¹H} (CD₃CN/D₂O) : δ =35,5 (s large, CH₃-N-P₁); 44,8 (s large, N-Me); 54,5 (d, ¹*J*_{CP} = 132,5 Hz, CH₂); 70,5 (d, ¹*J*_{CP} = 129,4 Hz, CH); 124,4 (s large, C₀², C₁²); 130,4 (s large, C₀³, C₁³); 136,3 (s large, C₀⁴, C₁⁴); 142,9 (s large, CH=N); 153,9 (s large, C₀¹, C₁¹) ppm.

### h) Synthèse du dendrimère de deuxième génération dérivant de l'acide amino-méthyl bis-phosphonique

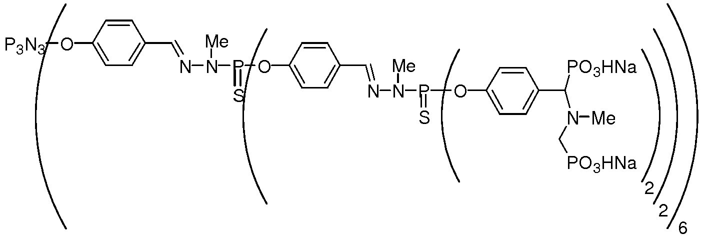

A une solution du dendrimère de deuxième génération à extrémités aza-bis-diméthyl-phosphonate dérivé de la méthylamine de l'étape (e) (1,49.10⁻² mmol, 190 mg) à 0°C dans de l'acétonitrile (5 mL) on additionne lentement du bromotriméthylsilane (1,6 mmol; 210 µl). Une fois l'addition terminée on laisse le mélange revenir à température ambiante pendant 12 heures. Le mélange est alors évaporé à sec puis on additionne 1 ml de méthanol anhydre à température ambiante et on laisse le mélange une heure sous agitation. Après évaporation à sec, le résidu est lavé plusieurs fois à l'éther pur. Le produit étant totalement insoluble dans les solvants organiques il est transformé en son mono sel de sodium en présence de soude (3,01 ml d'une solution de soude, à 0,1955 mol.L⁻¹ pour 140 mg de dendrimère acide phosphonique). La solution résultante est lyophilisée pour donner le dendrimère sous forme d'une poudre blanche. Le produit final est isolé avec un rendement de 54%.
RMN ³¹P-{¹H} (CD₃CN/D₂O) : δ = 66,7 (s, P₁); 14,4 (s, P₀) 10,8 (s, PO₃HNa) ppm.
RMN ¹H (CD₃CN/D₂O) : δ = 2,5-3,8 (m, 198H, CH₃-N-P₁, CH₃-N-P₂, N-Me, CH₂, CH); 6,5-8,0 (m, 186H, CHₐᵣₒₘ, CH=N).
RMN ¹³C-{¹H} (CD₃CN/D₂O) : δ = 35,5 (s large, CH₃-N-P₁, CH₃-N-P₂); 44,6 (s large, N-Me); 55,6 (d, ¹*J*_{CP} = 102,7 Hz, CH₂); 71,0 (d, ¹*J*_{CP} = 128,2 Hz, CH); 124,4 (s large, C₀², C₁², C₂²); 130,4 (s large, C₀³, C₁³, C₂³); 136,3 (s large, C₀⁴, C₁⁴, C₂⁴); 142,9 (s large, CH=N); 153,9 (s, C₀¹, C₁¹, C₂¹) ppm.

### Exemple 15 : synthèse de dendrimères à coeur cyclotriphosphazene à surface dérivant de l'amino-butyle bis-phosphonate

### a) Synthèse de l'imine dérivant de la butylamine

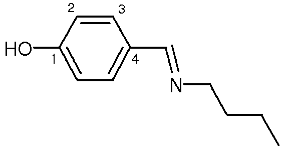

De la n-butylamine (43 mmol, 4,3mL) et du 4-hydroxybenzaldéhyde (41 mmol, 5 g) sont mélangés sans solvant et à température ambiante avec du tamis moléculaire 4À. Le mélange est laissé sous agitation magnétique pendant 24 heures puis il est repris avec du THF pour être filtré sur célite. Le THF est évaporé sous pression réduite pour obtenir une huile épaisse et sombre. Cette huile peut être dissoute dans un minimum d'éther et est précipité avec du pentane. On obtient ainsi une poudre légèrement rosée avec un rendement de 80%.
RMN ¹H (CDCl₃) : δ = 0,90 (t, ³*J*_{HH} = 7,6 Hz, 3H, -CH₃); 1,33 (m, 2H, CH₂-CH₂-CH₃); 1,66 (m, 2H, CH₂-CH₂-CH₃); 3,59 (t, ³*J*_{HH} = 7,4 Hz, 2H, N-CH₂-); 6.7 (d, ³*J*_{HH} = 8,4 Hz, CHₐᵣₒₘ, 2H); 7,5 (d, ³*J*_{HH} = 8,4 Hz, 2H, CHₐᵣₒₘ); 8,14 (s, 1H, CH=N); 8,81 (s large, 1 H, -OH) ppm.
RMN ¹³C-{¹H} (CDCl₃) : δ = 13,9 (s, CH₃); 20,3 (s, CH₂-CH₃); 32,7 (s, CH₂-CH₂-CH₃); 60,1 (s, N-CH₂-CH₂- CH₂-CH₃); 116,3 (s, C₂); 125,4 (s, C₄); 130,6 (s, C₃); 161,5 (s, C₁); 162,9 (s, CH=N) ppm.

### b) Synthèse de l'amino-butyl mono-phosphonate

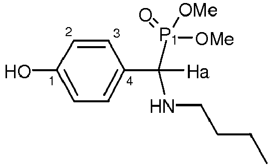

Le phénol porteur de la fonction imine de l'étape (a) (16,9 mmol, 3g) est mélangé sans solvant et à température ambiante avec de la triéthylamine (16,9 mmol, 2,35 ml) ainsi que du diméthylphosphite (16,9 mmol, 1,55 ml). Le mélange est laissé pendant 12 heures à température ambiante puis il est évaporé à sec. La poudre obtenue est mise en solution dans l'acétone puis passée sur un « patch » de silice. Enfin l'éluant est évaporé pour obtenir le produit final avec un rendement de 65%.
RMN ³¹P-{¹H} (CDCl₃) : δ = 29,8 (s, P₁) ppm.
RMN ¹H (CDCl₃) : δ = 0,80 (t, ³*J*_{HH} = 7,6 Hz, 3H, -CH₃); 1,20-1,55 (m, 4H, CH₂-CH₂); 2,41 (m, 2H, N-CH₂-); 3,6 (d, ³*J*_{HP} = 10,4 Hz, 3H, -P₁OMe); 3,8 (d, ³*J*_{HP} = 10,8 Hz, 3H, -P₂OMe); 4,0 (d, ²*J*_{HP} = 26.0 Hz, 1 H, Ha); 6.7 (d, ³*J*_{HH} = 8,4 Hz, CHₐᵣₒₘ, 2H); 7,2 (d, ³*J*_{HH} = 8,4 Hz, CHₐᵣₒₘ, 2H) ppm.
RMN ¹³C-{¹H} (CDCl₃) : δ = 13,9 (s, CH₃); 20,3 (s, CH₂-CH₃); 31,8 (s, CH₂-CH₂-CH₃); 47,4 (d, ³*J*_{CP} = 17,6 Hz, N-CH₂-CH₂- CH₂-CH₃); 53,6 (d, ²*J*_{CP} = 7,9 Hz, OMe); 53,9 (d, ²*J*_{CP} = 6,2 Hz, OMe); 59,8 (d, ¹*J*_{CP} = 157,1 Hz, CH); 115,9 (s, C₂); 125,4 (s, C₄); 129,5 (s, C₃); 157,0 (s, C₁) ppm.

### c) Synthèse de l'amino-butyl bis-phosphonate

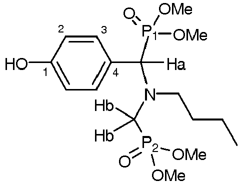

L'amine secondaire de l'étape (b) (5,8 mmol, 1,67 g) est mise en solution à température ambiante dans le formaldéhyde en solution aqueuse 37 % (8,7 mmol, 657µl) et le diméthylphosphite (5,8 mmol, 530 µl). Le mélange est laissé sous agitation magnétique et à température ambiante pendant 12 heures. Enfin l'excès de formaldéhyde est éliminé sous pression réduite et le produit est purifié par chromatographie sur gel de silice en utilisant l'acétate d'éthyle comme solvant, le produit final est isolé avec un rendement de 60%.
RMN ³¹P-{¹H} (CDCl₃) : δ = 28,3 (s, P₁); 30.9 (s, P₂) ppm.
RMN ¹H (CDCl₃) : δ = 0,86 (t, ³*J*_{HH} = 7,6 Hz, 3H, CH₃); 1,25-1,55 (m, 4H, CH₂-CH₂); 2,31 (m, 1 H, N-CH₂-); 2,64 (dd, ²*J*_{HP} = 3,2 Hz, ²*J*_{HH} = 15,6 Hz, 1 H, CH₂-P₂); 3,11 (m, 1 H, N-CH₂- CH₂); 3,35 (ddd, ²*J*_{HP} = 17,2 Hz, ²*J*_{HH} = 17,0 Hz, ⁴*J*_{HP} = 1,6 Hz, 1 H, CH₂-P₂); 3,5 (d, ³*J*_{HP} = 10,4 Hz, 3H, -P₁OMe); 3,7 (d, ³*J*_{HP} = 10,8 Hz, 3H, -P₂OMe); 3,8 (d, ³*J*_{HP} = 10,8 Hz, 3H, -P₂OMe); 3,9 (d, ³*J*_{HP} = 10,8 Hz, 3H, - P₁OMe); 4,4 (d, ²*J*_{HP} = 26.0 Hz, 1H, Ha); 6.84 (d, ³*J*_{HH} = 8,4 Hz, CHₐᵣₒₘ, 2H); 7,26 (d, ³*J*_{HH} = 8,4 Hz, CHₐᵣₒₘ, 2H); 9,1 (s large, 1 H, -OH) ppm.
RMN ¹³C-{¹H} (CDCl₃) : δ = 14,4 (s, CH₃); 20,4 (s, CH₂-CH₃); 30,6 (s, CH₂-CH₂-CH₃); 46,0 (d, ¹*J*_{CP} = 166,8 Hz, ³*J*_{CP} = 8,8 Hz, CH₂-P₂); 53,0 (d, ²*J*_{CP} = 6,8 Hz, P₂OMe); 53,4 (d, ²*J*_{CP} = 7,0 Hz, P₁OMe); 53,7 (d, ²*J*_{CP} = 7,0 Hz, P₂OMe); 54,1 (d, ²*J*_{CP} = 7,1 Hz, P₁OMe); 53,1 (t, ³*J*_{CP} = 7,8 Hz, N-CH₂-CH₂- CH₂-CH₃); 61,3 (d, ¹*J*_{CP} = 162,9 Hz, ³*J*_{CP} = 10,0 Hz, CH); 115,9 (s, C₂); 121,5 (d, ²*J*_{CP} = 6,0 Hz, C₄); 132,5 (d, ³*J*_{CP} = 9,1 Hz, C₃); 158,1 (s, C₁) ppm.

### d) Synthèse du dendrimère de première génération dérivant de l'amino-butyl bis-phosphonate

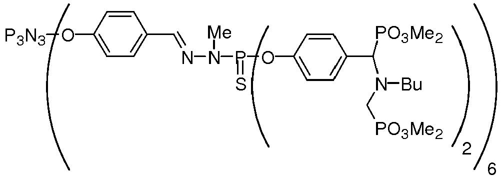

A une solution de dendrimère Gc₁ (0,058 mmol, 106 mg) dans du THF anhydre (3 mL) est additionné du carbonate de césium (1,4 mmol, 453 mg) puis le phénol aza-bis-diméthyl-phosphonate dérivé de la butylamine de l'étape (c) est ajouté (0,73 mmol, 300 mg). On laisse le mélange sous agitation pendant 24 heures à température ambiante puis on filtre sur célite et on centrifuge le mélange final de manière à séparer les sels. Enfin le produit final est lavé par précipitation dans du pentane et isolé avec un rendement de 65%.
RMN ³¹P-{¹H} (CDCl₃) : δ = 65,4 (s, P₁); 30,8 (s, P(O)(OMe)₂); 28,3 (s, P(O)(OMe)₂); 11,4 (s, P₀) ppm.
RMN ¹H (CDCl₃) : δ = 0,82 (t, ³*J*_{HH} = 7,6 Hz, 36H, CH₃); 1,20-1,50 (m, 48H, CH₂-CH₂); 2,27 (m, 12H, N-CH₂-); 2,57 (dd, ²*J*_{HP} = 3,4 Hz, ²*J*_{HH} = 15,2 Hz, 12H, CH₂-P₂); 3,11 (m, 12H, N-CH₂-CH₂); 3,26 (d, ³*J*_{HP}= 10,6 Hz, 18H, CH₃-N-P); 3,4 (d, ³*J*_{HP} = 10,6 Hz, 36H, -P₁OMe); 3,6 (d, ³*J*_{HP} = 10,7 Hz, 36H, -P₂OMe); 3,7 (d, ³*J*_{HP} = 10,8 Hz, 36H, -P₂OMe); 3,8 (d, ³*J*_{HP} = 10,6 Hz, 36H, -P₁OMe); 4,4 (d, ²*J*_{HP} = 25.0 Hz, 12H, Ha); 6,9-7,8 (m, 78H, CHₐᵣₒₘ, CH=N) ppm.
RMN ¹³C-{¹H} (CDCl₃) : δ = 14,0 (s, CH₃); 19,9 (s, CH₂-CH₃); 30,2 (s, CH₂-CH₂-CH₃); 32,8 (d, ²*J*_{CP} = 11,5 Hz, CH₃-N-P₁); 46,0 (dd, ¹*J*_{CP} = 166,7 Hz, ³*J*_{CP} = 8,6 Hz, CH₂-P₂); 52-54 (m, PO₃Me₂); 60,3 (dd, ¹*J*_{CP} = 163,9 Hz, ³*J*_{CP} = 10,4 Hz, CH); 121,2 (s large, C₀², C₁²); 128,2 (s, C₀³); 128,8 (d, ³*J*_{CP} = 4,5 Hz, C₁³); 131,9 (s, C₁⁴); 132,1 (s, C₀⁴); 139,1 (d, ³*J*_{CP} = 13,9 Hz, CH=N); 150,6 (d, ²*J*_{CP} = 6,9 Hz, C₁¹); 151,3 (s, C₀¹) ppm.

### e) Synthèse du dendrimère de deuxième génération dérivant de l'amino-butyl bis-phosphonate

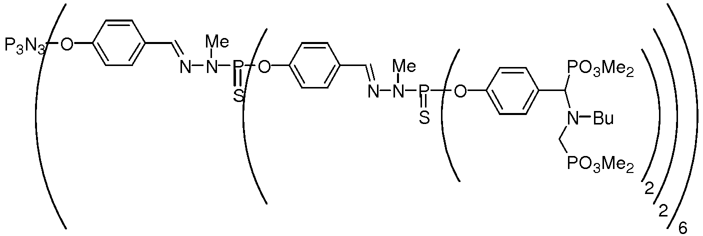

A une solution de dendrimère Gc₂ (0,0106 mmol, 51 mg) dans du THF anhydre (2 mL) est additionné du carbonate de césium (0,54 mmol, 176 mg) puis le phénol aza-bis-diméthyl-phosphonate dérivé de la butylamine de l'étape (c) est ajouté (0,27 mmol, 110 mg). On laisse le mélange sous agitation pendant 36 heures à température ambiante puis on filtre sur célite et on centrifuge le mélange final de manière à séparer les sels. Enfin le produit final est lavé par précipitation dans du pentane et isolé avec un rendement de 75%.
RMN ³¹P-{¹H} (CDCl₃) : δ = 66,1 (s, P₁); 65,3 (s, P₂); 30,8 (s, P(O)(OMe)₂); 28,3 (s, P(O)(OMe)₂); 11,4 (s, P₀) ppm.

RMN ¹H (CDCl₃) : δ = 0,88 (t, ³*J*_{HH} = 7,6 Hz, 72H, CH₃); 1,20-1,45 (m, 96H, CH₂-CH₂); 2,33 (m, 24H, N-CH₂-); 2,63 (dd, ²*J*_{HP} = 3,4 Hz, ²*J*_{HH} = 15,2 Hz, 24H, CH₂-P₂); 3,16 (m, 24H, N-CH₂-CH₂); 3,33 (m, 54H, CH₃-N-P); 3,44 (d, ³*J*_{HP} = 12,0 Hz, 72H, -P₁OMe); 3,7 (d, ³*J*_{HP} = 10,7 Hz, 72H, -P₂OMe); 3,8 (d, ³*J*_{HP} = 10,6 Hz, 72H, -P₂OMe); 3,9 (d, ³*J*_{HP} = 10,7 Hz, 72H, -P₁OMe); 4,5 (d, ²*J*_{HP} = 25.5 Hz, 24H, Ha); 6,9-7,8 (m, 186H, CHₐᵣₒₘ, CH=N) ppm.
RMN ¹³C-{¹H} (CDCl₃) : δ = 14,4 (s, CH₃); 20,3 (s, CH₂-CH₃); 30,6 (s, CH₂-CH₂-CH₃); 33,3 (d, ²*J*_{CP} = 11,7 Hz, CH₃-N-P₂, CH₃-N-P₁); 46,5 (dd, ¹*J*_{CP} = 166,7 Hz, ³*J*_{CP} = 8,6 Hz, CH₂-P₂); 52,5-54,1 (m, PO₃Me₂); "53,1 (t, ³*J*_{CP} = 7,8 Hz, N-CH₂-CH₂-CH₂-CH₃) PB "; 61,3 (dd, ¹*J*_{CP} = 164,9 Hz, ³*J*_{CP} = 10,9 Hz, CH); 121,6 (s large, C₁², C₂²); 122,2 (s, C₀²); 128,7 (s large, C₂³); 129,3 (s large, C₀³, C₁³); 132,5 (d large, ²*J*_{CP} = 7,5 Hz, C₂⁴, C₁⁴, C₀⁴); 139,1 (s large, CH=N); 151,0 (d, ²*J*_{CP} = 6,9 Hz, C₂¹); 151,8 (s large, C₁¹, C₀¹) ppm.

### f) Synthèse du dendrimère de première génération dérivant de l'acide amino-butyl bis-phosphonique

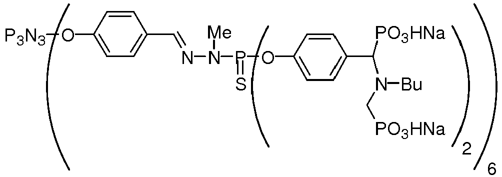

A une solution de dendrimère de première génération à extrémités aza-bis-diméthyl-phosphonate dérivé de la butylamine de l'étape (d) (1,75.10⁻⁵ mmol, 110 mg) à 0°C dans de l'acétonitrile (4 mL) on additionne lentement du bromotriméthylsilane (0,92 mmol, 123 µl). Une fois l'addition terminée on laisse le mélange revenir à température ambiante pendant 12 heures. Le mélange est alors évaporé à sec puis on additionne 1 ml de méthanol anhydre à température ambiante et on laisse le mélange une heure sous agitation. Après évaporation à sec, le résidu est lavé plusieurs fois à l'éther pur. Le produit étant totalement insoluble dans les solvants organiques il est transformé en son mono sel de sodium en présence de soude (0,98 ml d'une solution de soude, à 0,1955 mol.L⁻¹ pour 45 mg de dendrimère acide phosphonique). La solution résultante est lyophilisée pour donner le dendrimère sous forme d'une poudre blanche. Le produit final est isolé avec un rendement de 55%.
RMN ³¹P-{¹H} (CD₃CN/D₂O) : δ = 69,3 (s, P₁); 15,3 (s, P₀); 13,5 (s, P(O)(OHNa)₂) ppm.
RMN ¹H (CD₃CN/D₂O) : δ = 0,9 (s large, 36H, CH₃); 1,20-1,50 (m, 48H, CH₂-CH₂); 2,5-3,8 (m, 78H, CH₃-N-P, N-CH₂, CH₂, CH); 6,5-8,0 (m, 78H, CHₐᵣₒₘ, CH=N).
RMN ¹³C-{¹H} (CD₃CN/D₂O) : δ = 13,4 (s, CH₃); 19,6 (s, CH₂-CH₃); 26,2 (s, CH₂-CH₂-CH₃); 33,4 (s large, CH₃-N-P₂, CH₃-N-P₁); 50,5 (d, ¹*J*_{CP} = 123,0 Hz, CH₂-P₂); 54,1 (s large, N-CH₂-CH₂- CH₂-CH₃); 66,3 (dd, ¹*J*_{CP} = 126,9 Hz, CH); 121,0 (s, C₀²); 121,9 (s, C₁²); 128,6 (s, C₀³); 129,0 (s, C₁³); 132,8 (s, C₀⁴); 134,1 (s, C₁⁴); 141,5 (s large, CH=N); 150,8 (s, C₀¹); 151,5 (d, ²*J*_{CP} = 6,9 Hz, C₁¹) ppm.

### Exemple 16 : N-allyl-N-(4-hydroxy)-benzyl-α-amino-phosphonate de diméthyle.

A une suspension de 4-hydroxy-benzaldéhyde (1,1 g, 10 mmol) en présence de MgSO₄ dans 10 mL de CH₂Cl₂ sont additionnés lentement 750 µL (10 mmol) d'allylamine. Après 30 minutes d'agitation, le phosphite de diméthyle est additionné (900 µL, 10 mmol). La suspension est agitée pendant 18 heures puis filtrée et diluée avec 10 mL de CH₂Cl₂. La phase organique est lavée à l'eau, séchée sur MgSO₄ puis évaporée sous pression réduite. Le produit pur est obtenu après lavage à l'éther distillé (2 fois 10 mL) et chromatographie sur silice (acétate d'éthyle) sous la forme d'une huile visqueuse avec un rendement de 55 %.

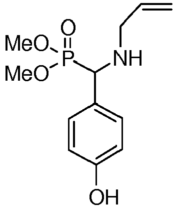

RMN ³¹P-{¹H} (CDCl₃) : δ = 29,8 (s)
RMN ¹H (CDCl₃) : δ = 2,99 (m, 1 H); 3,20 (m, 1 H); 3,54 (d, ³J_{HP} = 10,3 Hz, 3H); 3,74 (d, ³J_{HP} = 10,5 Hz, 3H); 4,02 (d, ²J_{HP} = 19,8 Hz, 1 H); 5,09 (m, 2H); 5,79 (m, 1 H); 6,74 (d, ³J_{HH} = 7,6 Hz, 2H); 7,15 (d, ³J_{HH} = 8,3Hz, 2H).

### Exemple 17 : -allyl-N-(4-hydroxy)-benzyl-α-amino-bis-phosphonate de diméthyle.

A une solution de N-allyl-N-(4-hydroxy)-benzyl-α-amino-phosphonate de diméthyle de l'exemple 16 (970 mg, 3,58 mmol) dans le THF (7 mL) sont ajoutés du formaldéhyde aqueux (37 % dans l'eau, 1,06 mL, 14,3 mmol) puis du phosphite de diméthyle (490 µL, 5,35 mmol). La solution est vigoureusement agitée pendant 48 heures à température ambiante. 25 mL de CH₂Cl₂ sont ajoutés et la solution est lavée avec 15 mL d'eau puis la phase organique est séchée sur MgSO₄ et concentrée sous pression réduite. L'huile résiduelle est purifiée par lavage avec 2 fois 10 mL d'éther distillé puis par chromatographie sur silice (acétate d'éthyle / méthanol 9/1). Rendement 55 %. 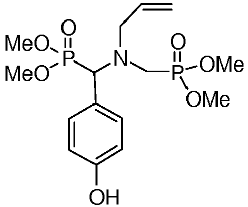 RMN ³¹P-{¹H} (CDCl₃) : δ□= 28,7 (s); 31,5 (s).
RMN ¹H (CDCl₃) : δ = 2,57 (m, 1 H); 2,82 (m, 1 H); 3,46 (d, ³J_{HP} = 10,5 Hz, 3H); 3,47 (m, 1 H); 3,70 (d, ³J_{HP} = 10,6 Hz, 3H); 3,79 (d, ³J_{HP} = 10,7 Hz, 3H); 3,87 (d, ²J_{HP} = 10,6 Hz, 3H); 3,88 (m, 1H); 4,47 (d, ²J_{HP} = 25,8Hz, 1H); 5,19 (m, 2H); 5,83 (m, 1 H); 6,82 (d, ³J_{HH} = 8,4 Hz, 2H); 7,25 (d, ³J_{HH} = 8,3 Hz, 2H); 9,02 (sl, 1 H).

### Exemple 18 : Dendrimère de première génération Aza-bis-Phosphonate Dérivé de l'allylamine.

A une solution de G_{C1} (143 mg, 78,2 µmol) dans le THF (5 mL) sont ajoutés le phénol aza-bis phosphonate de l'exemple 17 (400 mg, 1,02 mmol) et du carbonate de césium (348 mg, 1,07 mmol). La suspension est agitée 48 heures à température ambiante puis est filtrée deux fois. Le solvant est évaporé sous pression réduite et le résidu est dissous dans un minimum de THF (1mL environ), un large volume de pentane est ajouté et le solide est isolé. La purification est réitérée deux fois puis 2 lavages supplémentaires avec 5mL d'éther distillé sont effectués et le dendrimère est obtenu pur sous forme d'une poudre blanche après séchage sous pression réduite. Rendement 80 %. 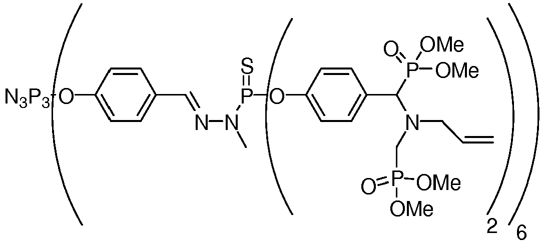 RMN ³¹P-{¹H} (CDCl₃) : δ = 11,3 (s); 28,9 (s); 31,3 (s); 65,4 (s).

### Exemple 19 : Dendrimère de première génération Aza-bis-Phosphonique Dérivé de l'allylamine.

Le dendrimère à terminaisons aza-bis-phosphonate dérivé de l'allylamine de l'exemple 18 (200 mg, 32 µmol) est solubilisé dans 5 mL d'acétonitrile distillé puis le bromo-triméthylsilane (270 µL, 2,04 mmol) est ajouté lentement à 0°C. La solution est alors agitée 18 heures à température ambiante. Le solvant est évaporé sous pression réduite et le résidu est traité par environ 10 mL de méthanol. Après 1 heure de vigoureuse agitation dans le méthanol, le solide est séché sous pression réduite. L'acide phosphonique est lavé avec 2 fois 15 mL d'éther distillé. Le solvant est éliminé et le dendrimère à extrémités acide phosphonique pur est traité lentement par une solution aqueuse de soude 0,1955 M (4,0 mL). La solution homogène est lyophilisée et le dendrimère à terminaison N-(allyl)-acide bis-méthylphosphonique (mono sel de sodium) est isolé avec un rendement quantitatif sous forme d'une poudre blanche.

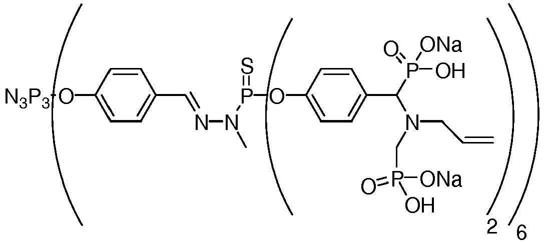

RMN ³¹P-{¹H} (CD₃CN/D₂O): δ = 8.7 (s); 10,9 (sl); 65,1 (sl).

### Exemple 20 : N-benzyl-N-(4-hydroxy)-benzyl-α-amino-bis-phosphonate de diméthyle.

A une solution de 4-hydroxy-benzaldéhyde (4,4 g, 36 mmol) dans le THF (30 mL) sont ajoutés la benzylamine (4,4 mL, 40 mmol) et du MgSO4 (10 g). Après 1 heure d'agitation, le diméthylphosphite (4,4 g, 36 mmol) est additionné et la solution est agitée 4 jours à température ambiante. La suspension est filtrée, diluée avec du CH₂Cl₂ (100 mL) puis lavée avec 25 mL d'eau. La phase organique est séchée sur MgSO₄ et le solvant est évaporé sous pression réduite. Le solide résiduel est lavé avec 3 fois 30 mL d'éther distillé puis séché sous pression réduite. Rendement 83 %, solide blanc. 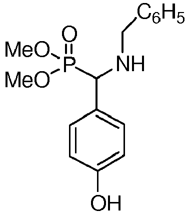 RMN ³¹P-{¹H} (CDCl₃) : δ = 29,8 (s).
RMN ¹H (CDCl₃) : δ = 3,48 (m, 1 H); 3,54 (d, ³J_{HP} = 10,4 Hz, 3H); 3,75 (m, 1 H); 3,76 (d, ³J_{HP} = 10,5 Hz, 3H); 3,98 (d, ²J_{HP} = 19,9 Hz, 1 H); 6,81 (d, ³J_{HH} = 7,8 Hz, 2H); 7,25 (m, 7H).

### Exemple 21 : N-benzyl-N-(4-hydroxy)-benzyl-α-amino-phosphonate de diméthyle.

A une solution de N-benzyl-N-(4-hydroxy)-benzyl-α-amino-phosphonate de diméthyle (1,5 g, 4,67 mmol) dans 10 mL de THF sont ajoutés du formaldéhyde aqueux (37 % dans l'eau, 570 mg, 7,01 mmol) et du phosphite de diméthyle (565 mg, 5,20 mmol). La solution est agitée 18 heures à température ambiante puis 300 µL de formaldéhyde aqueux sont ajoutés. Après 12 heures, la solution est diluée avec 50 mL de CH₂Cl₂ et lavée avec 20 mL d'eau. La phase organique est séchée sur MgSO₄ et concentrée sous pression réduite. L'huile résiduelle est lavée 3 fois avec de l'éther distillé (20 mL) puis dissoute dans un minimum de THF. Un grand volume de pentane est ajouté et l'huile devenue insoluble est séparée du mélange. Après lavage avec 10 mL d'éther distillé et séchage sous pression réduite une mousse jaune est obtenue avec un rendement de 80 %. 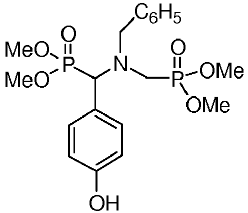 RMN ³¹P-{¹H} (CDCl₃) : δ = 29,1 (s); 31,5 (s).
RMN ¹H (CDCl₃) : δ = 2,70 (dd, ²J_{HH} = 15,6, ³J_{HH} = 3,3 Hz, 1 H); 3,28 (d, ³J_{HP} = 13,4 Hz, 1 H); 3,44 (d,, ³J_{HP} = 10,5 Hz, 3H); 3,54 (m, 1 H); 3,65 (d, ³J_{HP} = 10,7 Hz, 3H); 3,71 (m, 1 H); 3,72 (d, ³J_{HP} = 10,6 Hz, 3H); 3,85 (d, ³J_{HP} = 10,7 Hz, 3H); 4,41 (m, 1 H); 6,86 (d, ³J_{HH} = 8,3 Hz, 2H); 7,27 (m, 7H).

### Exemple 22 : Dendrimère de première génération Aza-bis-Phosphonate Dérivé de la benzylamine.

A une solution de G_{C1} (160 mg, 87,5 µmol) dans 5 ml de THF sont additionnés le phénol-aza-bis phosphonate dérivé de la benzylamine de l'exemple 21 (500 mg, 1,13 mmol) et du carbonate de césium (382 mg, 1,17 mmol). Après 72 heures d'agitation, la solution est filtrée et le solvant est éliminé sous pression réduite. Le résidu est purifié par lavage à l'éther (2 fois 10 mL) puis dissous dans un minimum de THF et précipité par ajout d'un grand volume de pentane. Le solide obtenu est isolé puis précipité 2 fois dans les mêmes conditions. Après séchage sous pression réduite, le dendrimère est obtenu sous forme d'une poudre blanche avec un rendement de 85 %. 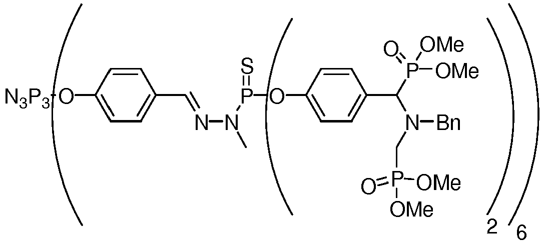 RMN ³¹P-{¹H} (CDCl₃) : δ = 12,2 (s); 29,2 (s); 31,3 (s); 65,3 (s).

### Exemple 23 : Dendrimère de première génération Aza-bis-Phosphonique dérivé de la benzylamine.

Le dendrimère à terminaisons aza-bis-phosphonate dérivé de la benzylamine de l'exemple 22 (150 mg, 22,3 µmol) est solubilisé dans 5 mL d'acétonitrile distillé puis le bromo-triméthylsilane (185 µL, 1,39 mmol) est ajouté lentement à 0°C. La solution est alors agitée 24 heures à température ambiante. Le solvant est évaporé sous pression réduite et le résidu est traité par environ 10 mL de méthanol. Après 1 heure de vigoureuse agitation dans le méthanol, le solide est séché sous pression réduite. L'acide phosphonique est lavé avec 2 fois 15 mL d'éther distillé. Le solvant est éliminé et le dendrimère à extrémités acide phosphonique pur est traité lentement par une solution aqueuse de soude 0,1955 M (2,7 mL). La solution homogène est lyophilisée et le dendrimère à terminaison N-(benzyl)-acide bis-méthylphosphonique (mono sel de sodium) est isolé avec un rendement quantitatif sous forme d'une poudre blanche. 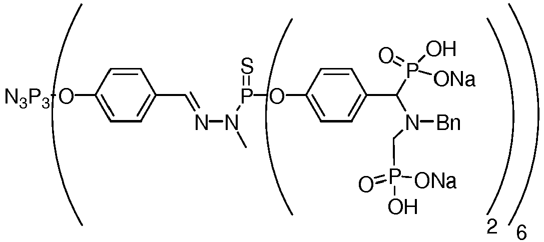 RMN ³¹P-{¹H} (CD₃CN/D₂O): δ = 8.9 (s); 10,5 (sl); 65,1 (sl).

### Exemple 24 : Synthèse des acides carboxyliques azabis-phosphonate

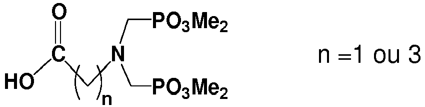

### (a) n = 1

5g de glycine (66,6 mmol) sont introduits dans un ballon et agités avec 20 mL de THF, 200 mmol de formaldéhyde à 37% en solution aqueuse sont ajoutés à température ambiante et agités pendant 30 minutes. On additionne alors 266 mmol de diméthylphosphite. Le mélange est maintenu sous agitation magnétique à température ambiante pendant 12 h, 40 mL d'eau distillée sont ajoutés au milieu réactionnel, le THF est éliminé sous pression réduite et le produit est extrait avec 3 x 100mL de chloroforme. La phase organique est séchée sur sulfate de magnésium puis évaporée. Le produit est alors purifié par chromatographie sur colonne de silice en éluant avec un mélange CH₂Cl₂ / MeOH (95 / 5). Le produit est obtenu avec un rendement de 37 %.
Rf (CH₂Cl₂ / MeOH : 95 / 5) = 0,32
RMN ³¹P-{¹H} (CDCl₃)□δ = 30,0 ppm.
RMN ¹H (CDCl₃) δ□= 3,22 (d, ²J_{HP} = 10,1 Hz, 4H, CH₂-P), 3,61 (s, 2H, CH₂-CO), 3,68 (d, ³J_{HP} = 10,6 Hz, 12H, O-CH₃), 10,8 (s, 1 H, COOH) ppm.

### (b) n = 3

5 g d'acide 4-aminobutyrique (48,5 mmol) sont introduits dans un ballon et agités avec 20 mL de THF, 145 mmol de formaldéhyde à 37% en solution aqueuse sont ajoutés à température ambiante et agités pendant 30 minutes. On additionne alors 194 mmol de diméthylphosphite. Le mélange est maintenu sous agitation magnétique à température ambiante pendant 12 h, 40 mL d'eau distillée sont ajoutés au milieu réactionnel, le THF est éliminé sous pression réduite et le produit est extrait avec 3 x 100mL de chloroforme. La phase organique est séchée sur sulfate de magnésium puis évaporée. Le produit est alors purifié par chromatographie sur colonne de silice en éluant avec un mélange CH₂Cl₂ / MeOH (95 / 5). Le produit est obtenu avec un rendement de 53 %.
Rf (CH₂Cl₂ / MeOH : 95 / 5) = 0,35
RMN ³¹P-{¹H} (CDCl₃)□ δ = 30,7 ppm.
RMN ¹H (CDCl₃) δ = 1,74 (quint, ³J_{HH} = 7,1 Hz, 2H, CO-CH₂-CH₂), 2,36 (t, ³J_{HH} = 7,1 Hz, 2H, CO-CH₂), 2,78 (t, ³J_{HH} = 7,1 Hz, 2H, CH₂-N), 3,10 (d, ²J_{HP} = 8,8 Hz, 4H, CH₂-P), 3,74 (d, ³J_{HP} = 10,7 Hz, 12H, O-CH₃) ppm. Le proton COOH n'a pas été observé.

### Exemple 25 : Synthèse des composés amido-tyramine-azabis-phosphonate

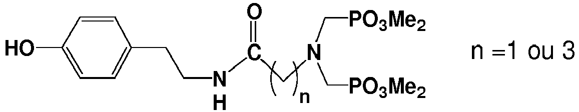

### (a) n = 1

300 mg d'acide carboxylique (0,94 mmol) sont introduits dans un ballon sous argon et dissous dans 5 mL de DMF sec. La solution est placée à 0°C, on lui ajoute alors 1,3 équivalents de 1-hydroxybenzotriazole (HOBt), l'agitation est maintenue pendant 15 minutes à 0°C puis on additionne 1,3 équivalents de 1,3-dicycloheylcarbodiimide (DCC). Le mélange est agité pendant 30 minutes à 0°C puis pendant 1 h à température ambiante. On observe la formation d'un précipité. Le mélange est replacé à 0°C puis on ajoute la tyramine (1,1 équivalents) et on agite 30 minutes à 0°C puis 15h à température ambiante. Le précipité est éliminé sur filtre millipore 5µ et la solution est lyophilisée. L'huile résiduelle est purifiée par chromatographie sur colonne de silice. L'éluant utilisé est un mélange CH₂Cl₂ / MeOH (90 / 10), Rf = 0,47, le produit est obtenu avec un rendement de 42%.
RMN ³¹P-{¹H} (CDCl₃)_{□} δ = 30,2 ppm.
RMN ¹H (CDCl₃) δ = 2,73 (t, ³J_{HH} = 7,4 Hz, 2H, C₆H₅-CH₂), 3,13 (d, ²J_{HP} = 9,0 Hz, 4H, CH₂-P), 3,33-3,52 (m, 4H, CH₂-N, CH₂-NH), 3,74 (d, ³J_{HP} = 10,7 Hz, 12H, O-CH₃), 6,75 (d, ³J_{HH} = 8,4 Hz, 2H, H_{Ar}), 7,00 (d, ³J_{HH} = 8,4 Hz, 2H, H_{Ar}), 7,46 (t, ³J_{HH} = 5,8 Hz, 1 H, NH) ppm.

### (b) n = 3

300 mg d'acide carboxylique (0,86 mmol) sont introduits dans un ballon sous argon et dissous dans 5 mL de DMF sec. La solution est placée à 0°C, on lui ajoute alors 1,3 équivalents de 1-hydroxybenzotriazole (HOBt), l'agitation est maintenue pendant 15 minutes à 0°C puis on additionne 1,3 équivalents de 1,3-dicycloheylcarbodiimide (DCC). Le mélange est agité pendant 30 minutes à 0°C puis pendant 1 h à température ambiante. On observe la formation d'un précipité. Le mélange est replacé à 0°C puis on ajoute la tyramine (1,1 équivalents) et on agite 30 minutes à 0°C puis 15h à température ambiante. Le précipité est éliminé sur filtre millipore 5µ et la solution est lyophilisée. L'huile résiduelle est purifiée par chromatographie sur colonne de silice. L'éluant utilisé est un mélange CH₂Cl₂ / MeOH (95 / 5), Rf = 0,52, le produit est obtenu avec un rendement de 51 %.
RMN ³¹P-{¹H} (CDCl₃)□ δ = 30,6 ppm.

### Exemple 26 : Synthèse des modèles de DAB à extrémités azabis-phosphonate

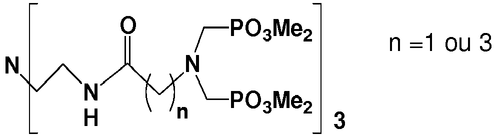

Les synthèses sont réalisées suivant le protocole décrit dans l'exemple précédent pour le couplage des acides carboxyliques azabisphosphonate sur la tyramine en présence de HOBt et de DCC. Les quantités utilisées sont les suivantes: 0,4 mmol de tris(2-aminoéthyl)amine, 1,57 mmol d'acide carboxylique azabis-phosphonate (avec n = 1 ou 3), 2,22 mmol de HOBt et 2,22 mmol de DCC. Les produits sont purifiés par dissolution dans un volume minimum de CH₂Cl₂ et précipitation dans un grand volume de diéthyléther. Ces précipitations sont répétées trois fois pour éliminer les traces de HOBt.

### (a) n = 1

Le produit est obtenu avec un rendement de 55%.
RMN ³¹P-{¹H} (CDCl₃)□ δ = 30,3 ppm.

### (b) n = 3

RMN ³¹P-{¹H} (CDCl₃)□ δ = 30,5 ppm.

### Exemple 27 : Synthèse des modèles de DAB à extrémités acide azabis-phosphonique

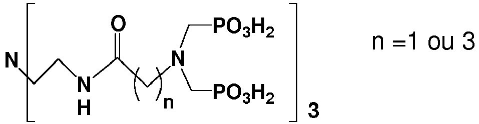

0,25 mmol de composé modèle de DAB azabis-phosphonate de l'exemple 26 sont mis en solution dans 3 mL d'acétonitrile et placés à 0°C puis on additionne goutte à goutte 3,75 mmol de BrTMS sous atmosphère inerte. Après 30 minutes d'agitation à 0°C le bain de glace est enlevé et l'agitation est maintenue pendant 15h à température ambiante. Le solvant est éliminé sous pression réduite et 3 mL de MeOH sont ajoutés sur le résidu sec. On agite 30 minutes puis on élimine le solvant sous vide et on additionne 3 mL d'eau distillée. Après 1 heure d'agitation le mélange est lyophilisé. Le résidu sec est lavé 3 fois à l'éther sec. Les produits sont obtenus sous la forme d'une poudre beige.

### (a) n= 1

RMN ³¹P-{¹H} (D₂O, THFd8)□ δ = 11,2 ppm.

### (b) n = 3 :

RMN ³¹P-{¹H} (D₂O, THFd8)□ δ = 11,0 ppm.

### Exemple 28 : Synthèse des mono sels de sodium des modèles de DAB à extrémités acide azabis-phosphonique

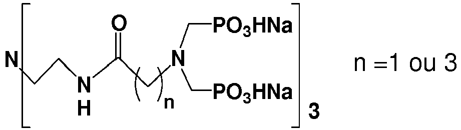

1 équivalent de NaOH (0,1955N en solution aqueuse) par groupement PO₃H₂ est additionné directement sur les composés acide azabis-phosphonique de l'exemple 27. Après lyophilisation on obtient les produits de façon quantitative.

### (a) n = 1

RMN ³¹P-{¹H} (D₂O, THFd8)□ δ = 17,8 ppm.

### (b) n = 3

RMN ³¹P-{¹H} (D₂O, THFd8)□ δ = 17,5 ppm.

### Exemple 29 : Synthèse des dendrimères de type DAB de génération 1 et de génération 2 ayant respectivement 4 et 8 groupements azabis-phosphonate en surface

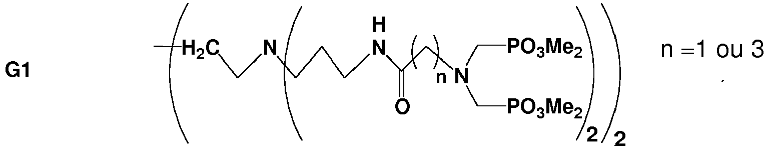

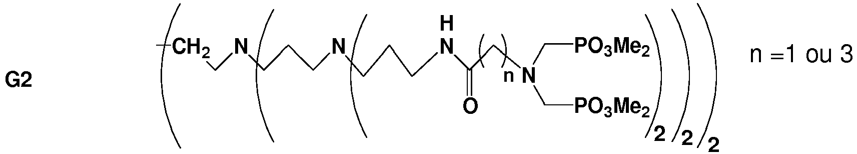

A 2 mmol d'acide carboxylique azabis-phosphonate de l'exemple 28, on additionne sous atmosphère inerte 4 mL de DMF sec. La solution est placée à 0°C puis 3 mmol de HOBt sont ajoutés et on maintient l'agitation à 0°C pendant 30 minutes, 3 mmol de DCC sont additionnés. Après 30 minutes à 0°C on laisse le mélange remonter à température ambiante et on maintient l'agitation pendant 1 heure supplémentaire, on observe la formation progressive d'un précipité. La suspension est à nouveau placée à 0°C puis on ajoute 0,33 mmol de dendrimère dans le cas du G1 ou 0,17 mmol de dendrimère dans le cas du G2. Après 30 minutes à 0°C l'agitation est maintenue à température ambiante pendant 20h. Le précipité est éliminé sur filtres millipores 5 µ puis le DMF est lyophilisé. Le produit est traité trois fois par dissolution dans un volume minimum de dichlorométhane et précipitation dans un grand volume de diéthyléther de façon à éliminer l'excès de réactifs.
*Dans le cas des dendrimères de type DAB de génération 1 :*
   Pour n = 1 : le rendement est de 73%
   RMN ³¹P-{¹H} (CDCl₃)□ δ = 30,2 ppm.

   Pour n = 3 : le rendement est de 69%
   RMN ³¹P-{¹H} (CDCl₃)□ δ =30,4 ppm.
*Dans le cas des dendrimères de type DAB de génération 2 :*
   Pour n = 1 : le rendement est de 64%
   RMN ³¹P-{¹H} (CDCl₃)□ δ = 30,3 ppm.

   Pour n = 3 : le rendement est de 75%
   RMN ³¹P-{¹H} (CDCl₃)□ δ = 30,5 ppm.

### Exemple 30 : Synthèse des dendrimères de type DAB de génération 1 et de génération 2 ayant respectivement 4 et 8 groupements acide azabis-phosphonique en surface

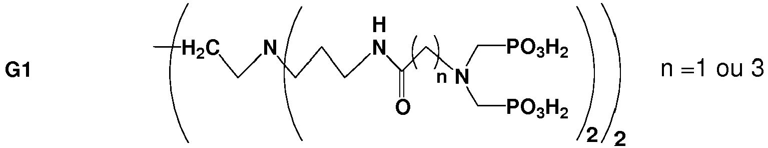

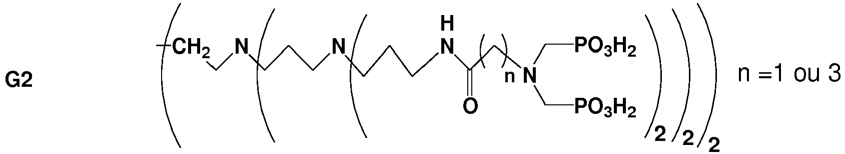

A 0,2 mmol de dendrimère de type DAB à extrémités azabis-phosphonate de génération 1 ou 2 de l'exemple précédent, on ajoute sous atmosphère inerte 4 mL d'acétonitrile fraîchement distillé et le mélange est refroidi à 0°C. On ajoute alors goutte à goutte 6,4 mmol de BrTMS (soit 32 équivalents) dans le cas du dendrimère de génération 1, et 12,8 mmol (soit 64 équivalents) dans le cas du dendrimère de génération 2. Le mélange est maintenu à 0°C pendant 30 minutes puis sous agitation à température ambiante pendant 15 heures supplémentaires. L'acétonitrile est éliminé sous pression réduite puis le mélange est méthanolysé et hydrolyse comme dans les cas précédents. Le résidu sec est alors lavé deux fois avec un mélange THF / diéthyéther (1 / 9). La poudre est alors séchée sous vide pour conduire au produit pur.
*Dans le cas des dendrimères de type DAB de génération 1*
   Pour n = 1 : le rendement est de 79%
   RMN ³¹P-{¹H} (D₂O, THFd8)□ δ = 11,5 ppm.

   Pour n = 3 : le rendement est de 68%
   RMN ³¹P-{¹H} (D₂O, CD₃COCD₃)□ δ = 11,0 ppm.
*Dans le cas des dendrimères de type DAB de génération 2*
   Pour n = 1 : le rendement est de 68%
   RMN ³¹P-{¹H} (D₂O, CD₃COCD₃)□ δ = 10,6 ppm.
Pour n = 3 : le rendement est de 74%
   RMN ³¹P-{¹H} (D₂O, CD₃COCD₃)□ δ = 10,9 ppm.

### Exemple 31 : Synthèse des mono sels de sodium correspondants

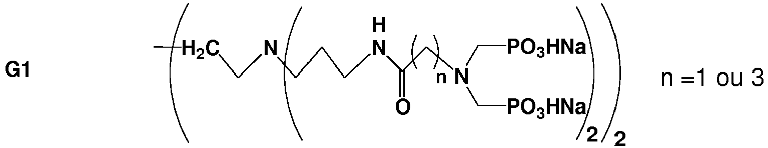

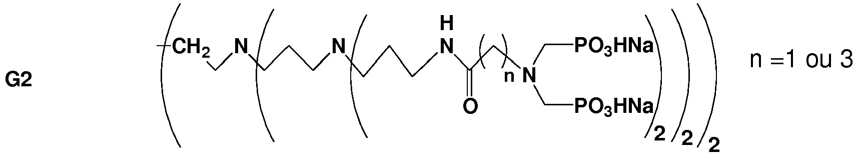

La procédure est la même que celle décrite dans l'exemple précédent, c'est à dire l'addition de 1 équivalent de NaOH (0,1955N en solution aqueuse) par fonction PO₃H₂ de surface. Dans le cas des dendrimères de génération 1, 8 équivalents de NaOH sont additionnés et dans le cas des dendrimères de génération 2, 16 équivalents de NaOH sont ajoutés. Après lyophilisation les produits sont obtenus de façon quantitative.
*Dans le cas des dendrimères de type DAB de génération 1*
   Pour n = 1:
   RMN ³¹P-{¹H} (D₂O, THFd8)□ δ = 20,0 ppm.

   Pour n = 3 :
   RMN ³¹P-{¹H} (D₂O, CD₃COCD₃)□ δ = 10,2 ppm.
*Dans le cas des dendrimères de type DAB de génération 2*
   Pour n = 1 :
   RMN ³¹P-{¹H} (D₂O, CD₃COCD₃)□ δ = 10,3 ppm.

   Pour n = 3 :
   RMN ³¹P-{¹H} (D₂O, CD₃COCD₃)□ δ = 10,2 ppm.

### Exemple 32 : Synthèse des dendrimères de type PAMAM de génération 0 et de génération 1 ayant respectivement 4 et 8 groupements azabis-phosphonate en surface

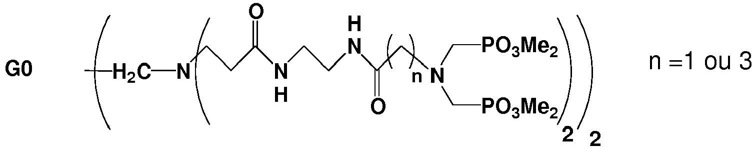

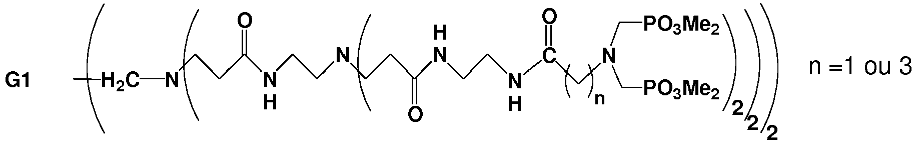

A 2 mmol d'acide carboxylique azabis-phosphonate de l'exemple 28, on additionne sous atmosphère inerte 4 mL de DMF sec. La solution est placée à 0°C puis 3 mmol de HOBt sont ajoutés et on maintient l'agitation à 0°C pendant 30 minutes, 3 mmol de DCC sont additionnés. Après 30 minutes à 0°C on laisse le mélange remonter à température ambiante et on maintient l'agitation pendant 1 heure supplémentaire, on observe la formation progressive d'un précipité. La suspension est à nouveau placée à 0°C puis on ajoute 0,33 mmol de dendrimère dans le cas du G0 ou 0,17 mmol de dendrimère dans le cas du G1. Après 30 minutes à 0°C l'agitation est maintenue à température ambiante pendant 20h. Le précipité est éliminé sur filtres millipores 5 µ puis le DMF est lyophilisé. Le produit est traité trois fois par dissolution dans un volume minimum de dichlorométhane et précipitation dans un grand volume de diéthyléther de façon à éliminer l'excès de réactifs.
*Dans le cas des dendrimères de type PAMAM de génération 0*
   Pour n = 1 : le rendement est de 67%
   RMN ³¹P-{¹H} (CDCl₃)□ δ = 30,1 ppm.

   Pour n = 3 : le rendement est de 75%
   RMN ³¹P-{¹H} (CDCl₃)□ δ =30,4 ppm.
*Dans le cas des dendrimères de type PAMAM de génération 1*
   Pour n = 1 : le rendement est de 63%
   RMN ³¹P-{¹H} (CDCl₃)□ δ = 30,2 ppm.

   Pour n = 3 : le rendement est de 78%
   RMN ³¹P-{¹H} (CDCl₃)□ δ = 30,4 ppm.

### Exemple 33 : Synthèse des dendrimères de type PAMAM de génération 0 et de génération 1 ayant respectivement 4 et 8 groupements acide azabis-phosphonique en surface

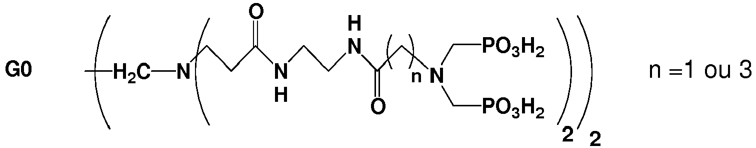

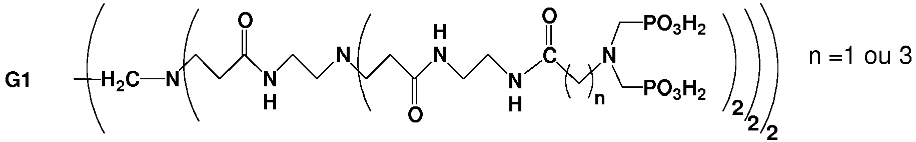

A 0,2 mmol de dendrimère de type PAMAM à extrémités azabis-phosphonate de génération 0 ou 1 de l'exemple précédent, on ajoute sous atmosphère inerte 4 mL d'acétonitrile fraîchement distillé et le mélange est refroidi à 0°C. On ajoute alors goutte à goutte 6,4 mmol de BrTMS (soit 32 équivalents) dans le cas du dendrimère de génération 0, et 12,8 mmol (soit 64 équivalents) dans le cas du dendrimère de génération 1. Le mélange est maintenu à 0°C pendant 30 minutes puis sous agitation à température ambiante pendant 15 heures supplémentaires. L'acétonitrile est éliminé sous pression réduite puis le mélange est méthanolysé et hydrolysé comme dans les cas précédents. Le résidu sec est alors lavé deux fois avec un mélange THF / diéthyéther (1 / 9). La poudre est alors séchée sous vide pour conduire au produit pur.
*Dans le cas des dendrimères de type PAMAM de génération 0*
   Pour n = 1 : le rendement est de 65%
   RMN ³¹P-{¹H} (D₂O, THFd8)□ δ = 10,9 ppm.
   Pour n = 3 : le rendement est de 71 %
   RMN ³¹P-{¹H} (D₂O, CD₃COCD₃)□ δ = 11,1 ppm.
*Dans le cas des dendrimères de type PAMAM de génération 1*
   Pour n = 1 : le rendement est de 73%
   RMN ³¹P-{¹H} (D₂O, CD₃COCD₃)□ δ = 11,0 ppm.

   Pour n = 3 : le rendement est de 67%
   RMN ³¹P-{¹H} (D₂O, CD₃COCD₃)□ δ = 11,3 ppm.

### Exemple 34 : Synthèse des mono sels de sodium correspondant aux composés de l'exemple 35

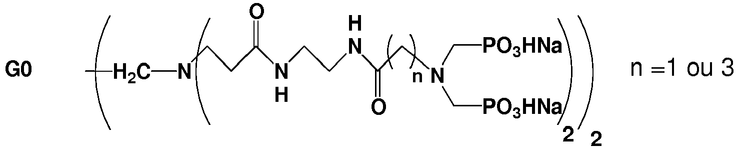

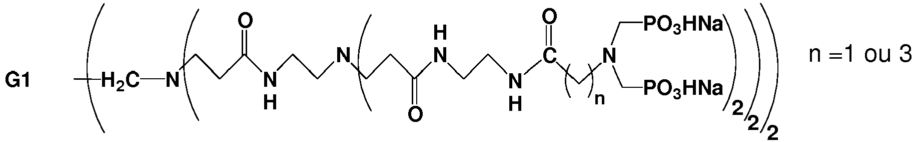

La procédure est la même que celle précédemment décrite, c'est à dire l'addition de 1 équivalent de NaOH (0,1955N en solution aqueuse) sont ajoutés par fonction PO₃H₂ de surface. Dans le cas des dendrimères de génération 0 avec n = 1 ou 3, 8 équivalents de NaOH sont additionnés et dans le cas des dendrimères de génération 1 avec n = 1 ou 3, 16 équivalents de NaOH sont ajoutés. Après lyophilisation les produits sont obtenus de façon quantitative.
*Dans le cas des dendrimères de type PAMAM de génération 0*
   Pour n = 1 :
   RMN ³¹P-{¹H} (D₂O, THFd8)□ δ = 19,7 ppm.

   Pour n = 3 :
   RMN ³¹P-{¹H} (D₂O, CD₃COCD₃)□ δ = 10,2 ppm.
*Dans le cas des dendrimères de type PAMAM de génération 1*
   Pour n = 1 :
   RMN ³¹P-{¹H} (D₂O, CD₃COCD₃)□ δ = 10,5 ppm.

   Pour n = 3 :
   RMN ³¹P-{¹H} (D₂O, CD₃COCD₃)□ δ = 10,4 ppm.

### Exemple 35 : Synthèse de dendrimères phosphorés de type Gc présentant 12 extrémités amido-azabis-phosphonate en surface

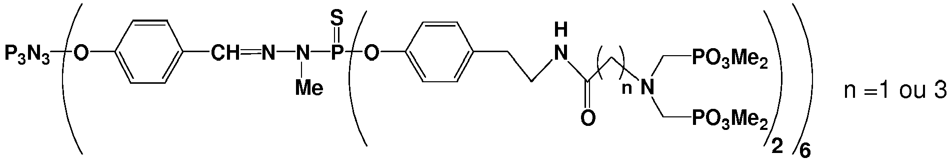

0,017 mmol de dendrimère G_{C1} de génération 1 présentant 12 liaisons P(S)-CI en surface sont mis en solution dans 3 mL de THF sec. Sur cette solution on ajoute successivement 5,04 mmol de carbonate de césium puis 0,23 mmol de composé tyramine-amido-azabis-phosphonate avec n = 1 ou 3 de l'exemple 25 en solution dans 3 mL de THF sec. Le mélange est agité une nuit à température ambiante puis filtré sur célite. Le milieu réactionnel est évaporé sous pression réduite puis le résidu sec est dissous dans un volume minimum de dichlorométhane. Le produit est alors précipité dans un grand volume d'éther. Cette opération est répétée trois fois pour éliminer le léger excès de phénol de départ. Les produits sont obtenus sous la forme de poudres avec pour n = 1 un rendement de 88% et pour n = 3 de 85 %.

### Pour n = 1 :

RMN ³¹P-{¹H} (CDCl₃)□ δ = 11,7 (s, N₃P₃), 30,1 (s, PO₃Me₂), 66,6 (s, P=S) ppm.

### Pour n = 3 :

RMN ³¹P-{¹H} (CDCl₃)□ δ = 11,7 (s, N₃P₃), 30,3 (s, PO₃Me₂), 66,6 (s, P=S) ppm.

### Exemple 36 : Synthèse de dendrimères phosphorés de type Gc présentant 12 extrémités acide amido-azabis-phosphonique en surface

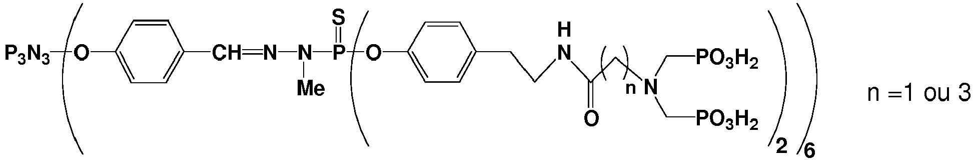

0,015 mmol de dendrimères à extrémité amido-azabis-phosphonate précédemment décrits (avec n = 1 ou 3) sont mis en solution sous atmosphère inerte dans 3 mL d'acétonitrile distillé. La solution est placée à 0°C puis 48 équivalents de BrTMS (0,73 mmol) sont ajoutés goutte à goutte sous argon. Le mélange est agité pendant 30 minutes à 0°C puis une nuit à température ambiante. Après méthanolyse et hydrolyse comme décrit dans le protocole habituel (ie DAB et PAMAM), le résidu sec est lavé avec de l'éther sec pour conduire au produit pur avec un rendement de 63% pour n = 1 et de 58% pour n = 3.

### Pour n = 1 :

RMN ³¹P-{¹H} (D₂O, THFd8)□ δ = 11,9 (s, PO₃H₂), 12,8 (s, N₃P₃), 66,5 (s, P=S) ppm.

### Pour n = 3 :

RMN ³¹P-{¹H} (D₂O, THFd8)□ δ = 12,1 (s, PO₃H₂), 12,8 (s, N₃P₃), 66,5 (s, P=S) ppm.

### Exemple 37: Synthèse des mono sels de sodium correspondants

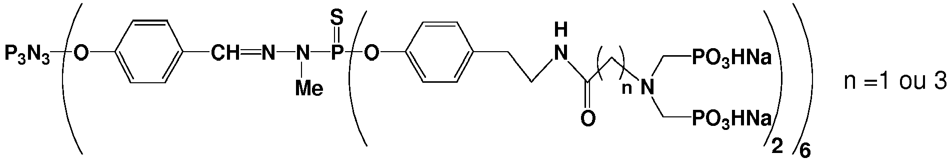

0,010 mmol de dendrimères à extrémités azabis-phosphonique de l'exemple précédent sont mis en solution dans 0,24 mmol de solution aqueuse de NaOH 0,1955N. Le mélange est agité 30 minutes à température ambiante puis lyophilisé. Les produits sont obtenus de façon quantitative.

### Pour n = 1 :

RMN ³¹P-{¹H} (D₂O, THFd8)□ δ = 12,8 (s, N₃P₃), 16,5 (s, PO₃HNa), 66,8 (s, P=S) ppm.

### Pour n = 3 :

RMN ³¹P-{¹H} (D₂O, THFd8)□ δ = 12,8 (s, N₃P₃), 16,2 (s, PO₃HNa), 66,8 (s, P=S) ppm.

### Exemple 38 : Propriétés lubrifiantes

Le composé de l'exemple 12 a été testé dans un test de lubrification Falex (test de rupture) en contact acier/acier. Ce test a permis de mettre en évidence que les dendrimères fonctionnalisés bisphosphonates de l'invention peuvent être utilisés en tant qu'additif extrême pression de lubrification. Ces additifs dilués à hauteur de 1 % permettent d'obtenir un niveau de lubrification égal ou supérieur à un alkylester phosphate, souvent utilisé en tant qu'additif de lubrification.

## Revendications

1. Dendrimères de génération n comprenant :
- un noyau central § de valence m ;
- éventuellement des chaînes de génération en arborescence autour du noyau ;
- une chaîne intermédiaire à l'extrémité de chaque chaîne de génération éventuellement présente ou à l'extrémité de chaque liaison autour du noyau, le cas échéant ; et
- un groupe terminal à l'extrémité de chaque chaîne intermédiaire, **caractérisés en ce que** ledit groupe terminal est représenté par la formule:
-(A1)<[A2-P(=O)(OX)₂]₂ (T)
où
- A1< représente le radical -CH< ou -N<
chacun des A2, identiques ou différents représentent indépendamment une liaison simple ou une chaîne hydrocarbonée de 1 à 6 chaînons, linéaire ou ramifiée, chacun desdits chaînons pouvant éventuellement être choisi parmi un hétéroatome, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle;
R et R', identiques ou différents, représentent indépendamment un atome d'hydrogène ou un radical -Alkyle, -Aryle, -Aralkyle ;
X représente un radical -alkyle, -Aryle, -H ou /M⁺ où M est un cation,
m représente un entier supérieur ou égal à 1 ;
n représente un entier compris entre 0 et 12 ;
< représente deux liaisons situées sur A1.

2. Dendrimères selon la revendication 1, tels qu'ils présentent une structure de type DAB, PAMAM, ou PMMH.

3. Dendrimères selon l'une quelconque des revendications précédentes, tels que A2 représente -Me-.

4. Dendrimères selon l'une quelconque des revendications précédentes, tels que le noyau central § est choisi parmi les groupes suivants :

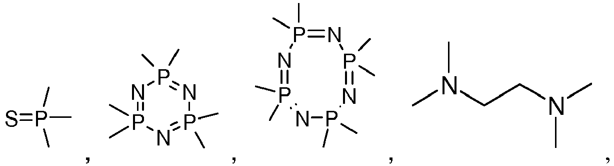

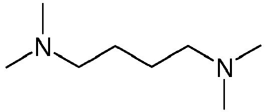

5. Dendrimères selon l'une quelconque des revendications précédentes, tels que le noyau central § est de formule :

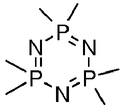

6. Dendrimères selon l'une quelconque des revendications précédentes, tels que m représente un entier compris entre 1 et 7.

7. Dendrimères selon l'une quelconque des revendications précédentes, tels que m est choisi parmi 3, 4 ou 6.

8. Dendrimères selon l'une quelconque des revendications précédentes, tels que n est compris entre 0 et 3.

9. Dendrimères selon l'une quelconque des revendications précédentes, tels que les chaînes de génération sont choisies parmi toute chaîne hydrocarbonée de 1 à 12 chaînons, linéaire ou ramifiée, contenant éventuellement une ou plusieurs double ou triple liaison, chacun desdits chaînons pouvant éventuellement être choisi parmi un hétéroatome, un groupe Aryle, Hétéroaryle, >C=O, >C=NR, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle.
où
R et R', identiques ou différents, représentent indépendamment un atome d'hydrogène ou un radical -Alkyle, -Aryle, -Aralkyle ;

10. Dendrimères selon l'une quelconque des revendications précédentes, tels que les chaînes de génération, identiques ou différentes, sont représentées par la formule :
-A-B-C(D)=N-N(E)-(P(=G))< (C1)
où :
A représente un atome d'oxygène, soufre, phosphore ou un radical -NR- ;
B représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
C représente l'atome de carbone,
D et E, identiques ou différents, représentent indépendamment un atome d'hydrogène, un radical -Alkyle, -OAlkyle, -Aryle, -Aralkyle, chacun pouvant être éventuellement substitué par un atome d'Halogène ou un radical -NO₂, -NRR', -CN, -CF₃, -OH, -Alkyle, -Aryle, -Aralkyle ;
G représente un atome de soufre, oxygène, azote, Soufre, Sélénium,
Tellure ou un radical =NR ;
N représente l'atome d'azote ;
P représente l'atome de phosphore.

11. Dendrimères selon la revendication 10 tels que dans la formule C1, A représente un atome d'oxygène.

12. Dendrimères selon la revendication 10 ou 11, tels que B représente un radical phényle éventuellement substitué.

13. Dendrimères selon l'une quelconque des revendications 10 à 12, tels que D représente un atome d'oxygène.

14. Dendrimères selon l'une quelconque des revendications 10 à 13, tels que E représente un radical -Alkyle.

15. Dendrimères selon l'une quelconque des revendications 10 à 14, tels que G représente un atome de soufre.

16. Dendrimères selon l'une quelconque des revendications 1 à 9, tels que les chaînes de génération sont représentées par la formule :
-A'-(C=O)-N(R)-B'-N< (C1')
où
A' et B' représentent indépendamment un radical -Alkyle, -Alkényle, -Alkynyle, chacun pouvant éventuellement être substitué par un ou plusieurs substituants choisi(s) parmi -Alkyle, -Hal, -NO₂, -NRR', -CN, -CF₃, -OH, -OAlkyle, -Aryle, -Aralkyle ;
R, R' sont définis comme précédemment.

17. Dendrimères selon la revendication 16, tels que A' et B' représentent indépendamment un radical -Alkyle-.

18. Dendrimères selon l'une quelconque des revendications 1 à 9, tels que les chaînes de génération sont représentées par la formule :
-A"-N< (C1")
où
A" représente un radical -Alkyle, -Alkényle, -Alkynyle, chacun éventuellement substitué par un ou plusieurs substituants choisi(s) parmi -Alkyle, -Hal, -NO₂, -NRR', -CN, -CF₃, -OH, -OAlkyle, -Aryle, -Aralkyle, où RR' sont définis comme précédemment.

19. Dendrimères selon la revendication 18, tels que A" représente un radical -Alkyle- éventuellement substitué.

20. Dendrimères selon l'une quelconque des revendications précédentes, tels que les chaînes intermédiaires sont choisies parmi toute chaîne hydrocarbonée de 1 à 12 chaînons, linéaire ou ramifiée, contenant éventuellement une ou plusieurs double ou triple liaison, chacun desdits chaînons pouvant éventuellement être choisi parmi un hétéroatome, un groupe Aryle, Hétéroaryle, >C=O, >C=NR, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle, où RR' sont définis comme précédemment.

21. Dendrimères selon l'une quelconque des revendications précédentes, tels que les chaînes intermédiaires sont représentées par la formule :
-J-K-L- (C2)
où
J représente un atome d'oxygène, soufre, ou un radical -NR- ;
K représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
L représente une chaîne hydrocarbonée de 1 à 6 chaînons, linéaire ou ramifiée, contenant éventuellement une ou plusieurs double ou triple liaison, chacun desdits chaînons pouvant éventuellement être un hétéroatome, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle,
où RR' sont définis comme précédemment.

22. Dendrimères selon la revendication 21, tels que J représente un atome d'oxygène.

23. Dendrimères selon l'une quelconque des revendications 21 ou 22, tels que K représente un radical -Phényle- éventuellement substitué.

24. Dendrimères selon l'une quelconque des revendications 21 à 23 tels que L représente un radical -(Alk)ₐ- ou le radical -C(D)=N-N(E)-(Alk)ₐ-.

25. Dendrimères selon l'une quelconque des revendications 1 à 20, tels que les chaînes intermédiaires sont représentées par la formule
-A'-(C=O)-N(R)-B'- (C2')
où A', B', R, R' sont définis comme dans la revendication 26 ou 17.

26. Dendrimères selon l'une quelconque des revendications 1 à 20, tels que les chaînes intermédiaires sont représentées par la formule
-A"- (C2")
où
A" est défini comme en revendication 19 ou 20.

27. Dendrimères selon l'une quelconque des revendications précédentes, tels que M⁺ représente un cation d'un élément du groupe IA, IIA, IIB ou IIIA de la classification périodique ou un cation d'une base azotée.

28. Dendrimères selon l'une quelconque des revendications précédentes, tels que M est choisi parmi les atomes de sodium, potassium.

29. Dendrimères selon l'une quelconque des revendications précédentes, tels que les chaînes de génération sont identiques.

30. Dendrimères selon l'une quelconque des revendications précédentes, tels que dans les formules (C1) et (C2), J et K sont respectivement égaux à A, B.

31. Dendrimères selon l'une quelconque des revendications précédentes, tels qu'ils sont représentés par la formule (I) suivante :
§-{{A-B-C(D)=N-N(E)-(P(=G))<}ⁿ[J-K-(Alk)ₐ-N<[A2-P(=O)(OX)₂]₂]₂}ₘ (I-1i)
dans laquelle :
§, A, B, C, D, E, G, N, P, J, K, X, A2, m, n sont définis comme dans les revendications précédentes, {}ⁿ désigne la structure en arborescence des chaînes de génération n dudit dendrimère, et a représente 0 ou 1.

32. Dendrimères selon l'une quelconque des revendications 1 à 30, tels qu'ils sont représentés par la formule (I-1ii) suivante :
§-{{A-B-C(D)=N-N(E)-(P(=G))<}ⁿ[J-K-C(D)=N-N(E)-(Alk)ₐ-CH<[A2-P(=O)(OX)2]2]2}ₘ, (I-1ii)
dans laquelle :
§, A, B, C, D, E, G, N, P, J, K, X, A2, m, n sont définis comme dans les revendications précédentes, {}ⁿ désigne la structure en arborescence des chaînes de génération n dudit dendrimère, et a représente 0 ou 1.

33. Dendrimères selon l'une quelconque des revendications 1 à 30, tels qu'ils sont représentés par la formule (I-2) suivante :
§-{{A'-(C=O)-N(R)-B'-N<}ⁿ[A2-P(=O)(OX)₂]₂]₂}ₘ (I-2)
dans laquelle :
§, A', B', C, N, P, X, A2, m, n sont définis comme précédemment et {}ⁿ désigne la structure en arborescence des chaînes de génération n dudit dendrimère.

34. Dendrimères selon l'une quelconque des revendications 1 à 30, tels qu'ils sont représentés par la formule (I-3) suivante :
§-{{A"-N<}ⁿ [A2-P(=O)(OX)₂]₂]₂}ₘ (I-3)
dans laquelle :
§, A", N, P, X, A2, m, n sont définis comme dans les revendications précédentes et {}ⁿ désigne la structure en arborescence des chaînes de génération n dudit dendrimère.

35. Procédé de préparation des dendrimères selon l'une quelconque des revendications précédentes, comprenant :
(i) la réaction du dendrimère correspondant présentant une fonction terminale -CHO, -CH=NR, -NH₂ ou -P(=G)Cl₂
avec un composé correspondant présentant une ou deux fonctionnalités -PO₃X₂ ;
(ii) suivie éventuellement, lorsque X représente H ou M, de l'étape consistant à transformer le dendrimère obtenu en (i) présentant une terminaison -PO₃Me₂ en le dendrimère correspondant présentant une terminaison -A1<[A2-P(=O)(OH)₂]₂,
(iii) suivie éventuellement, lorsque X représente M, de l'étape consistant à transformer le dendrimère obtenu en (ii) présentant une terminaison -A1<[A2-P(=O)(OH)₂]₂ en le sel du dendrimère correspondant présentant une terminaison -A1<[A2-P(=O)(OM)₂]₂.

36. Procédé de préparation des dendrimères selon la revendication 35, tel que lorsque le dendrimère selon l'invention est représenté par la formule (I-1i)
§-{{A-B-C(D)=N-N(E)-(P(=G))<}ⁿ[J-K-(Alk)ₐ-N<[A2-P(=O)(OX)₂]₂]₂}ₘ (I-1i)
dans laquelle §, A, B, C, D, E, G, N, P, J, K, A2, Alk, X, a, m, n, < sont définis comme précédemment,
l'étape (i) comprend la réaction sur le dendrimère correspondant de même génération n de formule
§-{{A-B-C(D)=N-N(E)-(P(=G))<Y₂}ⁿ (II-1i)
où Y représente -Cl ;
d'un composé de formule H-J-K-(Alk)ₐ-N<[A2-P(=O)(OX)₂]₂ (III)

37. Procédé selon la revendication 36, tel que la réaction est effectuée en solution dans un solvant polaire, aprotique, en présence d'une base organique ou inorganique, à température comprise entre -80°C et 100°C.

38. Procédé selon la revendication 35, tel que, lorsque le dendrimère selon l'invention est représenté par la formule (I-2) ou (I-3) :
§-{{A'-(C=O)-N(R)-B'-N<}ⁿ[A2-P(=O)(OX)₂]₂]₂}ₘ (I-2)
ou
§-{{A"-N<}ⁿA2-P(=O)(OX)₂]₂]₂}ₘ (I-3)
dans lesquelles §, A', A", B', B", C, N, P, A2, X, m, n, < sont définis comme précédemment, l'étape (i) comprend la réaction sur le dendrimère correspondant de même génération n de formule
§-{{A'-(C=O)-N(R)-B'-NH₂}ⁿ}ₘ (II-2)
ou
§-{{-A"-NH₂}ⁿ}ₘ (II-3)
d'un composé de formule
H-P(=O)(OX)₂ (IV),
en présence d'un composé de formule H-A2-(C=O)H correspondant.

39. Procédé selon la revendication 38, telle que la réaction est effectuée à température comprise entre -5°C et la température de reflux du mélange.

40. Procédé selon la revendication 35, tel que, lorsque le dendrimère selon l'invention est représenté par la formule (I-1ii)
§-{{A-B-C(D)=N-N(E)-(P(=G))<}ⁿ[J-K-C(D)=N-N(E)-(Alk)ₐ-CH<[A2-P(=O)(OX)₂]₂]₂}ₘ (I-1ii)
dans laquelle :
§, A, B, C, D, E, G, N, P, J, K, L, X, A2, m, n, a sont définis comme précédemment,
l'étape (i) comprend la réaction sur le dendrimère correspondant de formule
§-{{A-B-C(D)=N-N(E)-(P(=G))<}ⁿ-[J-K-L']₂}ₘ (II-1ii)
où L' représente un radical -CHO ;
d'un composé de formule
(Alk')ₐ-CH-[A2-P(=O)(OX)₂] (VI)
où Alk' correspondant à Alk défini précédemment dans la formule (I-1ii) représente un radical Alkényle, et X est défini comme précédemment, en présence d'un composé de formule
H₃C-NH-NH₂ (VII)

41. Procédé selon la revendication 41, tel que la réaction est effectuée en milieu solvant aprotique, polaire, par ajout des composés (VI) et (VII) au dendrimère (II-1ii) à une température comprise entre -80°C et 100°C.

42. Procédé de préparation des dendrimères selon l'une quelconque des revendications 35 à 41, tel que l'étape (ii) est effectuée :
- par action d'halogénure de triméthylsilane,
- suivie de l'action de MeOH anhydre, ajouté au mélange réactionnel.

43. Procédé de préparation selon la revendication 42, tel que on opère dans un solvant organique aprotique, polaire, par ajout d'halogénure de triméthylsilane, en maintenant le mélange réactionnel à température comprise entre -80°C et 50°C.

44. Procédé de préparation des dendrimères selon l'une quelconque des revendications 35 à 43, tel que dans l'étape (iii), les sels des composés selon l'invention sont obtenus à partir des composés selon l'invention présentant un groupe terminal dans lequel X représente un atome d'hydrogène.

45. Procédé de préparation des dendrimères selon la revendication 44, tel que on opère en solution, dans un solvant convenable protique ou aprotique, polaire, en présence d'une base organique ou inorganique selon le sel désiré.

46. Composés de formule (III) :
H-J-K-(Alk)ₐ-N<[A2-P(=O)(OX)₂]₂ (III)
dans laquelle
X représente un radical -Alkyle, -Aryle, H, ou M⁺, où M⁺ est un cation ;
J représente un atome d'oxygène, soufre, ou un radical -NR- ;
K représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
chacun des A2, identiques ou différents représentent indépendamment une liaison simple ou une chaîne hydrocarbonée de 1 à 6 chaînons, linéaire ou ramifiée, chacun desdits chaînons pouvant éventuellement être choisi parmi un hétéroatome, de préférence l'azote, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle;
-Alk- représente un radical alkyle ;
a représente 0 ou 1.

47. Procédé de préparation d'un composé de formule (III) selon la revendication 46 comprenant l'étape suivante :
H-J-K-(Alk)ₐ-NH₂ (VIII) + H-A2'-(C=O)H (V) + H-P(=O)(OX)₂ (IV) → H-J-K-(Alk)ₐ-N<[A2-PO₃X₂]₂ (III)
où, dans la formule (V), -A2'- est un radical correspondant à A2.

48. Procédé selon la revendication 47, tel que on opère par ajout des composés (VIII) et (IV), et du composé (V), à température comprise entre -5 et 25°C.

49. Utilisation d'un dendrimère selon l'une quelconque des revendications 1 à 34 pour traiter ou être au contact de surfaces.

50. Utilisation selon la revendication 49, telle que lesdites surfaces sont métalliques, à base de silice ou à base d'oxydes.

51. Utilisation selon la revendication 49 ou 50, pour laquelle ledit dendrimère est utilisé comme additif dans une composition destinée au contact ou au traitement de ladite surface.

52. Utilisation selon l'une quelconque des revendications 49 à 51 selon laquelle ledit dendrimère est utilisé comme agent anti-corrosion, agent de lubrification, agent antitartre ou à titre d'agent retardateur de feu.

## Patentansprüche

1. Dendrimere der Generation n, Folgendes umfassend:
- einen zentralen Kern § mit der Valenz m;
- gegebenenfalls Baumwuchsgenerationsketten um den Kern;
- eine Zwischenkette am Ende jeder eventuell vorhandenen Generationskette bzw. gegebenenfalls am Ende jeder Verbindung um den Kern; und
- eine endständige Gruppe am Ende jeder Zwischenkette, **dadurch gekennzeichnet, dass** die endständige Gruppe durch die Formel
-(A1)<[A2-P(=O)(OX)₂]₂ (T)
dargestellt ist, worin
- A1< das -CH<- oder -N<-Radikal darstellt,
die A2, identisch oder unterschiedlich, jeweils unabhängig eine Einfachbindung oder eine lineare oder verzweigte Kohlenwasserstoffkette mit 1 bis 6 Gliedern darstellen, wobei jedes der Glieder gegebenenfalls aus einem Heteroatom ausgewählt sein kann, wobei jedes Glied gegebenenfalls durch einen oder mehrere Substituenten substituiert sein kann, der/die aus -Akyl, -Hal, -NO₂, -NRR', -CN, -CF₃, -OH, -OAlkyl,-Aryl, -Aralkyl ausgewählt ist/sind;
R und R', identisch oder unterschiedlich, unabhängig ein Wasserstoffatom oder ein -Alkyl, -Aryl-, -Aralkylradikal darstellen;
X ein -Alkyl-, -Aryl-, -H- oder /M⁺-Radikal darstellt, worin M ein Kation ist,
m eine ganze Zahl größer oder gleich 1 darstellt;
n eine ganze Zahl zwischen 0 und 12 darstellt;
< zwei Bindungen darstellt, die sich an A1 befinden.

2. Dendrimere nach Anspruch 1, wobei sie eine Struktur des Typs DAB, PAMAM oder PMMH aufweisen.

3. Dendrimere nach einem der vorhergehenden Ansprüche, wobei A2 -Me- darstellt.

4. Dendrimere nach einem der vorhergehenden Ansprüche, wobei der zentrale Kern § aus den folgenden Gruppen ausgewählt ist:

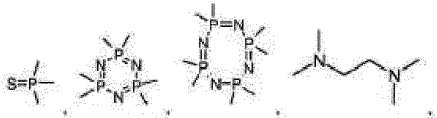

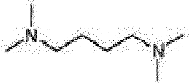

5. Dendrimere nach einem der vorhergehenden Ansprüche, wobei der zentrale Kern § die Formel 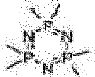 hat.

6. Dendrimere nach einem der vorhergehenden Ansprüche, wobei m eine ganze Zahl zwischen 1 und 7 darstellt.

7. Dendrimere nach einem der vorhergehenden Ansprüche, wobei m aus 3, 4 oder 6 ausgewählt ist.

8. Dendrimere nach einem der vorhergehenden Ansprüche, wobei n zwischen 0 und 3 beträgt.

9. Dendrimere nach einem der vorhergehenden Ansprüche, wobei die Generationsketten aus jeder linearen oder verzweigten Kohlenwasserstoffkette mit 1 bis 12 Gliedern ausgewählt ist, die gegebenenfalls eine oder mehrere Doppel- oder Dreifachbindung/en enthalten, wobei jedes der Glieder gegebenenfalls aus einem Heteroatom, einer Aryl-, Heteroaryl-, >C=O-, >C=NR-Gruppe ausgewählt sein kann, wobei jedes Glied gegebenenfalls durch einen oder mehrere Substituenten substituiert sein kann, der/die aus -Alkyl, -Hal, -NO₂, -NRR', -CN, -CF₃, -OH, -OAlkyl, -Aryl, -Aralkyl ausgewählt ist/sind, worin
R und R', identisch oder unterschiedlich, unabhängig ein Wasserstoffatom oder ein -Alkyl, -Aryl-, -Aralkylradikal darstellen.

10. Dendrimere nach einem der vorhergehenden Ansprüche, wobei die Generationsketten, identisch oder unterschiedlich, durch die Formel
-A-B-C(D)-N-N(E)-(P(G))< (C1)
dargestellt sind, worin
A ein Sauerstoff-, Schwefel-, Phosphoratom oder ein -NR-Radikal darstellt,
B ein -Aryl-, -Heteroaryl-, -Alkylradikal darstellt, das jeweils gegebenenfalls durch ein Halogenatom oder ein -NO₂-, -NRR'-, -CN-, -CF₃-, -OH-, -Alkyl-, -Aryl-, -Aralkylradikal substituiert sein kann;
C das Kohlenstoffatom darstellt,
D und E, identisch oder unterschiedlich, unabhängig ein Wasserstoffatom, ein -Alkyl-, -OAlkyl-, -Aryl-, -Aralkylradikal darstellen, das jeweils gegebenenfalls durch ein Halogenatom oder ein -NO₂-, -NRR'-, -CN-, -CF₃-, -OH-, -Alkyl-, -Aryl-, -Aralkylradikal substituiert sein kann;
G ein Schwefel-, Sauerstoff-, Stickstoffatom, Schwefel, Selen, Tellur oder ein =NR-Radikal darstellt;
N das Stickstoffatom darstellt;
P das Phosphoratom darstellt.

11. Dendrimere nach Anspruch 10, wobei A in der Formel C1 ein Sauerstoffatom darstellt.

12. Dendrimere nach Anspruch 10 oder 11, wobei B ein gegebenenfalls substituiertes Phenylradikal darstellt.

13. Dendrimere nach einem der Ansprüche 10 bis 12, wobei D ein Sauerstoffatom darstellt.

14. Dendrimere nach einem der Ansprüche 10 bis 13, wobei E ein -Alkylradikal darstellt.

15. Dendrimere nach einem der Ansprüche 10 bis 14, wobei G ein Schwefelatom darstellt.

16. Dendrimere nach einem der Ansprüche 1 bis 9, wobei die Generationsketten durch die Formel
-A'-(C=O)-N(R)-B'-N< (C1')
dargestellt sind, worin
A' und B' unabhängig ein -Alkyl, -Alkenyl, -Alkynylradikal darstellen, die jeweils gegebenenfalls durch einen oder mehrere Substituenten ersetzt sein können, der/die aus -Alkyl, -Hal, -NO₂, -NRR', -CN, -CF₃, -OH, -OAlkyl, -Aryl, -Aralkyl ausgewählt ist/sind;
R, R' wie zuvor definiert sind.

17. Dendrimere nach Anspruch 16, wobei A' und B' unabhängig ein -Alkylradikal darstellen.

18. Dendrimere nach einem der Ansprüche 1 bis 9, wobei die Generationsketten durch die Formel:
-A"-N< (C1")
dargestellt sind, worin
A" unabhängig ein -Alkyl, -Alkenyl, -Alkynylradikal darstellen, die jeweils gegebenenfalls durch einen oder mehrere Substituenten ersetzt sein können, der/die aus -Alkyl, -Hal, -NO₂, -NRR', -CN, -CF₃, -OH, -OAlkyl, -Aryl, -Aralkyl ausgewählt ist/sind, wobei RR' wie zuvor definiert sind.

19. Dendrimere nach Anspruch 18, wobei A" eine gegebenenfalls substituiertes - Alkyl-Radikal darstellt.

20. Dendrimere nach einem der vorhergehenden Ansprüche, wobei die Zwischenketten aus jeder linearen oder verzweigten Kohlenwasserstoffkette mit 1 bis 12 Gliedern ausgewählt sind, die gegebenenfalls eine oder mehrere Doppel- oder Dreifachbindung/en enthalten, wobei jedes der Glieder gegebenenfalls aus einem Heteroatom, einer Aryl-, Heteroaryl-, >C=O-, >C=NR-Gruppe ausgewählt sein kann, wobei jedes Glied gegebenenfalls durch einen oder mehrere Substituenten substituiert sein kann, der/die aus -Alkyl, -Hal, -NO₂, -NRR', -CN, -CF₃, -OH, -OAlkyl, -Aryl, -Aralkyl ausgewählt ist/sind, worin RR' wie zuvor definiert sind.

21. Dendrimere nach einem der vorhergehenden Ansprüche, wobei die Zwischenketten durch die Formel
-J-K-L- (C2)
dargestellt sind, worin
J ein Sauerstoffatom, Schwefel oder ein -NR--Radikal darstellt;
K ein -Aryl-, -Heteroaryl-, -Alkyl--Radikal darstellt, die jeweils gegebenenfalls durch ein Halogenatom oder ein -NO₂-, -NRR'-, -CN-, -CF₃-, -OH-, -Alkyl-, -Aryl-, -Aralkylradikal substituiert sein können;
L eine Kohlenwasserstoffkette mit 1 bis 6 Gliedern, linear oder verzweigt, darstellt, die gegebenenfalls eine oder mehrere Doppel- oder Dreifachbindung/en enthalten können, wobei jedes Glied gegebenenfalls durch einen oder mehrere Substituenten substituiert sein kann, der/die aus -Alkyl, -Hal, -NO₂, -NRR', -CN, -CF₃, -OH, -OAlkyl, -Aryl, -Aralkyl ausgewählt ist/sind,
worin RR' wie zuvor definiert sind.

22. Dendrimere nach Anspruch 21, wobei J ein Sauerstoffatom darstellt.

23. Dendrimere nach einem der Ansprüche 21 oder 22, wobei K ein gegebenenfalls substituiertes -Phenyl--Radikal darstellt.

24. Dendrimere nach einem der Ansprüche 21 bis 23, wobei L ein Radikal -(Alk)ₐ⁻-Radikal oder das -C(D)=N-N€-(Alk)ₐ⁻-Radikal darstellt.

25. Dendrimere nach einem der Ansprüche 1 bis 20, wobei die Zwischenketten durch die Formel
-A'-(C=O)-N(R)-B'- (C2')
dargestellt sind, worin A', B', R, R' wie in Anspruch 26 oder 17 definiert sind.

26. Dendrimere nach einem der Ansprüche 1 bis 20, wobei die Zwischenketten durch die Formel
-A"- (C2")
dargestellt sind, worin
A" wie in Anspruch 19 oder 20 definiert ist.

27. Dendrimere nach einem der vorhergehenden Ansprüche, wobei M⁺ ein Kation der Gruppe IA, IIA, IIB oder IIIA des Periodensystems oder ein Kation einer Stickstoffbase ist.

28. Dendrimere nach einem der vorhergehenden Ansprüche, wobei M aus Natrium-, Kaliumatomen ausgewählt ist.

29. Dendrimere nach einem der vorhergehenden Ansprüche, wobei die Generationsketten identisch sind.

30. Dendrimere nach einem der vorhergehenden Ansprüche, wobei J und K in den Formeln (C1) und (C2) jeweils gleich A, B sind.

31. Dendrimere nach einem der vorhergehenden Ansprüche, wie sie durch die folgende Formel (I) dargestellt sind:
§-{{A-B-C(D)=N-N(E)-(P(=G))<}ⁿ[J-K-(Alk)ₐ-N<[A2-P(=O)(OX)₂]₂]₂}ₘ (I-1i),
in der:
§, A, B, C, D, E, G, N, P, J, K, X, A2, m, n wie in den vorhergehenden Ansprüchen definiert sind, {}ⁿ die Baumwuchsstruktur der Ketten der Generation n des Dendrimers bezeichnet, und a 0 oder 1 darstellt.

32. Dendrimere nach einem der Ansprüche 1 bis 30, wie sie durch die folgende Formel (I-1ii) dargestellt sind:
§-{{A-B-C(D)=N-N(E)-(P(=G))<}ⁿ[J-K-C(D)=N-N(E)-(Alk)ₐ-CH<[A2-P(=O)(OX)₂]₂]₂}ₘ (I-1ii)
in der:
§, A, B, C, D, E, G, N, P, J, K, X, A2, m, n wie in den vorhergehenden Ansprüchen definiert sind, {}ⁿ die Baumwuchsstruktur der Ketten der Generation n des Dendrimers bezeichnet, und a 0 oder 1 darstellt.

33. Dendrimere nach einem der Ansprüche 1 bis 30, wie sie durch die folgende Formel (I-2) dargestellt sind:
§-{{A'-(C=O)-N(R)-B'-N<}ⁿ[A2-P(=O)(OX)₂]₂]₂}ₘ (I-2)
in der:
§, A', B', C, N, P, X, A2, m, n wie in den vorhergehenden Ansprüchen definiert sind und {}ⁿ die Baumwuchsstruktur der Ketten der Generation n des Dendrimers bezeichnet.

34. Dendrimere nach einem der Ansprüche 1 bis 30, wie sie durch die folgende Formel (I-3) dargestellt sind:
§-{{A"-N<}ⁿ[A2-P(=O)(OX)₂]₂]₂}ₘ (I-3)
in der:
§, A", N, P, X, A2, m, n wie in den vorhergehenden Ansprüchen definiert sind und {}ⁿ die Baumwuchsstruktur der Ketten der Generation n des Dendrimers bezeichnet.

35. Verfahren zur Herstellung der Dendrimere nach einem der vorhergehenden Ansprüche, Folgendes umfassend:
(i) Reaktion des entsprechenden Dendrimers, das eine -CHO-, -CH=NR, -NH₂- oder -P(=G)Cl₂-Endgruppe aufweist,
mit einer entsprechenden Verbindung, die eine oder zwei -PO₃X₂-Funktionalität/en aufweist;
(ii) gefolgt gegebenenfalls, wenn X H oder M darstellt, von dem Schritt, der darin besteht, das in (i) erhaltene Dendrimer, das eine -PO₃Me₂-Endstelle aufweist, in das entsprechende Dendrimer umzuwandeln, das eine -A1<[A2-P(=O)(OH)₂]₂-Endstelle aufweist,
(iii) gefolgt gegebenenfalls, wenn X M darstellt, von dem Schritt, der darin besteht, das in (ii) erhaltene Dendrimer, das eine -A1<[A2-P(=O)(OH)₂]₂-Endstelle aufweist, in das Salz des entsprechenden Dendrimers umzuwandeln, das eine -A1<[A2-P(=O)(OM)₂]₂-Endstelle aufweist.

36. Verfahren zur Herstellung der Dendrimere nach Anspruch 35, wobei, wenn das erfindungsgemäße Dendrimer durch die Formel (I-1i)
§-{{A-B-C(D)=N-N(E)-(P(=G))<}ⁿ[J-K-(Alk)ₐ-N<[A2-P(=O)(OX)₂]₂]₂}ₘ (I-1i)
dargestellt wird,
in der §, A, B, C, D, E, G, N, P, J, K, A2, Alk, X, a, m, n, < wie zuvor definiert sind, der Schritt (i) die Reaktion am entsprechenden Dendrimer derselben Generation n der Formel
§-{{A-B-C(D)=N-N(E)-(P(=G))<Y₂}ⁿ (II-1i),
worin
Y-Cl darstellt;
H-J-K-(Alk)ₐ-N<[A2-P(=O)(OX)₂]₂ (III)
einer Verbindung der Formel umfasst.

37. Verfahren nach Anspruch 36, wobei die Reaktion in Lösung in einem aprotischen polaren Lösungsmittel im Beisein einer organischen oder anorganischen Base bei einer Temperatur zwischen -80°C und 100°C erfolgt.

38. Verfahren nach Anspruch 35, wobei, wenn das erfindungsgemäße Dendrimer durch die Formel (I-2) oder (1-3):
§-{{A'-(C=O)-N(R)-B'-N<}ⁿ[A2-P(=O)(OX)₂]₂]₂}ₘ (I-2)
oder
§-{{A"-M<}ⁿ[A2-P(=O)(OX)₂]₂]₂}ₘ (I-3)
dargestellt wird, in denen §, A', A", B', B", C, N, P, A2, X, m, n, < wie zuvor definiert sind, der Schritt (i) die Reaktion am entsprechenden Dendrimer derselben Generation n der Formel
§-{{A'-(C=O)-N(R)-B'-NH₂]ⁿ}ₘ (II-2)
oder
§-{{-A"-NH₂}ⁿ}ₘ (II-3)
einer Verbindung der Formel H-P(=O)(OX)₂ (IV).
im Beisein einer entsprechenden Verbindung der Formel H-A2-(C=O)H umfasst.

39. Verfahren nach Anspruch 38, wobei die Reaktion bei einer Temperatur zwischen -5°C und der Rückflusstemperatur des Gemischs erfolgt.

40. Verfahren nach Anspruch 35, wobei, wenn das erfindungsgemäße Dendrimer durch die Formel
§-{{A-B-C(D)=N-N(E)-(P(=G))<}ⁿ[J-K-C(D)=N-N(E)-(Alk)ₐ-CH<[A2-P(=O)(OX)₂]₂]₂}ₘ (I-1ii)
dargestellt wird, in der:
§, A, B, C, D, E, G, N, P, J, K, L, X, A2, m, n, a wie zuvor definiert sind, der Schritt (i) die Reaktion am entsprechenden Dendrimer der Formel
§-[[A-B-C(D)=N-N(E)-(P(=G))<]ⁿ-[J-K-L']₂]ₘ (II-1ii)
worin L' ein -CHO-Radikal darstellt;
einer Verbindung der Formel (Alk')ₐ-CH-[A2-P(=O)(OX)₂] (VI) ,
worin Alk', das Alk entspricht, das zuvor in der Formel (I-1ii) definiert wurde, ein Alkenylradikal darstellt, und X wie zuvor definiert ist, im Beisein einer Verbindung der Formel
H₃C-NH-NH₂ (VII)
umfasst.

41. Verfahren nach Anspruch 40, wobei die Reaktion in einem apriotischen polaren Lösungsmittelmedium durch Zugabe der Verbindungen (VI) und (VII) zum Dendrimer (II-1ii) bei einer Temperatur zwischen -80°C und 100°C erfolgt.

42. Verfahren zur Herstellung der Dendrimere nach einem der Ansprüche 35 bis 41, wobei der Schritt (ii) erfolgt:
- durch Einwirkung von Trimethylsilanhalogenid,
- gefolgt von der Einwirkung von der Reaktionsmischung zugesetztem wasserfreiem MeOH.

43. Herstellungsverfahren nach Anspruch 42, wobei in einem polaren apriotischen organischen Lösungsmittel durch Zugabe von Trimethylsilanhalogenid gearbeitet wird, wobei die Reaktionsmischung auf einer Temperatur zwischen -80°C und 50°C gehalten wird.

44. Verfahren zur Herstellung der Dendrimere nach einem der Ansprüche 35 bis 43, wobei im Schritt (iii) die Salze der erfindungsgemäßen Verbindungen aus erfindungsgemäßen Verbindungen gewonnen werden, die eine endständige Gruppe aufweisen, in der X ein Wasserstoffatom darstellt.

45. Verfahren zur Herstellung der Dendrimere nach Anspruch 44, wobei in Lösung in einem geeigneten polaren protischen oder apriotischen Lösungsmittel im Beisein einer organischen oder organischen Base je nach dem gewünschten Salz gearbeitet wird.

46. Verbindungen der Formel (III),
H-J-K-(Alk)ₐN<[A2-P(=O)(OX)₂]₂ (III),
in der
X ein -Alkyl, -Aryl, H, oder M⁺-Radikal darstellt, wobei M⁺ ein Kation ist;
J ein Sauerstoffatom, Schwefel oder ein -NR--Radikal darstellt;
K ein -Aryl-, -Heteroaryl-, -Alkyl--Radikal darstellt, die jeweils gegebenenfalls durch ein Halogenatom oder ein -NO₂-, -NRR'-, -CN-, -CF₃-, -OH-, -Alkyl-, -Aryl-, -Aralkylradikal substituiert sein können;
wobei A2 jeweils, identisch oder unterschiedlich, unabhängig eine Einfachbindung oder eine Kohlenwasserstoffkette mit 1 bis 6 Glied/ern, linear oder verzweigt, darstellen, wobei jedes der Glieder gegebenenfalls aus einem Heteroatom, vorzugsweise Stickstoff, ausgewählt sein kann, wobei jedes Glied gegebenenfalls durch einen oder mehrere Substituenten substituiert sein kann, der/die aus -Alkyl, -Hal, -NO₂,-NRR', -CN, -CF₃, -OH, -OAlkyl, -Aryl, -Aralkyl ausgewählt ist/sind;
-Alk- ein Alkylradikal darstellt;
a 0 oder 1 darstellt.

47. Verfahren zur Herstellung einer Verbindung der Formel (III) nach Anspruch 46, den folgenden Schritt umfassend.
H-J-K-(Alk)ₐ-NH₂ (VIII) + H-A2'-(C=O)H (V) + H-P(=O)(OX)₂ (IV) → H-J-K-(Alk)ₐ-N<[A2-PO₃X₂]₂ (III),
wobei -A2' in der Formel (V) ein A2 entsprechendes Radikal ist.

48. Verfahren nach Anspruch 47, wobei durch Zugabe der Verbindungen (VIII) und (IV) und der Verbindung (V) bei einer Temperatur zwischen -5 und 25°C gearbeitet wird.

49. Verwendung eines Dendrimers nach einem der Ansprüche 1 bis 34, zur Behandlung von Oberflächen oder um mit Oberflächen in Kontakt zu stehen.

50. Verwendung nach Anspruch 49, wobei die Oberflächen metallisch, auf Basis von Siliziumoxid oder auf Basis von Oxiden sind.

51. Verwendung nach Anspruch 49 oder 50, für die das Dendrimer als Additiv in einer Zusammensetzung verwendet wird, die zum Kontakt mit oder zur Behandlung der Oberfläche bestimmt ist.

52. Verwendung nach einem der Ansprüche 49 bis 51, gemäß der das Dendrimer als Antikorrosionsmittel, Schmiermittel, Antibelagmittel oder als Brandschutzmittel verwendet wird.

## Claims

1. Dendritic polymers of generation n comprising:
- a central core § of valence m ;
- optionally generation chains branching around the core;
- an intermediate chain at the end of each generation chain that may be present or at the end of each bond around the core, where appropriate; and
- a terminal group at the end of each intermediate chain,
**characterised in that** said terminal group is represented by formula:
-(A1)<[A2-P(=O)(OX)₂]₂ (T)
wherein
- A1 < represents the radical -CH< or -N<;
the radicals A2, which may be identical or different, each independently of the other represents a single bond or a linear or branched hydrocarbon chain having from 1 to 6 chain members, it being possible for each of said chain members optionally to be selected from a heteroatom, it being possible for each chain member to be optionally substituted by one or more substituents selected from -Alkyl, -Hal, -NO₂, -NRR', -CN, -CF₃, -OH, -OAlkyl, -Aryl, -Aralkyl;
R and R', which may be identical or different, each independently of the other represents a hydrogen atom or a radical -Alkyl, -Aryl, -Aralkyl;
X represents a radical -alkyl, -Aryl, -H or /M⁺, where M is a cation,
m represents an integer greater than or equal to 1;
n represents an integer from 0 to 12 ;
< represents two bonds situated on A1.

2. Dendritic polymers according to claim 1, having a structure of the DAB, PAMAM or PMMH type.

3. Dendritic polymers according to any one of the preceding claims, wherein A2 represents -Me-.

4. Dendritic polymers according to any one of the preceding claims, wherein the central core § is selected from the following groups:

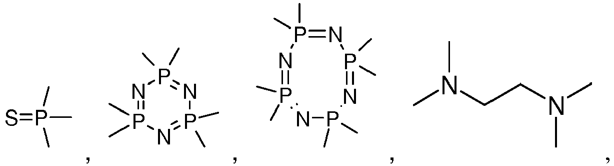

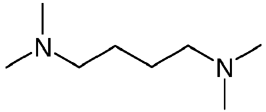

5. Dendritic polymers according to any one of the preceding claims, wherein the central core § has the formula:

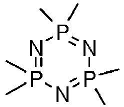

6. Dendritic polymers according to any one of the preceding claims, wherein m represents an integer from 1 to 8.

7. Dendritic polymers according to any one of the preceding claims, wherein m is selected from 3, 4 and 6.

8. Dendritic polymers according to any one of the preceding claims, wherein n is from 0 to 3.

9. Dendritic polymers according to any one of the preceding claims, wherein the generation chains are selected from any linear or branched hydrocarbon chain having from 1 to 12 chain members and optionally containing one or more double or triple bonds, it being possible for each of said chain members optionally to be selected from a heteroatom, a group Aryl, Heteroaryl, >C=O, >C=NR, it being possible for each chain member to be optionally substituted by one or more substituents selected from -Alkyl, -Hal, -NO₂, -NRR', -CN, -CF₃, -OH, -OAlkyl, -Aryl, -Aralkyl, wherein
R and R', which may be identical or different, each independently of the other represents a hydrogen atom or a radical -Alkyl, -Aryl, -Aralkyl.

10. Dendritic polymers according to any one of the preceding claims, wherein the generation chains, which may be identical or different, are represented by formula:
-A-B-C(D)=N-N(E)-(P(=G))< (C1)
wherein:
A represents an oxygen, sulfur or phosphorus atom or a radical -NR-;
B represents a radical -Aryl-, -Heteroaryl-, -Alkyl-, each of which may optionally be substituted by a Halogen atom or by a radical -NO₂, -NRR', -CN, -CF₃, -OH, -Alkyl, -Aryl, -Aralkyl;
C represents a carbon atom,
D and E, which may be identical or different, each independently of the other represents a hydrogen atom, a radical -Alkyl, -OAlkyl, -Aryl, -Aralkyl, each of which may optionally be substituted by a Halogen atom or by a radical -NO₂, -NRR', -CN, -CF₃, -OH, -Alkyl, -Aryl, -Aralkyl;
G represents a sulfur, oxygen, nitrogen, Sulfur, Selenium or Tellurium atom or a radical =NR ;
N represents a nitrogen atom;
P represents a phosphorus atom.

11. Dendritic polymers according to claim 10, wherein in formula C1 A represents an oxygen atom.

12. Dendritic polymers according to claim 10 or 11, wherein B represents an optionally substituted phenyl radical.

13. Dendritic polymers according to any one of claims 10 to 12, wherein D represents an oxygen atom.

14. Dendritic polymers according to any one of claims 10 to 13, wherein E represents a radical -Alkyl.

15. Dendritic polymers according to any one of claims 10 to 14, wherein G represents a sulfur atom.

16. Dendritic polymers according to any one of claims 1 to 9, wherein the generation chains are represented by formula:
-A'-(C=O)-N(R)-B'-N< (C1')
wherein
A' and B' each independently of the other represents a radical -Alkyl, -Alkenyl, -Alkynyl, each of which may optionally be substituted by one or more substituents selected from -Alkyl, -Hal, -NO₂, -NRR', -CN, -CF₃, -OH, -OAlkyl, -Aryl, -Aralkyl;
R, R' have the meaning defined hereinbefore.

17. Dendritic polymers according to claim 16, wherein A' and B' each independently of the other represents a radical -Alkyl-.

18. Dendritic polymers according to any one of claims 1 to 9, wherein the generation chains are represented by formula:
-A"-N< (C1")
wherein
A" represents a radical -Alkyl, -Alkenyl, -Alkynyl, each of which is optionally substituted by one or more substituents selected from -Alkyl, -Hal, -NO₂, -NRR', -CN, -CF₃, -OH, -OAlkyl, -Aryl, -Aralkyl, wherein RR' have the meaning defined hereinbefore.

19. Dendritic polymers according to claim 18, wherein A" represents an optionally substituted radical -Alkyl-.

20. Dendritic polymers according to any one of the preceding claims, wherein the intermediate chains are selected from any linear or branched hydrocarbon chain having from 1 to 12 chain members and optionally containing one or more double or triple bonds, it being possible for each of said chain members optionally to be selected from a heteroatom, a group Aryl, Heteroaryl, >C=O, >C=NR, it being possible for each chain member to be optionally substituted by one or more substituents selected from -Alkyl, -Hal, -NO₂, -NRR', -CN, -CF₃, -OH, -OAlkyl, -Aryl, -Aralkyl,
wherein RR' have the meaning defined hereinbefore.

21. Dendritic polymers according to any one of the preceding claims, wherein the intermediate chains are represented by formula:
-J-K-L- (C2)
wherein
J represents an oxygen atom, a sulfur atom or a radical -NR-;
K represents a radical -Aryl-, -Heteroaryl-, -Alkyl-, each of which may optionally be substituted by a Halogen atom or by a radical -NO₂, -NRR', -CN, -CF₃, -OH, -Alkyl, -Aryl, -Aralkyl;
L represents a linear or branched hydrocarbon chain having from 1 to 6 chain members and optionally containing one or more double or triple bonds, it being possible for each of said chain members optionally to be a heteroatom, it being possible for each chain member to be optionally substituted by one or more substituents selected from -Alkyl, -Hal, -NO₂, -NRR', -CN, -CF₃, -OH, -OAlkyl, -Aryl, -Aralkyl,
wherein RR' have the meaning defined hereinbefore.

22. Dendritic polymers according to claim 21, wherein J represents an oxygen atom.

23. Dendritic polymers according to either claim 21 or claim 22, wherein K represents an optionally substituted -Phenyl- radical.

24. Dendritic polymers according to any one of claims 21 to 23, wherein L represents a radical -(Alk)ₐ- or the radical -C(D)=N-N(E)-(Alk)ₐ-.

25. Dendritic polymers according to any one of claims 1 to 20, wherein the intermediate chains are represented by formula
-A'-(C=O)-N(R)-B'- (C2')
wherein A', B', R, R' have the meaning defined in claim 16 or 17.

26. Dendritic polymers according to any one of claims 1 to 20, wherein the intermediate chains are represented by formula
-A"- (C2")
wherein
A" has the meaning defined in claim 19 or 20.

27. Dendritic polymers according to any one of the preceding claims, wherein M⁺ represents a cation of an element of group IA, IIA, IIB or IIIA of the periodic table or a cation of a nitrogen-containing base.

28. Dendritic polymers according to any one of the preceding claims, wherein M is selected from the atoms sodium and potassium.

29. Dendritic polymers according to any one of the preceding claims, wherein the generation chains are identical.

30. Dendritic polymers according to any one of the preceding claims, wherein in formulae (C1) and (C2), J and K are equal to A and B, respectively.

31. Dendritic polymers according to any one of the preceding claims which are represented by the following formula (I):
§-{{A-B-C(D)=N-N(E)-(P(=G))<}ⁿ[J-K-(Alk)ₐ-N<[A2-P(=O)(OX)₂]₂]₂}ₘ (I-1i)
in which:
§, A, B, C, D, E, G, N, P, J, K, X, A2, m, n have the meaning defined in the preceding claims, {}ⁿ denotes the branched structure of the generation n chains of said dendritic polymer, and a represents 0 or 1.

32. Dendritic polymers according to any one of claims 1 to 30 which are represented by the following formula (I-1ii):
§-{{A-B-C(D)=N-N(E)-(P(=G))<}ⁿ[J-K-C(D)=N-N(E)-(Alk)ₐ-CH<[A2-P(=O)(OX)₂]₂]₂}ₘ, (I-1ii)
in which:
§, A, B, C, D, E, G, N, P, J, K, X, A2, m, n have the meaning defined in the preceding claims, {}ⁿ denotes the branched structure of the generation n chains of said dendritic polymer, and a represents 0 or 1.

33. Dendritic polymers according to any one of claims 1 to 30 which are represented by the following formula (I-2):
§-{{A'-(C=O)-N(R)-B'-N<}ⁿ [A2-P(=O)(OX)₂]₂]₂}ₘ (I-2)
in which:
§, A', B', C, N, P, X, A2, m, n have the meaning defined hereinbefore and {}ⁿ denotes the branched structure of the generation n chains of said dendritic polymer.

34. Dendritic polymers according to any one of claims 1 to 30 which are represented by the following formula (I-3):
§-{{A"-N<}ⁿ [A2-P(=O)(OX)₂]₂]₂}ₘ (I-3)
in which:
§, A", N, P, X, A2, m, n have the meaning defined in the preceding claims and {}ⁿ denotes the branched structure of the generation n chains of said dendritic polymer.

35. Method for preparing dendritic polymers according to any one of the preceding claims, comprising:
(i) reacting the corresponding dendritic polymer having a terminal function -CHO, -CH=NR, -NH₂ or -P(=G)Cl₂
with a corresponding compound having one or two functionalities -PO₃X₂ ;
(ii) optionally followed, when X represents H or M, by a step which comprises converting the dendritic polymer obtained in (i) having a -PO₃Me₂ termination into the corresponding dendritic polymer having a -A1<[A2-P(=O)(OH)₂]₂ termination,
(iii) optionally followed, when X represents M, by a step which comprises converting the dendritic polymer obtained in (ii) having a -A1<[A2-P(=O)(OH)₂]₂ termination into the salt of the corresponding dendritic polymer having a -A1<[A2-P(=O)(OM)₂]₂ termination.

36. Method for preparing dendritic polymers according to claim 35, wherein, when the dendritic polymer according to the invention is represented by formula (I-1i)
§-{{A-B-C(D)=N-N(E)-(P(=G))<}ⁿ[J-K-(Alk)ₐ-N<[A2-P(=O)(OX)₂]₂]₂}ₘ (I-1i)
in which §, A, B, C, D, E, G, N, P, J, K, A2, Alk, X, a, m, n, < have the meaning defined hereinbefore,
step (i) comprises reacting with the corresponding dendritic polymer of the same generation n of formula
§-{{A-B-C(D)=N-N(E)-(P(=G))<Y₂}ⁿ (II-1i)
wherein Y represents -Cl ;
a compound of formula H-J-K-(Alk)ₐ-N<[A2-P(=O)(OX)₂]₂ (III).

37. Method according to claim 36, wherein the reaction is carried out in solution in a polar aprotic solvent, in the presence of an organic or inorganic base, at a temperature of from -80°C to 100°C.

38. Method according to claim 35, wherein, when the dendritic polymer according to the invention is represented by formula (1-2) or (I-3):
§-{{A'-(C=O)-N(R)-B'-N<}ⁿ[A2-P(=O)(OX)₂]₂]₂}ₘ (I-2)
or
§-{{A"-N<}ⁿ[A2-P(=O)(OX)₂]₂]₂}ₘ (I-3)
in which §, A', A", B', B", C, N, P, A2, X, m, n, < have the meaning defined hereinbefore, step (i) comprises reacting with the corresponding dendritic polymer of the same generation n of formula
§-{{A'-(C=O)-N(R)-B'-NH₂}ⁿ}ₘ (II-2)
or
§-{{-A"-NH₂}ⁿ}ₘ (II-3)
a compound of formula
H-P(=O)(OX)₂ (IV),
in the presence of a corresponding compound H-A2-(C=O)H.

39. Method according to claim 38, wherein the reaction is carried out at a temperature of from -5°C to the reflux temperature of the mixture.

40. Method according to claim 35, wherein, when the dendritic polymer according to the invention is represented by formula (I-1ii)
§-{{A-B-C(D)=N-N(E)-(P(=G))<}ⁿ[J-K-C(D)=N-N(E)-(Alk)ₐ-CH<[A2-P(=O)(OX)₂]₂]₂}ₘ (I-1ii)
in which:
§, A, B, C, D, E, G, N, P, J, K, L, X, A2, m, n, a have the meaning defined hereinbefore,
step (i) comprises reacting with the corresponding dendritic polymer of formula
§-{{A-B-C(D)=N-N(E)-(P(=G))<}ⁿ-[J-K-L']₂}ₘ (II-1ii)
wherein L' represents a radical -CHO ;
a compound of formula (Alk')ₐ-CH-[A2-P(=O)(OX)₂] (VI)
wherein Alk' corresponding to Alk defined hereinbefore in formula (I-1ii) represents a radical Alkenyl, and X has the meaning defined hereinbefore, in the presence of a compound of formula
H₃C-NH-NH₂ (VII).

41. Method according to claim 40, wherein the reaction is carried out in a polar aprotic solvent medium, by addition of the compounds (VI) and (VII) to the dendritic polymer (II-1ii) at a temperature of from -80°C to 100°C.

42. Method for preparing dendritic polymers according to any one of claims 35 to 41, wherein step (ii) is carried out:
- by the action of a trimethylsilane halide,
- followed by the action of anhydrous MeOH, which is added to the reaction mixture.

43. Preparation method according to claim 42, wherein the procedure is carried out in a polar aprotic organic solvent by addition of the trimethylsilane halide while keeping the reaction mixture at a temperature of from -80°C to 50°C.

44. Method for preparing dendritic polymers according to any one of claims 35 to 43, wherein in step (iii) salts of compounds according to the invention are obtained starting from compounds according to the invention having a terminal group in which X represents a hydrogen atom.

45. Method for preparing dendritic polymers according to claim 44, wherein the procedure is carried out in solution, in a suitable polar protic or aprotic solvent, in the presence of an organic or inorganic base, depending on the salt that is desired.

46. Compounds of formula (III):
H-J-K-(Alk)ₐ-N<[A2-P(=O)(OX)₂]₂ (III)
in which
X represents a radical -Alkyl, -Aryl, H or M⁺, wherein M⁺ is a cation;
J represents an oxygen atom, a sulfur atom or a radical -NR-;
K represents a radical -Aryl-, -Heteroaryl-, -Alkyl-, each of which may optionally be substituted by a Halogen atom or by a radical -NO₂, -NRR', -CN, -CF₃, -OH, -Alkyl, -Aryl, -Aralkyl ;
the radicals A2, which may be identical or different, each independently of the other represents a single bond or a linear or branched hydrocarbon chain having from 1 to 6 chain members, it being possible for each of said chain members optionally to be selected from a heteroatom, preferably nitrogen, it being possible for each chain member to be optionally substituted by one or more substituents selected from -Alkyl, -Hal, -NO₂, -NRR', -CN, -CF₃, -OH, -OAlkyl, -Aryl, -Aralkyl;
-Alk- represents an alkyl radical;
a represents 0 or 1.

47. Method for preparing a compound of formula (III) according to claim 46, comprising the following step:
H-J-K-(Alk)ₐ-NH₂ (VIII) + H-A2'-(C=O)H (V) + H-P(=O)(OX)₂ (IV) → H-J-K-(Alk)ₐ-N<[A2-PO₃X₂]₂ (III)
wherein, in formula (V), -A2'- is a radical corresponding to A2.

48. Method according to claim 47, wherein the procedure is carried out by addition of the compounds (VIII) and (IV), and of the compound (V), at a temperature of from -5 to 25°C.

49. Use of a dendritic polymer according to any one of claims 1 to 34 for treating or being in contact with surfaces.

50. Use according to claim 49, wherein said surfaces are metal, silica-based or oxide-based.

51. Use according to claim 49 to 50, for which said dendritic polymer is used as an additive in a composition that is to be in contact with or to treat said surface.

52. Use according to any one of claims 49 to 51, according to which said dendritic polymer is used as an anti-corrosive agent, a lubricating agent, a scale preventer or as a flame retardant.
